# EUROPÄISCHE PATENTSCHRIFT

(11) **EP 3 707 811 B1**
(45) Veröffentlichungstag und Bekanntmachung des Hinweises auf die Patenterteilung: **10.03.2021**
(21) Anmeldenummer: 18826321.4
(22) Anmeldetag: 19.12.2018
(51) Int. Cl.: H02K 41/03, H02K 11/33

(54) **STATOREINHEIT UND STATORMODUL**
STATOR UNIT AND STATOR MODULE
UNITÉ DE STATOR ET MODULE DE STATOR

(30) Priorität: 27.12.2017 DE 102017131321
(43) Veröffentlichungstag der Anmeldung: 16.09.2020
(73) Patentinhaber: Beckhoff Automation GmbH, 33415 Verl (DE)
(72) Erfinder: BRINKMANN, Rolf, 32107 Bad Salzuflen (DE); BENTFELD, Lukas, 33098 Paderborn (DE); PRUESSMEIER, Uwe, 32657 Lemgo (DE)
(74) Vertreter: Patentanwaltskanzlei WILHELM & BECK
(86) Internationale Anmeldenummer: PCT/EP2018/085783
(87) Internationale Veröffentlichungsnummer: WO 2019/129564

(56) Entgegenhaltungen:
- WO-A1-2015/179962
- WO-A2-2009/083891

## Beschreibung

Die Erfindung betrifft ein Statormodul mit einer Statoreinheit zum Antreiben eines Läufers eines Planarantriebssystems.

Planarantriebssysteme können unter anderem in der Automatisierungstechnik, insbesondere der Fertigungstechnik, der Handhabungstechnik und der Verfahrenstechnik eingesetzt werden. Mittels Planarantriebssystemen kann ein bewegliches Element einer Anlage oder Maschine in mindestens zwei linear unabhängigen Richtungen bewegt oder positioniert werden. Planarantriebssysteme können einen permanenterregten elektromagnetischen Planarmotor mit einem planaren Stator und einem auf dem Stator in mindestens zwei Richtungen beweglichen Läufer umfassen.

Bei einem permanenterregten elektromagnetischen Planarmotor wird dadurch eine Antriebskraft auf den Läufer ausgeübt, dass stromdurchflossene Leiter mit Antriebsmagneten einer Magnetanordnung magnetisch wechselwirken. Die Erfindung betrifft insbesondere Ausgestaltungen von Planarantriebssystemen, bei denen die Antriebsmagneten eines elektrischen Planarmotors an dem Läufer und die stromdurchflossenen Leiter des Planarmotors in einem ortsfest angeordneten planaren Stator angeordnet sind.

Bei einem derartigen Antriebssystem umfasst der Läufer mindestens eine erste Magneteinheit für den Antrieb des Läufers in eine erste Richtung und eine zweite Magneteinheit für den Antrieb des Läufers in eine von der ersten Richtung linear unabhängige, beispielsweise in eine zu der ersten Richtung orthogonale, zweite Richtung. Der planare Stator umfasst mindestens eine Gruppe erster bestrombarer Leiter, welche mit den Magneten der ersten Magneteinheit magnetisch wechselwirken, um den Läufer in die erste Richtung anzutreiben, sowie eine Gruppe zweiter bestrombarer Leiter, welche mit den Magneten der zweiten Magneteinheit magnetisch wechselwirken, um den Läufer in die zweite Richtung anzutreiben. Die ersten und zweiten Gruppen von Leitern sind in der Regel unabhängig voneinander bestrombar, um voneinander unabhängige Bewegungen des Läufers in die erste und zweite Richtung zu ermöglichen. Sind die Leiter der ersten und zweiten Gruppe selbst zumindest in Teilen unabhängig voneinander bestrombar, können auf einem Stator zeitgleich mehrere Läufer unabhängig voneinander bewegt werden.

Der Stator derartiger Planarantriebssysteme kann insbesondere modular ausgebildet sein und mehrere nebeneinander angeordnete Statormodule umfassen. Innerhalb der Statormodule können die stromdurchflossenen Leiter des Stators in einer Statoreinheit angeordnet sein. Die für das Antreiben des Läufers benötigten Antriebsströme können von Stromerzeugungseinheiten erzeugt werden, die jeweils an den dem Läufer gegenüberliegenden Unterseiten der Statoreinheiten angeordnet sind. Die Stromerzeugungseinheiten sind dann mit den Leitern der Statoreinheit elektrisch leitend verbunden, um die von den Stromerzeugungseinheiten erzeugten Antriebsströme in die Leiter der Statoreinheit einzuspeisen.

Die Druckschriften WO 2013/059934 A1, WO 2015/017933 A1, WO 2015/179962 A1, WO 2015/184553 A1, WO 2015/188281 A1, WO 2017/004716 A1 beschreiben jeweils Planarantriebssysteme *(displacement devices),* welche einen elektromagnetischen Planarmotor mit einem permanenterregten Läufer und einem mehrere bestrombare Leiter umfassenden Stator umfassen.

Aus der WO 2015/179962 A1 ist ein Statormodul mit den Merkmalen des Oberbegriffs des Anspruch 1 bekannt. Weiterer Stand der Technik ist in der WO 2009/083891 A1 beschrieben.

Aufgabe der vorliegenden Erfindung ist es, ein Statormodul für ein Planarantriebssystem anzugeben.

Diese Aufgabe wird durch ein Statormodul gemäß dem unabhängigen Anspruch gelöst. Weiterbildungen sind in den abhängigen Ansprüchen angegeben.

Eine Statoreinheit zum Antreiben eines Läufers eines elektrischen Planarantriebssystems in einem Statormodul umfasst einen ersten Statorsektor und einen zweiten Statorsektor. Der erste Statorsektor umfasst in einer Statorlage der Statoreinheit entlang einer ersten Richtung länglich ausgedehnte und entlang einer zu der ersten Richtung senkrecht orientierten zweiten Richtung nebeneinander angeordnete Leiterstreifen zur Wechselwirkung mit Antriebsmagneten des Läufers. Der zweite Statorsektor umfasst in der Statorlage entlang der ersten Richtung länglich ausgedehnte und entlang der zweiten Richtung nebeneinander angeordnete Leiterstreifen zur Wechselwirkung mit den Antriebsmagneten des Läufers. Der erste Statorsektor ist in der ersten Richtung angrenzend an den zweiten Statorsektor angeordnet. Die Statoreinheit weist eine Kontaktstruktur auf, wobei die Kontaktstruktur eine erste Kontakteinheitengruppe und eine zweite Kontakteinheitengruppe umfasst. Die erste Kontakteinheitengruppe ist mit den Leiterstreifen des ersten Statorsektors elektrisch leitend verbunden und die zweite Kontakteinheitengruppe ist mit den Leiterstreifen des zweiten Statorsektors elektrisch leitend verbunden. Die Kontaktstruktur ist an einer Innenkante des ersten Statorsektors und an einer Innenkante des zweiten Statorsektors angeordnet, wobei die Innenkante des ersten Statorsektors und die Innenkante des zweiten Statorsektors aneinander anliegend zwischen dem ersten Statorsektor und dem zweiten Statorsektor angeordnet sind.

Indem die Kontaktstruktur an zwischen dem ersten und dem zweiten Statorsektor angeordneten Innenkanten des ersten und des zweiten Statorsektors angeordnet ist, kann die Kontaktstruktur in der zweiten Richtung im Inneren der Statoreinheit angeordnet werden. Dadurch können Außenbereiche der Statoreinheit, die an den Außenkanten der Statoreinheit und an den Außenkanten des ersten und des zweiten Statorsektors liegen, frei von Kontakteinheiten ausgebildet werden. Die Statoreinheit kann damit in den Außenbereichen besonders stabil ausgebildet werden. Insbesondere können die Statoreinheit und ein die Statoreinheit umfassendes Statormodul trittfeste Außenkanten aufweisen.

Indem die Außenbereiche der Statoreinheit frei von Kontaktstrukturen ausgebildet sind, können die Außenkanten der Statoreinheit zudem besonders glatt ausgebildet werden. Dadurch ist die Statoreinheit nahezu nahtlos an eine weitere, identisch ausgebildete Statoreinheit anreihbar. Zwischen dem ersten und dem zweiten Statorsektor kann die Kontaktstruktur außerdem besonders platzsparend angeordnet werden, so dass im Bereich der Statorsektoren besonders wenig Fläche für die Anordnung der Kontaktstrukturen verwendet werden muss. Dadurch können die Leiterstreifen in einem besonders großen Flächenanteil der Statorsektoren angeordnet werden. Dadurch werden Verzerrungen des durch die Statoreinheit erzeugten Magnetfeldes aufgrund von Randeffekten vermieden.

Bei einer Weiterbildung der Statoreinheit sind die erste Kontakteinheitengruppe und die zweite Kontakteinheitengruppe der Kontaktstruktur entlang der zweiten Richtung in einer Reihe nebeneinander angeordnet. Dadurch können die Kontakteinheiten der Kontakteinheitengruppen besonders platzsparend angeordnet werden.

Bei einer Weiterbildung der Statoreinheit ist die Kontaktstruktur auf einer zwischen dem ersten Statorsektor und dem zweiten Statorsektor entlang der zweiten Richtung verlaufenden Mittellinie der Statoreinheit angeordnet. Dadurch kann die Kontaktstruktur in der ersten Richtung besonders weit entfernt von den Außenkanten der Statoreinheit angeordnet werden und die Statoreinheit besonders stabil ausgebildet werden. Außerdem kann die Kontaktstruktur auf der Mittellinie besonders platzsparend angeordnet und ein besonders großer Anteil der Statorfläche für die Anordnung der Leiterstreifen verwendet werden.

Bei einer Weiterbildung der Statoreinheit umfasst die Statoreinheit einen dritten Statorsektor, wobei der dritte Statorsektor in der zweiten Richtung angrenzend an den ersten Statorsektor angeordnet ist. Der dritte Statorsektor umfasst in der Statorlage entlang der zweiten Richtung nebeneinander angeordnete und entlang der ersten Richtung länglich ausgedehnte Leiterstreifen zur Wechselwirkung mit den Antriebsmagneten des Läufers. Der erste Statorsektor, der zweite Statorsektor und der dritte Statorsektor umfassen in einer weiteren Statorlage entlang der ersten Richtung nebeneinander angeordnete und entlang der zweiten Richtung länglich ausgedehnte weitere Leiterstreifen zur Wechselwirkung mit weiteren Antriebsmagneten des Läufers. Die weitere Statorlage ist in einer zu der ersten Richtung und zu der zweiten Richtung senkrecht orientierten dritten Richtung unter der Statorlage angeordnet. Die Statoreinheit umfasst eine weitere Kontaktstruktur mit einer dritten Kontakteinheitengruppe und mit einer vierten Kontakteinheitengruppe, wobei die dritte Kontakteinheitengruppe mit den weiteren Leiterstreifen des ersten Statorsektors elektrisch leitend verbunden ist und wobei die vierte Kontakteinheitengruppe mit den weiteren Leiterstreifen des dritten Statorsektors elektrisch leitend verbunden ist. Die weitere Kontaktstruktur ist an einer weiteren Innenkante des ersten Statorsektors und an einer Innenkante des dritten Statorsektors angeordnet, wobei die weitere Innenkante des ersten Statorsektors und die Innenkante des dritten Statorsektors aneinander anliegend zwischen dem ersten Statorsektor und dem dritten Statorsektor angeordnet sind.

Indem sowohl die Kontaktstruktur, als auch die weitere Kontaktstruktur an zwischen den Statorsektoren gelegenen Innenkanten der Statorsektoren angeordnet sind, kann sowohl die Kontaktstruktur in der ersten Richtung, als auch die weitere Kontaktstruktur in der zweiten Richtung im Inneren der Statoreinheit angeordnet werden. Damit können sowohl die entlang der ersten Richtung verlaufenden Außenkanten der Statoreinheit, als auch die entlang der zweiten Richtung verlaufenden Außenkanten der Statoreinheit frei von Kontakteinheiten und damit besonders stabil ausgebildet werden.

Bei einer Weiterbildung der Statoreinheit weist die Statoreinheit einen vierten Statorsektor auf, wobei der vierte Statorsektor in der zweiten Richtung angrenzend an den zweiten Statorsektor und wobei der dritte Statorsektor in der ersten Richtung angrenzend an den vierten Statorsektor angeordnet ist. Der vierte Statorsektor umfasst in der Statorlage entlang der zweiten Richtung nebeneinander angeordnete und entlang der ersten Richtung länglich ausgedehnte Leiterstreifen zur Wechselwirkung mit den Antriebsmagneten des Läufers. Außerdem umfasst der vierte Statorsektor in der weiteren Statorlage entlang der ersten Richtung nebeneinander angeordnete und entlang der zweiten Richtung länglich ausgedehnte weitere Leiterstreifen zur Wechselwirkung mit den weiteren Antriebsmagneten des Läufers. Die Statoreinheit umfasst eine zusätzliche Kontaktstruktur mit einer fünften Kontakteinheitengruppe und mit einer sechsten Kontakteinheitengruppe und eine weitere zusätzliche Kontaktstruktur mit einer siebten Kontakteinheitengruppe und mit einer achten Kontakteinheitengruppe. Die fünfte Kontakteinheitengruppe ist mit den Leiterstreifen des dritten Statorsektors elektrisch leitend verbunden und die sechste Kontakteinheitengruppe ist mit den Leiterstreifen des vierten Statorsektors elektrisch leitend verbunden. Die siebte Kontakteinheitengruppe ist mit den weiteren Leiterstreifen des zweiten Statorsektors elektrisch leitend verbunden und die achte Kontakteinheitengruppe ist mit den weiteren Leiterstreifen des vierten Statorsektors elektrisch leitend verbunden. Die zusätzliche Kontaktstruktur ist an einer weiteren Innenkante des dritten Statorsektors und an einer Innenkante des vierten Statorsektors angeordnet, wobei die weitere Innenkante des dritten Statorsektors und die Innenkante des vierten Statorsektors aneinander anliegend zwischen dem dritten Statorsektor und dem vierten Statorsektor angeordnet sind. Die weitere zusätzliche Kontaktstruktur ist an einer weiteren Innenkante des zweiten Statorsektors und an einer weiteren Innenkante des vierten Statorsektors angeordnet, wobei die weitere Innenkante des zweiten Statorsektors und die weitere Innenkante des vierten Statorsektors aneinander anliegend zwischen dem zweiten Statorsektor und dem vierten Statorsektor angeordnet sind.

Dadurch sind sowohl die in der ersten Richtung ausgedehnten Leiterstreifen aller Statorsektoren, als auch die in der zweiten Richtung ausgedehnten weiteren Leiterstreifen aller Statorsektoren mit Kontaktstrukturen verbunden, die in der ersten und zweiten Richtung im Inneren der Statoreinheit angeordnet sind. Insbesondere können Außenbereiche der Statoreinheit entlang aller Außenkanten des Statormoduls frei von Kontakteinheiten ausgebildet sein. Dadurch kann das gesamte Statormodul entlang aller Außenkanten besonders stabil ausgebildet sein.

Bei einer Weiterbildung der Statoreinheit sind die Kontaktstruktur und die zusätzliche Kontaktstruktur auf einer entlang der zweiten Richtung orientierten Mittellinie der Statoreinheit angeordnet, und die weitere Kontaktstruktur und die weitere zusätzliche Kontaktstruktur sind auf einer entlang der ersten Richtung orientierten weiteren Mittellinie der Statoreinheit angeordnet. Dadurch können die Außenbereiche, in denen keine Kontakteinheiten angeordnet sind, sowohl in der ersten Richtung, als auch in der zweiten Richtung besonders groß ausgebildet werden und die Statoreinheit insgesamt besonders stabil ausgebildet werden.

Bei einer Weiterbildung der Statoreinheit weist die Statoreinheit einen an einem Kreuzungspunkt der Mittellinie und der weiteren Mittellinie angeordneten Zentrumsbereich auf, wobei die Kontakteinheitengruppen außerhalb des Zentrumsbereichs der Statoreinheit angeordnet sind. Dadurch können die Kontaktstruktur und die weitere Kontaktstruktur entlang der ersten Richtung in einem ersten Abstand voneinander um den Kreuzungspunkt herum angeordnet werden. Ebenso können die zusätzliche Kontaktstruktur und die weitere zusätzliche Kontaktstruktur entlang der zweiten Richtung in einem zweiten Abstand voneinander um den Kreuzungspunkt herum angeordnet werden. Der erste Abstand und/oder der zweite Abstand können derart bemessen sein, dass bei einem Anschließen eines Leistungsmoduls an die Kontaktstrukturen, insbesondere bei einem Verpressen des Leistungsmoduls mit den Kontaktstrukturen, ein Verkanten des Leistungsmoduls oder eine ungleichmäßige Belastung der Kontaktstrukturen verhindert wird. Außerdem führt ein Abstand dazu, dass die Kontaktstrukturen und das Leistungsmodul mit geringem Kraftaufwand verpresst werden können.

Bei einer Weiterbildung der Statoreinheit ist ein zentrumsnaher Leiterstreifen der in einer Anschlussstatorlage angeordneten Leiterstreifen des ersten Statorsektors über eine Zuleitung mit einer Kontakteinheit der ersten Kontakteinheitengruppe elektrisch leitend verbunden. Dabei ist die Zuleitung in einer zusätzlichen Statorlage der Statoreinheit angeordnet.

Weitere Leiterstreifen der Leiterstreifen des ersten Statorsektors können insbesondere auf der Anschlussstatorlage mit Kontakteinheiten der ersten Kontakteinheitengruppe verbunden sein. Indem der zentrumsnahe Leiterstreifen des ersten Statorsektors über die in der zusätzlichen Statorlage angeordnete Zuleitung mit der Kontakteinheit der ersten Kontakteinheitengruppe verbunden ist, steht auf der Anschlussstatorlage mehr Platz für den Anschluss der weiteren Leiterstreifen an die erste Kontakteinheitengruppe zur Verfügung. Dies erleichtert es, die Leiterstreifen des ersten Statorsektors an die erste Kontakteinheitengruppe anzubinden.

Ein Statormodul umfasst eine Statoreinheit zum Antreiben eines Läufers eines elektrischen Planarantriebssystems und ein Leistungsmodul. Die Statoreinheit umfasst einen ersten Statorsektor, einen zweiten Statorsektor und einen dritten Statorsektor. Der erste Statorsektor, der zweite Statorsektor und der dritte Statorsektor umfassen in einer Statorlage der Statoreinheit entlang einer ersten Richtung nebeneinander angeordnete und entlang einer zu der ersten Richtung senkrecht orientierten zweiten Richtung länglich ausgedehnte Leiterstreifen zur Wechselwirkung mit Antriebsmagneten des Läufers. Der erste Statorsektor, der zweite Statorsektor, der dritte Statorsektor umfassen außerdem in einer weiteren Statorlage entlang der zweiten Richtung nebeneinander angeordnete und entlang der ersten Richtung länglich ausgedehnte weitere Leiterstreifen zur Wechselwirkung mit weiteren Antriebsmagneten des Läufers. Der erste Statorsektor ist in der zweiten Richtung angrenzend an den zweiten Statorsektor angeordnet und der dritte Statorsektor ist in der ersten Richtung angrenzend an den ersten Statorsektor angeordnet. Die Statoreinheit weist eine Kontaktstruktur und eine weitere Kontaktstruktur auf. Die Kontaktstruktur umfasst eine erste Kontakteinheitengruppe, die mit den Leiterstreifen des ersten Statorsektors elektrisch leitend verbunden ist. Außerdem umfasst die Kontaktstruktur eine zweite Kontakteinheitengruppe, die mit den Leiterstreifen des zweiten Statorsektors elektrisch leitend verbunden ist. Die weitere Kontaktstruktur umfasst eine dritte Kontakteinheitengruppe, die mit den weiteren Leiterstreifen des ersten Statorsektors elektrisch leitend verbunden ist. Außerdem umfasst die weitere Kontaktstruktur eine vierte Kontakteinheitengruppe, die mit den weiteren Leiterstreifen des dritten Statorsektors elektrisch leitend verbunden ist. Die Kontaktstruktur ist an einer Innenkante des ersten Statorsektors und an einer Innenkante des zweiten Statorsektors angeordnet, wobei die Innenkante des ersten Statorsektors und die Innenkante des zweiten Statorsektors aneinander anliegend zwischen dem ersten Statorsektor und dem zweiten Statorsektor angeordnet sind. Die weitere Kontaktstruktur ist an einer weiteren Innenkante des ersten Statorsektors und an einer Innenkante des dritten Statorsektors angeordnet, wobei die weitere Innenkante des ersten Statorsektors und die Innenkante des dritten Statorsektors aneinander anliegend zwischen dem ersten Statorsektor und dem dritten Statorsektor angeordnet sind. Das Leistungsmodul ist an einer Unterseite der Statoreinheit angeordnet. Das Leistungsmodul ist kreuzförmig mit einem in der ersten Richtung verlaufenden ersten Balken und mit einem in der zweiten Richtung verlaufenden zweiten Balken ausgebildet. Das Leistungsmodul umfasst eine Anschlussanordnung, wobei die Anschlussanordnung mit der ersten Kontakteinheitengruppe und mit der zweiten Kontakteinheitengruppe der Kontaktstruktur der Statoreinheit elektrisch leitend verbunden ist und wobei die Anschlussanordnung auf dem zweiten Balken des Leistungsmoduls angeordnet ist. Außerdem umfasst das Leistungsmodul eine weitere Anschlussanordnung, wobei die weitere Anschlussanordnung mit der dritten Kontakteinheitengruppe und mit der vierten Kontakteinheitengruppe der weiteren Kontaktstruktur der Statoreinheit elektrisch leitend verbunden ist und wobei die weitere Anschlussanordnung auf dem ersten Balken des Leistungsmoduls angeordnet ist.

Indem das Leistungsmodul kreuzförmig ausgebildet ist, kann das Leistungsmodul einerseits direkt unmittelbar unter der zwischen dem ersten und dem zweiten Statorsektor angeordneten Kontaktstruktur und unter der zwischen dem ersten und dem dritten Statorsektor angeordneten weiteren Kontaktstruktur angeordnet werden. Andererseits kann das Leistungsmodul besonders kompakt ausgebildet werden. Insbesondere können unterhalb der Statoreinheit an den Außenkanten der Statorsektoren und der Statoreinheit Freiräume ausgebildet sein, an denen die Statoreinheit freiliegt und nicht von dem Leistungsmodul bedeckt wird. In den Freiräumen können Wärmeleitstrukturen an der Unterseite der Statoreinheit anliegen, um bei dem Antreiben des Läufers in den Leiterstreifen erzeugte Verlustwärme aufzunehmen und von der Statoreinheit abzuführen.

Bei einer Weiterbildung des Statormoduls ist die Anschlussanordnung in der ersten Richtung mittig auf dem zweiten Balken des Leistungsmoduls angeordnet und die weitere Anschlussanordnung ist in der zweiten Richtung mittig auf dem ersten Balken des Leistungsmoduls angeordnet. Dadurch können zwischen den Balken des Leistungsmoduls und den Außenkanten der Statoreinheit besonders große Freiräume ausgebildet werden, in denen die Statoreinheit an ihrer Unterseite nicht von dem Leistungsmodul überdeckt wird.

Bei einer Weiterbildung des Statormoduls umfasst das Leistungsmodul eine Moduleinheit und eine weitere Moduleinheit, wobei die Moduleinheit und die weitere Moduleinheit mechanisch getrennt voneinander ausgebildet sind. Dabei umfasst der erste Balken des Leistungsmoduls die weitere Moduleinheit und die weitere Moduleinheit umfasst die weitere Anschlussanordnung. Außerdem umfasst der zweite Balken des Leistungsmoduls die Moduleinheit und die Moduleinheit umfasst die Anschlussanordnung.

Dadurch können die Moduleinheit und die weitere Moduleinheit bei der Herstellung des Statormoduls getrennt voneinander und nacheinander mit der Statoreinheit verbunden werden. Dies ermöglicht es, das Leistungsmodul auf besonders einfache Art und Weise mit der Statoreinheit zu verbinden. Insbesondere kann vermieden werden, dass das Leistungsmodul gleichzeitig an die entlang der zweiten Richtung verlaufende Kontaktstruktur und an die entlang der ersten Richtung verlaufende weitere Kontaktstruktur angeschlossen werden muss und dabei verkantet.

Bei einer Weiterbildung des Statormoduls sind eine Leiteranordnung der Moduleinheit und eine Leiteranordnung der weiteren Moduleinheit identisch. Dadurch können für die Moduleinheit und für die weitere Moduleinheit die gleichen Bauteile, insbesondere die gleichen Trägerplatinen oder Leiterplatten, verwendet werden, so dass das Statormodul kostengünstig produziert werden kann.

Die Erfindung wird nachfolgend anhand von Ausführungsbeispielen und unter Bezugnahme auf Figuren näher erläutert. Dabei zeigen in jeweils schematischer Darstellung
- Fig. 1: ein Planarantriebssystem mit einem Statormodul und einem Läufer;
- Fig. 2: eine Ansicht eines weiteren Planarantriebssystems mit sechs nebeneinander angeordneten Statormodulen;
- Fig. 3: den Läufer des Planarantriebssystems mit einer Magnetanordnung;
- Fig. 4: eine perspektivische Ansicht des Statormoduls des Planarantriebssystems;
- Fig. 5: eine Explosionsansicht einer Statoreinheit des Statormoduls mit einer ersten, zweiten, dritten und vierten Statorlage;
- Fig. 6: die Statorlagen des ersten Statorsektors der Statoreinheit mit einzelnen Statorsegmenten;
- Fig. 7: eine Aufsicht auf die erste Statorlage des ersten Statorsektors der Statoreinheit;
- Fig. 8: eine Aufsicht auf die zweite Statorlage des ersten Statorsektors der Statoreinheit;
- Fig. 9: ein Ersatzschaltbild der ersten Statorsegmente des ersten Statorsektors;
- Fig. 10: ein Ersatzschaltbild der zweiten Statorsegmente des ersten Statorsektors;
- Fig. 11: ein Ersatzschaltbild des ersten Statorsektors;
- Fig. 12: eine Aufsicht auf die Statoreinheit des Statormoduls;
- Fig. 13: eine Aufsicht auf eine erste weitere Statoreinheit;
- Fig. 14: eine Aufsicht auf eine zweite weitere Statoreinheit;
- Fig. 15: eine Aufsicht auf eine Anschlussstatorlage der Statoreinheit;
- Fig. 16: eine perspektivische Darstellung einer Unterseite eines Leistungsmoduls des Statormoduls;
- Fig. 17: eine perspektivische Darstellung einer Unterseite der Statoreinheit des Statormoduls;
- Fig. 18: eine perspektivische Darstellung der Unterseiten des Leistungsmoduls und der Statoreinheit.

Die Erfindung betrifft im Wesentlichen Weiterentwicklungen der in den Veröffentlichungen WO 2013/059934 A1, WO 2015/017933 A1, WO 2015/179962 A1, WO 2015/184553 A1, WO 2015/188281 A1 und WO 2017/004716 A1 offenbarten Planarantriebssysteme.

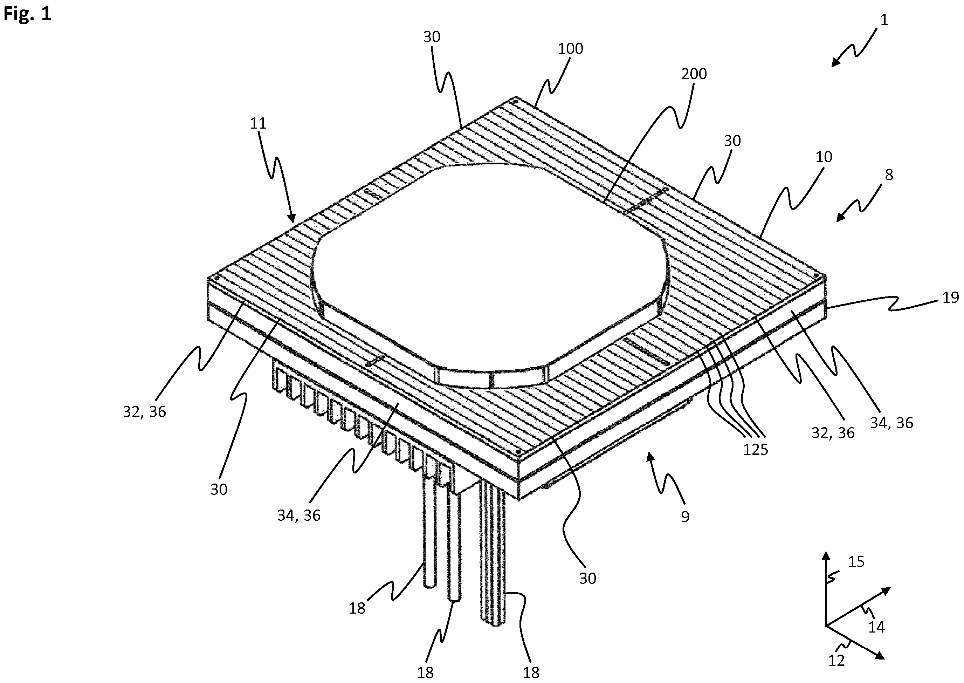

**Fig. 1** zeigt ein Planarantriebssystem 1 mit einem Statormodul 10 und einem Läufer 200. Das Statormodul 10 umfasst ein Modulgehäuse 19 und eine Statoreinheit 100. Das Statormodul 10 weist eine Oberseite 8 und eine der Oberseite 8 gegenüberliegende Unterseite 9 auf. Die Statoreinheit 100 ist in einer von der Unterseite 9 zu der Oberseite 8 orientierten vertikalen Richtung 15 oberhalb des Modulgehäuses 19 und an der Oberseite 8 des Statormoduls 10 angeordnet. Die Statoreinheit 100 ist als ein Planarstator ausgebildet und weist an der Oberseite 8 des Statormoduls 10 eine ebene, d.h. planare, Statorfläche 11 auf. Die Statorfläche 11 bildet zugleich eine Oberfläche des Statormoduls 10.

Die Statorfläche 11 ist senkrecht zu der vertikalen Richtung 15 orientiert und erstreckt sich über die gesamte Oberseite 8 der Statoreinheit 100 und des Statormoduls 10. Die Statoreinheit 100 umfasst an der Statorfläche 11 mindestens einen mit einem Antriebsstrom beaufschlagbare Leiterstreifen 125. Die Statoreinheit 100 kann, wie dargestellt, an der Statorfläche 11 eine Mehrzahl der Leiterstreifen 125 aufweisen. Die Leiterstreifen 125 können jeweils mit einem Antriebsstrom beaufschlagt werden. Mittels der Antriebsströme in den Leiterstreifen 125 kann ein Magnetfeld erzeugt werden, welches den Läufer 200 in Wechselwirkung mit in Fig. 1 nicht dargestellten Antriebsmagneten des Läufers 200 antreibt. Der Läufer 200 und die Statoreinheit 100 mit den stromdurchflossenen Leiterstreifen 125 bilden einen elektromagnetischen Planarmotor. Die Leiterstreifen 125 bilden Spulenleiter der Statoreinheit 100 und können auch als Spulenleiter bezeichnet werden.

Der Läufer 200 ist im Betrieb beweglich über der Statorfläche 11 des Statormoduls 10 angeordnet und kann im Betrieb sowohl in einer ersten Richtung 12, als auch in einer zweiten Richtung 14 angetrieben werden. Die erste 12 Richtung und die zweite Richtung 14 sind linear unabhängig. Insbesondere können die erste Richtung 12 und die zweite Richtung 14, wie in Fig. 1 dargestellt, senkrecht zueinander ausgerichtet sein. Die erste Richtung 12 und die zweite Richtung 14 sind jeweils parallel zu der Statorfläche 11 und senkrecht zu der vertikalen Richtung 15 orientiert. Indem der Läufer 200 zugleich in der ersten Richtung 12, als auch in der zweiten Richtung 14 angetrieben wird, kann der Läufer 200 über der Statorfläche 11 in einer beliebigen Richtung angetrieben werden. Der Läufer 200 kann im Betrieb schwebend über der Statorfläche 11 gehalten werden, beispielsweise durch eine magnetische Wechselwirkung zwischen den Antriebsmagneten und geeigneten Antriebsströmen in den Leiterstreifen 125. Neben einem Antreiben des Läufers 200 in der ersten und zweiten Richtung 12, 14 ist auch ein Antreiben in der dritten, vertikalen Richtung 15 möglich.

Die Statorfläche 11 ist rechteckig ausgebildet. Insbesondere kann die Statorfläche 11, wie dargestellt, quadratisch ausgebildet sein. Die Statorfläche 11 wird durch vier jeweils gerade Außenkanten 30 begrenzt. Jeweils zwei einander gegenüberliegende Außenkanten 30 sind parallel zu der ersten Richtung 12 und zwei einander gegenüberliegende weitere Außenkanten 30 sind parallel zu der zweiten Richtung 14 orientiert.

Eine Ausdehnung der Statoreinheit 100 in der vertikalen Richtung 15 ist kleiner als eine Ausdehnung der Statoreinheit 100 in der ersten und der zweiten Richtung 12, 14. Die Statoreinheit 100 bildet daher einen flachen in der ersten und zweiten Richtung 12, 14 ausgedehnten Quader oder eine in der ersten und zweiten Richtung 12, 14 ausgedehnte Platte. Zwischen der Statorfläche 11 und einer der Statorfläche 11 gegenüberliegenden Unterseite der Statoreinheit 100 weist die Statoreinheit 100 vier jeweils ebene Seitenflächen 32 auf, die an der Statorfläche 11 mit den Außenkanten 30 der Statorfläche 11 bündig abschließen. Die Seitenflächen 32 der Statoreinheit 100 sind senkrecht zu der Statorfläche 11 orientiert.

Das Modulgehäuse 19 ist wie die Statorfläche 11 und die Statoreinheit 100 in einer Aufsicht auf die Statorfläche 11 rechteckig ausgebildet. Das Modulgehäuse 19 ist insbesondere in der Aufsicht auf die Statorfläche 11 quadratisch ausgebildet. Das Modulgehäuse 19 ist als ein flacher Quader bzw. als eine Platte ausgebildet, wobei die Ausdehnung des Modulgehäuse 19 in der vertikalen Richtung 15 kleiner ist als in der ersten und zweiten Richtung 12, 14. Eine der Statoreinheit 100 zugewandte Oberseite des Modulgehäuses 19 ist an die Unterseite der Statoreinheit 100 anschließend angeordnet. In der ersten und zweiten Richtung 12, 14 weisen die Statoreinheit 100 und das Modulgehäuse 19 im Wesentlichen die gleichen Abmessungen auf.

Zwischen der der Statoreinheit 100 zugewandten Oberseite des Modulgehäuse 19 und einer der Oberseite gegenüberliegenden Unterseite des Modulgehäuse 19 weist das Modulgehäuse 19 vier jeweils ebene Seitenflächen 34 auf. Die Seitenflächen 34 des Modulgehäuses 19 können, wie dargestellt, senkrecht zu der Statorfläche 11 orientiert sein. Die Seitenflächen 34 des Modulgehäuses 19 können fluchtend mit den Seitenflächen 32 der Statoreinheit 100 ausgerichtet sein und an die Seitenflächen 32 der Statoreinheit 100 anschließen. Bei einer alternativen Ausführungsform des Statormoduls 10 können die Seitenflächen 34 des Modulgehäuses 19 auch gegenüber den Seitenflächen 32 der Statoreinheit 100 in das Innere des Statormoduls 10 zurückversetzt angeordnet sein. Bei einer weiteren alternativen Ausführungsform können die Seitenflächen 34 des Modulgehäuses 19 auch an der Oberseite des Modulgehäuses 19 an die Seitenflächen 32 der Statoreinheit 100 anschließend angeordnet sein und sich entgegen der vertikalen Richtung 15 zur Unterseite des Modulgehäuses 19 hin in Richtung des Inneren des Statormoduls 10 verjüngen.

Das Statormodul 10 ist in einer Aufsicht auf die Statorfläche 11 rechteckig ausgebildet. Das Statormodul 10 weist zwischen der an der Oberseite 8 des Statormoduls 10 angeordneten Statorfläche 11 und der der Oberseite 8 gegenüberliegenden Unterseite 9 des Statormoduls 10 vier jeweils ebene Seitenflächen 36 auf. Die Seitenflächen 36 des Statormoduls 10 werden im Bereich der Statoreinheit 100 durch die Seitenflächen 32 der Statoreinheit 100 und im Bereich des Modulgehäuses 19 durch die Seitenflächen 34 des Modulgehäuses 19 gebildet.

Die Seitenflächen 36 des Statormoduls 10 schließen damit an der Statorfläche 11 mit den Außenkanten 30 der Statorfläche 11 ab und die Außenkanten 30 der Statorfläche 11 bilden an der Statorfläche 11 zugleich Außenkanten des Statormoduls 10. Insbesondere erstreckt sich die Statorfläche 11 in der ersten Richtung 12 und in der zweiten Richtung 14 jeweils zwischen zwei der Seitenflächen 36 des Statormoduls 10 und die Außenkanten 30 begrenzen die Ausdehnung der Statorfläche 11, der Statoreinheit 100 und des Statormoduls 10 an den Seitenflächen 36 des Statormoduls 10 in der ersten Richtung 12 und in der zweiten Richtung 14.

Die Seitenflächen 36 des Statormoduls 10 können, wie dargestellt, jeweils senkrecht zu der Statorfläche 11 ausgerichtet sein. Bei alternativen Ausführungsformen des Statormoduls 10 können die Seitenflächen 36 des Statormoduls 10 im Bereich des Modulgehäuses 19 auch in Richtung des Inneren des Statormoduls 10 zurückversetzt sein oder sich von der Oberseite 8 zur Unterseite 9 hin in Richtung des Inneren des Statormoduls 10 verjüngen.

Während das Statormodul 10 an seiner durch die Statorfläche 11 gebildeten Oberfläche eben ausgebildet ist, kann das Statormodul 10 an der der Statorfläche 11 gegenüberliegenden Unterseite 9 des Statormoduls 10 nicht eben bzw. uneben ausgebildet sein. Insbesondere können an der Unterseite 9 des Statormoduls 10 oder an der Unterseite des Modulgehäuses 19 weitere Komponenten an dem Modulgehäuse 19 oder dem Statormodul 10 angeordnet sein. Diese weiteren Komponenten reichen in der ersten Richtung 12 oder in der zweiten Richtung 14 höchstens bis an die Außenkanten 30 der Statoreinheit 100, so dass die weiteren Komponenten die Außenkanten 30 der Statoreinheit 100 in der ersten oder der zweiten Richtung 12, 14 nicht überragen.

An der Unterseite des Modulgehäuses 19 sind in Fig. 1 nicht dargestellte Anschlüsse angeordnet zur Verbindung des Statormoduls 10 mit mehreren Anschlussleitungen 18. Die Anschlussleitungen 18 können beispielsweise eine Eingangsleitung eines Datennetzwerks, eine Ausgangsleitung des Datennetzwerks und eine Energieversorgungsleitung zur Versorgung des Statormoduls 10 mit elektrischer Energie umfassen. Insbesondere kann dem Statormodul 10 über die Energieversorgungsleitung elektrische Energie zur Erzeugung der Antriebsströme zugeführt werden. Über das Datennetzwerk kann das Statormodul 10 mit einer Steuereinheit des Planarantriebssystems verbunden sein und Steuerdaten zum Steuern des Läufers 200 mit der Steuereinheit austauschen.

Die Statorfläche 11 kann in der ersten Richtung 12 eine Ausdehnung zwischen 100mm und 500mm aufweisen, insbesondere zwischen 120mm und 350mm, insbesondere von 240mm. Die Statorfläche 11 kann in der zweiten Richtung 12 eine Ausdehnung zwischen 100mm und 500mm, insbesondere zwischen 120mm und 350mm, insbesondere von 240mm aufweisen. Das Statormodul 10 kann in der vertikalen Richtung 15 eine Ausdehnung zwischen 10mm und 100mm, insbesondere zwischen 15mm und 60mm, insbesondere von 30mm aufweisen. Das Modulgehäuse 19 kann in der vertikalen Richtung 15 eine Ausdehnung zwischen 8mm und 80mm, insbesondere zwischen 13mm und 55mm, insbesondere von 26,6mm aufweisen. Das Modulgehäuse 19 kann in der ersten und/oder zweiten Richtung 12, 14 die gleiche Ausdehnung aufweisen wie die Statorfläche 11.

Mehrere Exemplare des Statormoduls 10 können derart nebeneinander angeordnet werden, dass die Außenkanten 30 benachbarter Statormodule 10 aneinanderliegen und die Statorflächen 11 der Statormodule 10 eine zusammenhängende Arbeitsfläche bilden, über die der Läufer 200 unterbrechungsfrei bewegt werden kann. Da die Seitenflächen 36 des Statormoduls 10 an den Außenkanten 30 bündig mit der Statorfläche 11 abschließen, können die Statorflächen 11 von zwei nebeneinander angeordneten Statormodulen 10 nahezu nahtlos aneinander anschließend angeordnet werden, indem die Statormodule 10 mit aneinanderliegenden Seitenflächen 32 der Statoreinheiten 100 oder aneinanderliegenden Außenkanten 30 der Statorflächen 11 angeordnet werden.

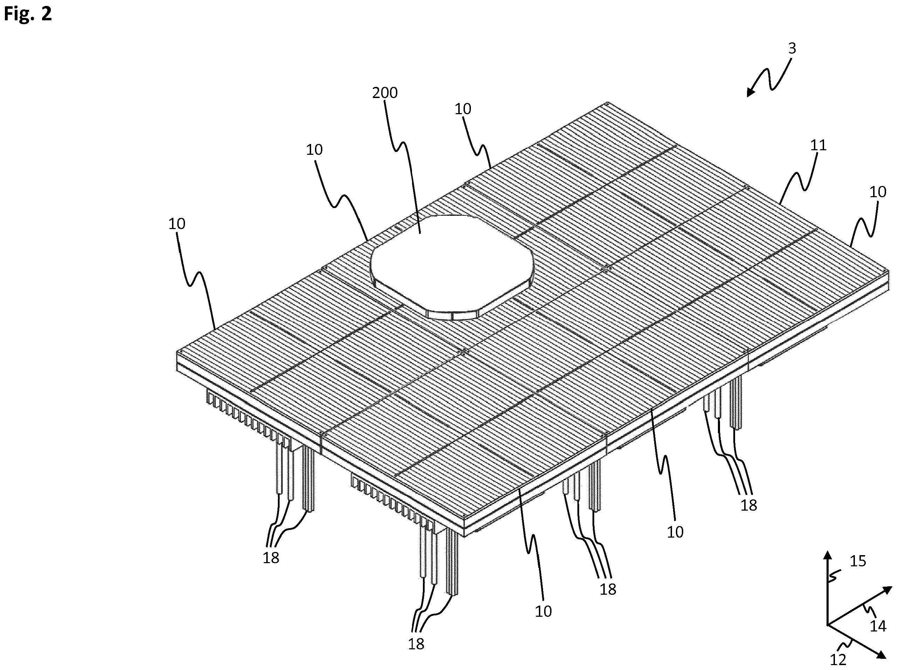

**Fig. 2** zeigt eine Ansicht eines weiteren Planarantriebssystems 3 mit sechs nebeneinander angeordneten Statormodulen 10. Die Statormodule 10 sind ausgebildet wie das in Fig. 1 dargestellte Statormodul 10. Die Statormodule 10 sind in zwei in der ersten Richtung 12 nebeneinanderliegenden und entlang der zweiten Richtung 14 ausgedehnten ersten Reihen und in drei in der zweiten Richtung 14 nebeneinanderliegenden und entlang der ersten Richtung 12 ausgedehnten zweiten Reihen oder Spalten nebeneinander angeordnet. Benachbarte Statormodule 10 sind jeweils derart aneinander anschließend angeordnet, dass die Außenkanten 30 der Statorflächen 11 benachbarter Statormodule 10 aneinanderliegen. Dadurch bilden die Statorflächen 11 der Statormodule 10 eine zusammenhängende, planare Arbeitsfläche für den Läufer 200. Der Läufer 200 kann nahtlos von der Statorfläche 11 eines der Statormodule 10 auf die oder über die Statorfläche 11 des benachbarten Statormoduls 10 bewegt werden.

Die Statormodule 10 können in der ersten und zweiten Richtung 12, 14 prinzipiell zu Planarantriebssystemen beliebiger Größe zusammengefügt werden. Jedem der Statormodule 10 können über jeweils eigene Anschlussleitungen 18 Steuersignale und/oder Energie zugeführt werden. Alternative, hier nicht dargestellte, Ausführungsformen der Statormodule 10 können auch elektrische Verbindungselemente aufweisen, mittels derer Steuersignale und/oder elektrische Energie von einem Statormodul 10 zum benachbarten Statormodul 10 übertragen werden kann. Derartige Verbindungselemente können beispielsweise an den Seitenflächen 33 der Statormodule 10 angeordnet sein. Die Verbindungselemente können als Steckverbinder oder als aneinander anordbare Kontaktflächen ausgebildet sein.

Bei alternativen Ausführungsformen des weiteren Planarantriebssystems 3 können die Statormodule 10 auch sternförmig über jeweils eigene Anschlussleitungen an eine zentrale Energieversorgungseinrichtung und/oder eine zentrale Steuereinheit angeschlossen sein.

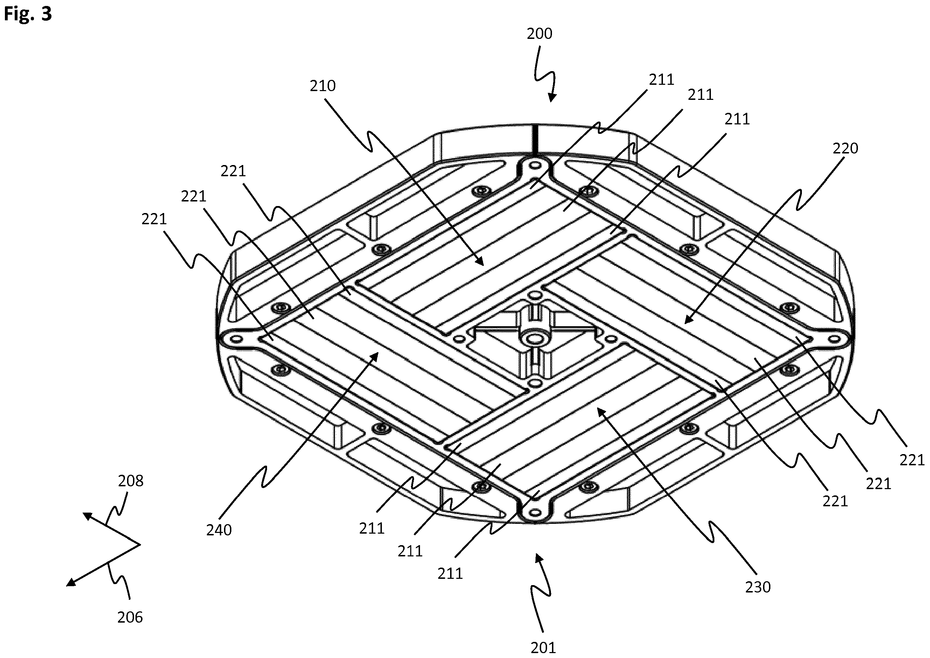

**Fig. 3** zeigt den Läufer 200 des Planarantriebssystems 1 in einer Ansicht von unten auf eine Unterseite des Läufers 200. Im Betrieb des Planarantriebssystem 1 ist die Unterseite des Läufers 200 der Statorfläche 11 des Statormoduls 10 zugewandt angeordnet. Der Läufer 200 weist an der Unterseite eine Magnetanordnung 201 auf. Die Magnetanordnung 201 ist rechteckig, insbesondere quadratisch, ausgebildet und umfasst mehrere Magneten. Die Unterseite des Läufers 200 ist, insbesondere im Bereich der Magneten der Magnetanordnung 201, eben bzw. planar ausgebildet. Im Betrieb ist die Unterseite des Läufers 200 mit der Magnetanordnung 201 im Wesentlichen parallel zu der Statorfläche 11 orientiert und der Statorfläche 11 zugewandt angeordnet.

Die Magnetanordnung 201 umfasst eine erste Magneteinheit 210, eine zweite Magneteinheit 220, eine dritte Magneteinheit 230 und eine vierte Magneteinheit 240. Die erste Magneteinheit 210 und die dritte Magneteinheit 230 weisen jeweils in einer ersten Läuferrichtung 206 länglich ausgedehnte und entlang einer zu der ersten Läuferrichtung 206 senkrecht orientierten zweiten Läuferrichtung 208 nebeneinander angeordnete Antriebsmagnete 211 auf. Insbesondere können die erste und die dritte Magneteinheit 210, 230 jeweils drei Antriebsmagnete 211 aufweisen. Die zweite Magneteinheit 220 und die vierte Magneteinheit 240 weisen jeweils in der ersten Läuferrichtung 206 nebeneinander angeordnete und entlang der zweiten Läuferrichtung 208 länglich ausgedehnte weitere Antriebsmagnete 221 auf. Die erste und dritte Magneteinheit 210, 230 dient im Betrieb einem Antreiben des Läufers 200 in der zweiten Läuferrichtung 208 und die zweite und vierte Magneteinheit 220, 240 dient im Betrieb einem Antreiben des Läufers 200 in der ersten Läuferrichtung 206. Die Antriebsmagneten 211 der ersten und dritten Magneteinheit 210, 230 und die weiteren Antriebsmagneten 221 der zweiten und vierten Magneteinheit 220, 240 sind jeweils senkrecht zu der ersten und der zweiten Läuferrichtung 206, 208 magnetisiert.

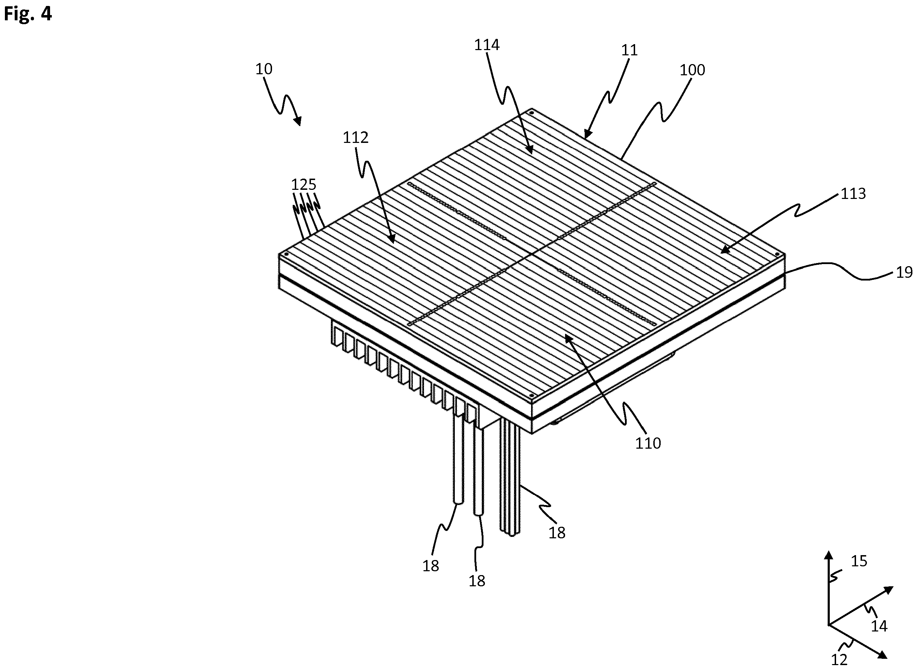

**Fig. 4** zeigt das Statormodul 10 des Planarantriebssystems 1 in einer perspektivischen Ansicht ohne den Läufer 200. Die Statoreinheit 100 des Statormoduls 10 umfasst einen ersten Statorsektor 110, einen zweiten Statorsektor 112, einen dritten Statorsektor 113 und einen vierten Statorsektor 114. Die Statorsektoren 110, 112, 113, 114 umfassen ihrerseits jeweils einen Teil der an der Statorfläche 11 der Statoreinheit 100 angeordneten Leiterstreifen 125. Jeder der Leiterstreifen 125 an der Statorfläche 11 ist vollständig in einem der Statorsektoren 110, 112, 113, 114 angeordnet. Die Statorsektoren 110, 112, 113, 114 sind rechteckig ausgebildet. Insbesondere können die Statorsektoren 110, 112, 113, 114 quadratisch ausgebildet sein, so dass eine Ausdehnung der Statorsektoren 110, 112, 113, 114 in der ersten Richtung 12 einer Ausdehnung der Statorsektoren 110, 112, 113, 114 in der zweiten Richtung 14 entspricht.

Die Statorsektoren 110, 112, 113, 114 sind in der ersten Richtung 12 in zwei nebeneinanderliegenden Reihen und in der zweiten Richtung 14 ebenfalls in zwei nebeneinanderliegenden Reihen aneinander anschließend angeordnet. Die Statorsektoren 110, 112, 113, 114 benachbarter Reihen sind ebenfalls jeweils aneinander anschließend angeordnet. In der ersten Richtung 12 umfasst die Statoreinheit 100 eine Reihe mit dem zweiten Statorsektor 112 und dem ersten Statorsektor 110 und eine weitere Reihe mit dem vierten Statorsektor 114 und dem dritten Statorsektor 113. In der zweiten Richtung 14 umfasst die Statoreinheit 100 eine Reihe mit dem ersten Statorsektor 110 und dem dritten Statorsektor 113 und eine weitere Reihe mit dem zweiten Statorsektor 112 und dem vierten Statorsektor 114.

Die Statorsektoren 110, 112, 113, 114 weisen in der ersten Richtung 12 und in der zweiten Richtung 14 jeweils eine Ausdehnung auf, die halb so groß ist wie eine Ausdehnung der Statoreinheit 100 bzw. eine Ausdehnung des Statormoduls 10 in der entsprechenden Richtung 12, 14. Die Grenzen der Statorsektoren 110, 112, 113, 114 verlaufen damit in der ersten und in der zweiten Richtung 12, 14 jeweils in der Mitte der Statoreinheit 100 und schneiden sich im Zentrum der Statoreinheit 100. Die Statorsektoren 110, 112, 113, 114 umfassen jeweils ein Viertel der Fläche, d.h. einen Quadranten, der Statoreinheit 100.

Innerhalb der Statorsektoren 110, 112, 113, 114 sind die Leiterstreifen 125 in mehreren übereinanderliegenden Statorlagen oder Statorebenen angeordnet, wobei jede der Statorlagen lediglich Leiterstreifen umfasst, die entweder im Wesentlichen entlang der ersten Richtung 12 oder im Wesentlichen entlang der zweiten Richtung 14 länglich ausgedehnt sind. Von der Ausdehnung der Leiterstreifen abgesehen und soweit im Folgenden keine Unterschiede beschrieben werden, sind die Statorsektoren 110, 112, 113, 114 auf den unterschiedlichen Statorlagen identisch ausgebildet. Bei der in Fig. 4 dargestellten Statoreinheit 100 des Statormoduls 10 umfasst die Statorlage an der Statorfläche 11 lediglich Leiterstreifen 125, welche entlang der ersten Richtung 12 länglich ausgedehnt und entlang der zweiten Richtung 14 nebeneinander und aneinander anschließend angeordnet sind.

Die in Fig. 4 sichtbare Statorlage an der Statorfläche 11 bildet eine erste Statorlage der Statoreinheit 100. In der vertikalen Richtung 15 unterhalb der ersten Statorlage umfasst die Statoreinheit 100 mindestens noch eine zweite Statorlage.

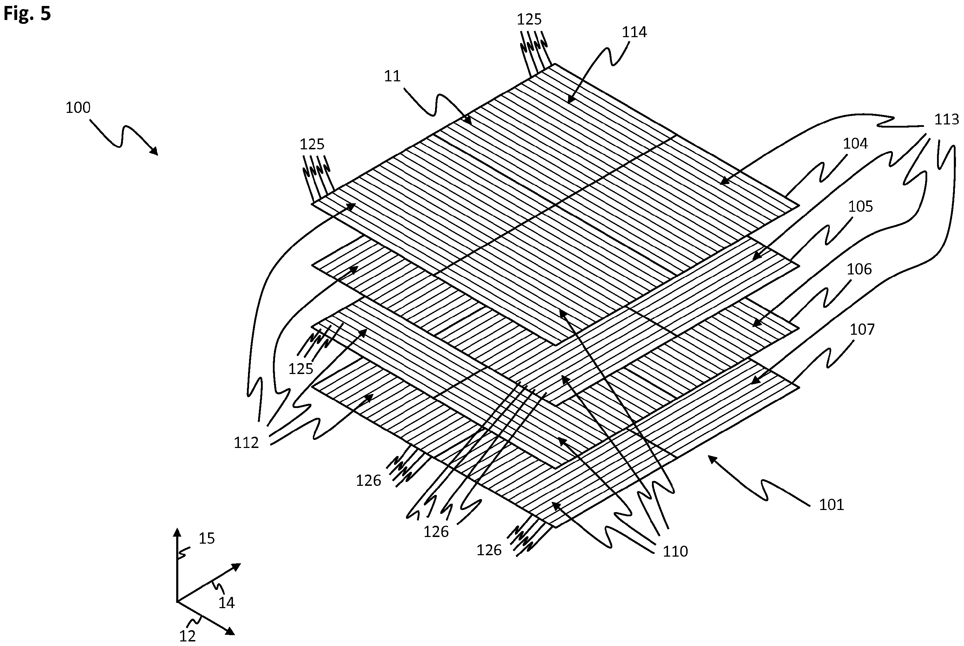

**Fig. 5** zeigt eine schematische perspektivische Darstellung einer Explosionsansicht der Statoreinheit 100 mit den einzelnen Statorlagen.

Die Statoreinheit 100 umfasst in der vertikalen Richtung 15 unter der an der Statorfläche 11 angeordneten ersten Statorlage 104 eine zweite Statorlage 105, unter der zweiten Statorlage 105 eine dritte Statorlage 106 und unter der dritten Statorlage 106 eine vierte Statorlage 107. Soweit im Folgenden keine Unterscheide beschrieben werden, sind die zweite, dritte und vierte Statorlage 105, 106, 107 ausgebildet wie die in Fig. 4 dargestellte erste Statorlage 104 an der Statorfläche 11 der Statoreinheit 100.

Die erste Statorlage 104 kann allgemein auch als eine Statorlage der Statoreinheit 100 bezeichnet werden. Die zweite Statorlage 105 kann allgemein auch als eine weitere Statorlage der Statoreinheit 100 bezeichnet werden.

Die Statorsektoren 110, 112, 113, 114 umfassen in der dritten Statorlage 106, wie in der ersten Statorlage 104, entlang der ersten Richtung 12 länglich ausgedehnte und in der zweiten Richtung 14 nebeneinander und aneinander anschließend angeordnete Leiterstreifen 125. In der zweiten Statorlage 105 und in der vierten Statorlage 107 umfassen die Statorsektoren 110, 112, 113, 114 weitere Leiterstreifen 126. Soweit im Folgenden keine Unterschiede beschrieben werden, sind die weiteren Leiterstreifen 126 ausgebildet wie die Leiterstreifen 125 in der ersten Statorlage 104 und in der dritten Statorlage 106. Anders als die Leitersteifen 125 der ersten und dritten Statorlage 104, 106, sind die weiteren Leiterstreifen 126 der zweiten und vierten Statorlage 105, 107 entlang der zweiten Richtung 14 länglich ausgedehnt und in der ersten Richtung 12 nebeneinander und aneinander anschließend angeordnet.

Die Statorsektoren 110, 112, 113, 114 umfassen in der ersten und dritten Statorlage 104, 106 ausschließlich die entlang der ersten Richtung 12 länglich ausgedehnten Leiterstreifen 125 und nicht auch noch zusätzlich die entlang der zweiten Richtung 14 länglich ausgedehnten weiteren Leiterstreifen 126. Ebenso umfassen die Statorsektoren 110, 112, 113, 114 in der zweiten und vierten Statorlage 105, 107 ausschließlich die entlang der zweiten Richtung 14 länglich ausgedehnten weiteren Leiterstreifen 126 und nicht auch noch zusätzlich die entlang der ersten Richtung 12 länglich ausgedehnten Leiterstreifen 125.

Die Statorsektoren 110, 112, 113, 114 weisen in allen Statorlagen 104, 105, 106, 107 jeweils die gleichen Abmessungen auf. Insbesondere weisen die Statorsektoren 110, 112, 113, 114 in allen Statorlagen 104, 105, 106, 107 in der ersten Richtung 12 und in der zweiten Richtung 14 jeweils gleiche Abmessungen auf.

Die Leiterstreifen 125, 126 übereinander angeordneter Statorlagen 104, 105, 106, 107 sind jeweils elektrisch isoliert voneinander ausgebildet. Beispielsweise können die Statorlagen 104, 105, 106, 107 jeweils als voneinander isolierte Leiterbahnlagen einer mehrlagigen Leiterplatte ausgebildet sein.

Die Statorsektoren 110, 112, 113, 114 sind unabhängig voneinander bestrombar ausgebildet. Insbesondere sind die Leiterstreifen 125 und die weiteren Leiterstreifen 126 der Statorsektoren 110, 112, 113, 114 auf der Statoreinheit 100 elektrisch isoliert voneinander ausgebildet. Das heißt insbesondere, dass die Leiterstreifen 125, 126 des ersten Statorsektors 110 elektrisch isoliert von den Leiterstreifen 125, 126 des zweiten Statorsektors 112, von den Leiterstreifen 125, 126 des dritten Statorsektors 113 und von den Leiterstreifen 125, 126 des vierten Statorsektors 114 ausgebildet sind. Außerdem sind die Leiterstreifen 125, 126 des zweiten Statorsektors 112 elektrisch isoliert von den Leiterstreifen 125, 126 des ersten Statorsektors 110, von den Leiterstreifen 125, 126 des dritten Statorsektors 113 und von den Leiterstreifen 125, 126 des vierten Statorsektors 114 ausgebildet. Außerdem sind die Leiterstreifen 125, 126 des dritten Statorsektors 113 elektrisch isoliert von den Leiterstreifen 125, 126 des ersten Statorsektors 110, von den Leiterstreifen 125, 126 des zweiten Statorsektors 112 und von den Leiterstreifen 125, 126 des vierten Statorsektors 114 ausgebildet. Schließlich sind die Leiterstreifen 125, 126 des vierten Statorsektors 114 elektrisch isoliert von den Leiterstreifen 125, 126 des ersten Statorsektors 110, von den Leiterstreifen 125, 126 des zweiten Statorsektors 112 und von den Leiterstreifen 125, 126 des dritten Statorsektors 113 ausgebildet.

Während die Leiterstreifen 125, 126 der einzelnen Statorsektoren 110, 112, 113, 114 auf der Statoreinheit 100 jeweils elektrisch isoliert von den Leiterstreifen 125, 126 der übrigen Statorsektoren 110, 112, 113, 114 ausgebildet sind, können die Leiterstreifen 125, 126 innerhalb der einzelnen Statorsektoren 110, 112, 113, 114 jeweils elektrisch leitend miteinander verbunden sein. Insbesondere können innerhalb der Statorsektoren 110, 112, 113, 114 jeweils übereinanderliegende Leiterstreifen 125 der ersten Statorlage 104 und der dritten Statorlage 106 elektrisch leitend miteinander verbunden sein. Beispielsweise können jeweils übereinanderliegende Leiterstreifen 125 der Statorsektoren 110, 112, 113, 114 in Reihe geschaltet sein. Ebenso können innerhalb der Statorsektoren 110, 112, 113, 114 jeweils übereinanderliegende weitere Leiterstreifen 126 der zweiten Statorlage 105 und der vierten Statorlage 107 elektrisch leitend miteinander verbunden sein. Beispielsweise können jeweils übereinanderliegende weitere Leiterstreifen 126 der Statorsektoren 110, 112, 113, 114 in Reihe geschaltet sein

Alternative Ausführungsformen der Statoreinheit 100 können zwischen der zweiten und dritten Statorlage 105, 106 in der vertikalen Richtung 15 untereinander angeordnete weitere Statorlagen umfassen. Dabei kann die Statoreinheit 100 in der vertikalen Richtung 15 jeweils abwechselnd Statorlagen mit im Wesentlichen entlang der ersten Richtung 12 länglich ausgedehnten Leiterstreifen 125 und Statorlagen mit im Wesentlichen entlang der zweiten Richtung 14 länglich ausgedehnten weiteren Leiterstreifen 126 umfassen. Außerdem können bei alternativen Ausführungsformen der Statoreinheit 100 zwischen der ersten und der zweiten Statorlage 104, 105 und/oder zwischen der dritten und der vierten Statorlage 106, 107 weitere Statorlagen mit entlang der ersten Richtung 12 ausgedehnten Leiterstreifen 125 oder mit entlang der zweiten Richtung 14 ausgedehnten weiteren Leiterstreifen 126 angeordnet sein.

Die Leiterstreifen 125, 126 der Statorsektoren 110, 112, 113, 114 sind innerhalb der Statorlagen 104, 105, 106, 107 jeweils zu Statorsegmenten zusammengefasst.

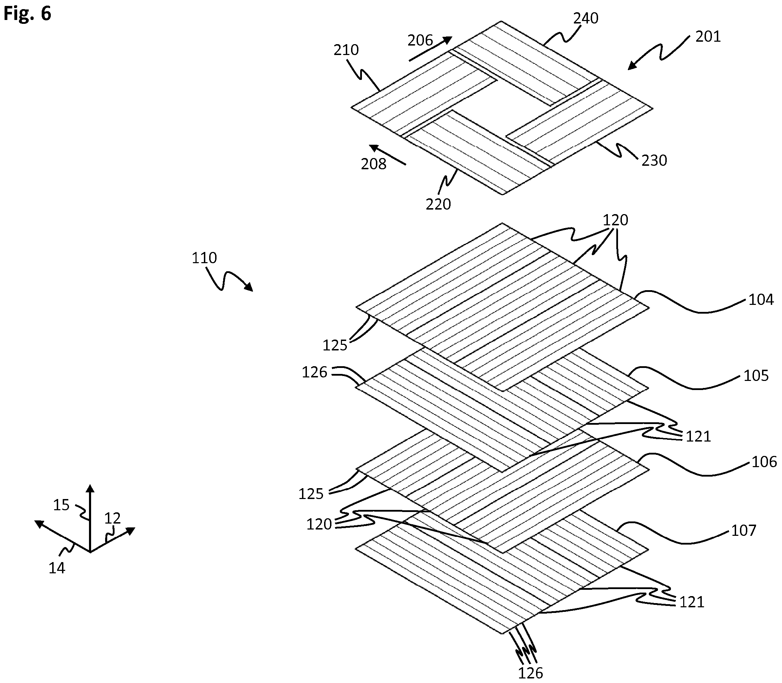

**Fig. 6** zeigt eine schematische Darstellung der Statorlagen 104, 105, 106, 107 des ersten Statorsektors 110 mit den einzelnen Statorsegmenten.

Die Leiterstreifen 125, 126 des ersten Statorsektors 110 sind innerhalb der Statorlagen 104, 105, 106, 107 jeweils zu Statorsegmenten 120, 121 zusammengefasst. Der erste Statorsektor 110 umfasst in jeder Statorlage 104, 105, 106, 107 jeweils drei nebeneinander und aneinander anschließend angeordnete Statorsegmente 120, 121. Jedes der Statorsegmente 120, 121 umfasst jeweils sechs nebeneinander angeordnete Leiterstreifen 125, 126. Der erste Statorsektor 110 umfasst in der ersten und dritten Statorlage 104, 106 jeweils drei erste Statorsegmente 120 und in der zweiten und vierten Statorlage 105, 107 jeweils drei zweite Statorsegmente 121. Die ersten Statorsegmente 120 umfassen jeweils sechs Nebeneinanderliegende der entlang der zweiten Richtung 14 nebeneinander angeordneten und entlang der ersten Richtung 12 länglich ausgedehnten Leiterstreifen 125. Die zweiten Statorsegmente 121 umfassen jeweils sechs Nebeneinanderliegende der entlang der ersten Richtung 12 nebeneinander angeordneten und entlang der zweiten Richtung 14 länglich ausgedehnten weiteren Leiterstreifen 126.

Der erste Statorsektor 110 der Statoreinheit 100 umfasst damit in der ersten Statorlage 104 und in der dritten Statorlage 106 ausschließlich Leiterstreifen 125, die entlang der ersten Richtung 12 länglich ausgedehnt sind, und in der zweiten Statorlage 105 und in der vierten Statorlage 107 ausschließlich weitere Leiterstreifen 126, die entlang der zweiten Richtung 14 länglich ausgedehnt sind.

Die ersten und zweiten Statorsegmente 120, 121 weisen, abgesehen von ihrer Orientierung, identische Abmessungen auf. Insbesondere entsprechen die Abmessungen der ersten Statorsegmente 120 in der ersten Richtung 12 den Abmessungen der zweiten Statorsegmente 121 in der zweiten Richtung 14 und die Abmessungen der ersten Statorsegmente 120 in der zweiten Richtung 14 entsprechen den Abmessungen der zweiten Statorsegmente 121 in der ersten Richtung 12.

Die Statorsegmente 120, 121 sind derart übereinanderliegend angeordnet, dass sich jeweils jedes der ersten Statorsegmente 120 der ersten und dritten Statorlage 104, 106 des ersten Statorsektors 110 in der ersten Richtung 12 über die drei in der ersten Richtung 12 nebeneinander angeordneten zweiten Statorsegmente 121 der zweiten und vierten Statorlage 105, 107 des ersten Statorsektors 110 erstreckt. Außerdem erstrecken sich die zweiten Statorsegmente 121 der zweiten und vierten Statorlage 105, 107 des ersten Statorsektors 110 in der zweiten Richtung 14 über alle in der zweiten Richtung 14 nebeneinander angeordneten ersten Statorsegmente 120 der ersten und dritten Statorlage 104, 106 des ersten Statorsektors 110.

Die Anordnung der Leiterstreifen 125, 126 in den Statorlagen 104, 105, 106, 107 des zweiten Statorsektors 112, des dritten Statorsektors 113 und des vierten Statorsektors 114 entspricht der in Fig. 6 dargestellten Anordnung der Leiterstreifen 125, 126 in den Statorlagen 104, 105, 106, 107 des ersten Statorsektors 110.

Im Betrieb des Planarantriebssystems 1 kann der Läufer 200 derart über der Statoreinheit 100 ausgerichtet sein, dass die erste Läuferrichtung 206 entlang der ersten Richtung 12 und die zweite Läuferrichtung 208 entlang der zweiten Richtung 14 orientiert ist. Die erste Magneteinheit 210 und die dritte Magneteinheit 230 können im Betrieb mit dem durch die Leiterstreifen 125 der ersten Statorsegmente 120 erzeugten Magnetfeld wechselwirken, um den Läufer 200 entlang der zweiten Richtung 14 anzutreiben. Die zweite Magneteinheit 220 und die vierte Magneteinheit 240 können im Betrieb mit dem durch die weiteren Leiterstreifen 126 der zweiten Statorsegmente 121 erzeugten Magnetfeld wechselwirken, um den Läufer 200 entlang der ersten Richtung 12 anzutreiben.

Alternativ kann der Läufer 200, anders als in Fig. 6 dargestellt, auch derart ausgerichtet sein, dass die erste Läuferrichtung 206 entlang der zweiten Richtung 14 und die zweite Läuferrichtung 208 entlang der ersten Richtung 12 orientiert ist. In diesem Fall wirken die erste und die dritte Magneteinheit 210, 230 mit dem Magnetfeld der zweiten Statorsegmente 121 zum Antreiben des Läufers 200 in die erste Richtung 12 und die zweite und die vierte Magneteinheit 220, 240 mit dem Magnetfeld der ersten Statorsegmente 120 zum Antreiben des Läufers 200 in die zweite Richtung 14 zusammen.

Die Leiterstreifen 125, 126 der einzelnen Statorsegmente 120, 121 sind jeweils unabhängig von den Leiterstreifen 125, 126 der übrigen Statorsegmente 120, 121 mit den Antriebsströmen bestrombar. Insbesondere hängen die Antriebsströme in einem der Statorsegmente 120, 121 nicht zwingend von Antriebsströmen in einem anderen der Statorsegmente 120, 121 ab. Außerdem können die Leiterstreifen 125, 126 eines der Statorsegmente 120, 121 mit Antriebsströmen beaufschlagt werden, während die Leiterstreifen 125, 126 eines anderen, beispielsweise eines benachbarten, Statorsegments 120, 121 stromlos sind. Die Leiterstreifen 125, 126 der einzelnen Statorsegmente 120, 121 sind auf der Statoreinheit 100 elektrisch isoliert von den Leiterstreifen 125, 126 der übrigen Statorsegmente 120, 121 ausgeführt. Die Leiterstreifen 125, 126 unterschiedlicher Statorsegmente 120, 121 können beispielsweise aus jeweils separaten Leistungsmodulen oder aus separaten Stromerzeugungseinheiten bzw. Endstufen eines Leistungsmoduls des Statormoduls 10 mit den Antriebsströmen beaufschlagt werden.

Die Leiterstreifen 125, 126 in den einzelnen Statorsektoren 110, 112, 113, 114 können jeweils zu Mehrphasensystemen mit einem gemeinsamen Sternpunkt zusammengeschaltet sein. Der Sternpunkt kann auf der Statoreinheit 100 ausgebildet sein. Insbesondere können die Leiterstreifen 125, 126 zu Dreiphasensystemen mit einem gemeinsamen Sternpunkt zusammengeschaltet sein. Die Dreiphasensysteme können jeweils sechs benachbarte Leiterstreifen 125 oder sechs benachbarte weitere Leiterstreifen 126 umfassen. Die Anzahl benachbarter Leiterstreifen 125, 126 in einem der Dreiphasensysteme kann auch jeweils drei, zwölf oder ein anderes Vielfaches von drei betragen.

Die Mehrphasensysteme können auf der Statoreinheit 100 derart kontaktierbar sein, dass jedes der Mehrphasensysteme unabhängig von den übrigen Mehrphasensystemen mit einem Antriebsstrom beaufschlagbar ist. Alternativ können auch jeweils zwei oder mehr der Mehrphasensysteme auf der Statoreinheit 100 derart miteinander verbunden sein, dass die verbundenen Mehrphasensysteme jeweils zusammen mit einem gemeinsamen Antriebsstrom beaufschlagt werden. Beispielsweise können die verbundenen Mehrphasensysteme auf der Statoreinheit 100 seriell oder parallel geschaltet sein.

Bei einer Verschaltung der Leiterstreifen 125, 126 zu Mehrphasensystemen werden zur Bestromung der Leiterstreifen 125, 126 weniger Kontakte benötigt als bei einer separaten Bestromung der einzelnen Leiterstreifen 125, 126. Dadurch wird der für die Bestromung der Leiterstreifen 125, 126 benötigte Hardwareaufwand, insbesondere die Anzahl der für die Bestromung benötigten Stromerzeugungseinheiten, reduziert.

Die Statorsektoren 110, 112, 113, 114 können, wie in den Fig. 4 und 5 dargestellt, in jeder Statorlage 104, 105, 106, 107 jeweils achtzehn Leiterstreifen 125, 126 umfassen. Jeweils sechs benachbarte Leiterstreifen 125, 126 können zu einem Dreiphasensystem verschaltet sein und die Statorsektoren 110, 112, 113, 114 können jeweils drei in der ersten Richtung 12 nebeneinanderliegende Dreiphasensysteme und jeweils drei in der zweiten Richtung 14 nebeneinanderliegende Dreiphasensysteme umfassen. Dabei können Leiterstreifen 125, 126, die im Wesentlichen in der gleichen Richtung 12, 14 ausgedehnt sind und in den Statorlagen 104, 105, 106, 107 übereinanderliegen, in Serie zu einem gemeinsamen Dreiphasensystem verschaltet sein. Die Leiterstreifen 125, 126 können dabei derart verschaltet sein, dass in der vertikalen Richtung 15 übereinanderliegende Leiterstreifen 125, 126 jeweils mit dem gleichen Antriebsstrom beaufschlagt werden. Die Dreiphasensysteme weisen damit drei Phasen auf, die aus in den Statorlagen 104, 105, 106, 107 übereinanderliegenden Leiterstreifen 125, 126 zusammengeschaltet sind.

Beispielsweise können in den einzelnen Statorlagen 104, 105, 106, 107 jeweils alle übereinanderliegenden und parallel ausgerichteten Leiterstreifen 125, 126 in Serie geschaltet sein. Insbesondere können die Leiterstreifen 125 von in der ersten Statorlage 104 und in der dritten Statorlage 106 übereinanderliegenden Dreiphasensystemen, sowie die weiteren Leiterstreifen 126 von in der zweiten Statorlage 105 und in der vierten Statorlage 107 übereinanderliegenden Dreiphasensystemen jeweils seriell zu einem gemeinsamen Dreiphasensystem verschaltet sein. Dabei können jeweils alle in der vertikalen Richtung 15 übereinanderliegenden und parallel orientierten Leiterstreifen 125, 126 der ersten und dritten Statorlage 104, 106 und der zweiten und vierten Statorlage 105, 107 in Serie geschaltet sein.

Insbesondere sind bei der Statoreinheit 100 innerhalb der einzelnen Statorsegmente 120 die entlang der ersten Richtung 12 länglich ausgedehnten Leiterstreifen 125 jeweils zu Mehrphasensystemen mit einem gemeinsamen Sternpunkt verschaltet. Dabei sind die einzelnen Mehrphasensysteme verschiedener Statorsegmente 120 jeweils unabhängig voneinander bestrombar. Ebenso sind alle weiteren Leiterstreifen 126 der einzelnen weiteren Statorsegmente 121 jeweils zu weiteren Mehrphasensystemen verschaltet. Die einzelnen weiteren Mehrphasensysteme der weiteren Statorsegmente 121 sind jeweils unabhängig voneinander und unabhängig von den Mehrphasensystemen der Statorsegmente 120 bestrombar. Insbesondere sind die Leiterstreifen 125 der Statorsegmente 120 und die weiteren Leiterstreifen 126 der weiteren Statorsegmente 121 jeweils zu Dreiphasensystemen verschaltet. Die Leiterstreifen 125 und die weiteren Leiterstreifen 126 können jeweils mit einem dreiphasigen Antriebsstrom beaufschlagt werden. Die Antriebsströme umfassen eine erste Phase U, eine zweite Phase V und eine dritte Phase W, die untereinander jeweils einen Phasenversatz von 120° aufweisen.

Die Leiterstreifen 125 sind räumlich in der zweiten Richtung 14 um jeweils ein Drittel der wirksamen Wellenlänge der mit den Leiterstreifen 125 wechselwirkenden Antriebsmagnete 211 der ersten und dritten Magneteinheit 210, 230 versetzt angeordnet. Die weiteren Leiterstreifen 126 sind räumlich in der ersten Richtung 12 um jeweils ein Drittel der wirksamen weiteren Wellenlänge der mit den weiteren Leiterstreifen 126 wechselwirkenden weiteren Antriebsmagnete 221 der zweiten und vierten Magneteinheit 220, 240 versetzt angeordnet.

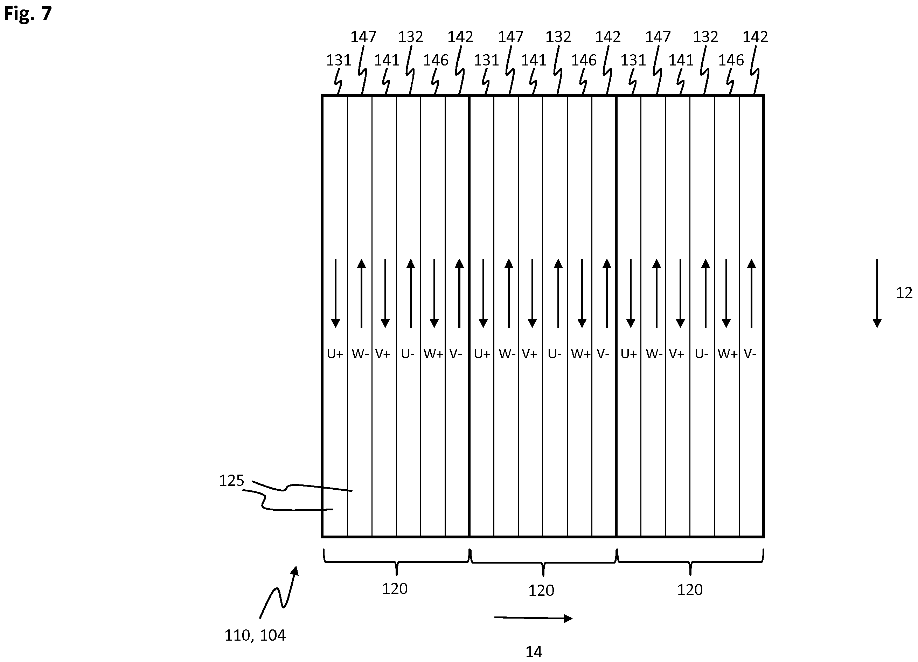

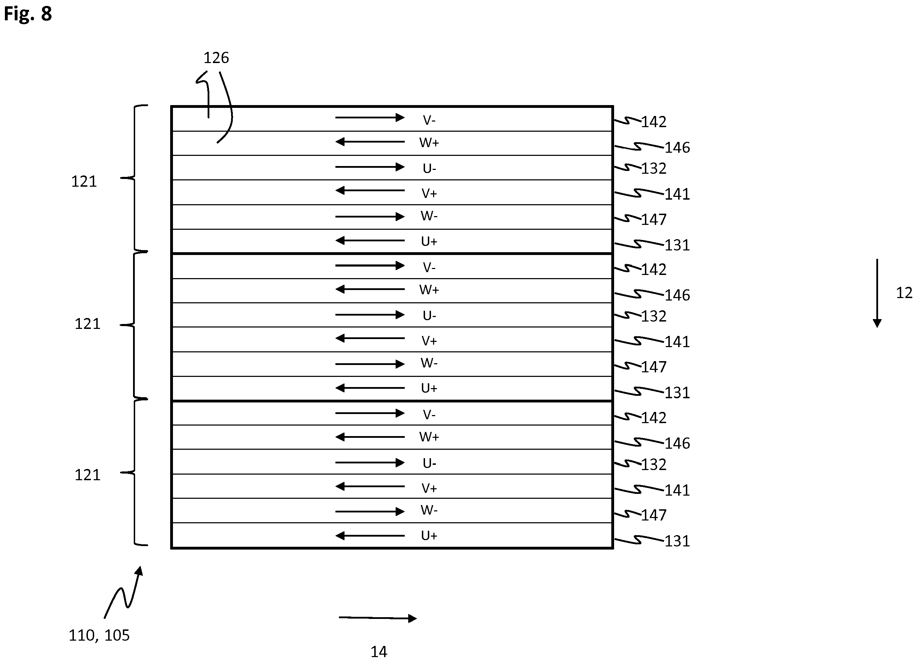

**Fig. 7** zeigt eine Aufsicht auf die erste Statorlage 104 des ersten Statorsektors 110. **Fig. 8** zeigt eine Aufsicht auf die zweite Statorlage 105 des ersten Statorsektors 110. In Fig. 7 und in Fig. 8 ist die Verteilung der Phasen U, V, W auf die Leiterstreifen 125, 126 der ersten und zweiten Statorsegmente 120, 121 des ersten Statorsektors 110 dargestellt. Die Statorsegmente 120, 121 weisen jeweils einen ersten Hinleiter 131 und einen ersten Rückleiter 132 für die ersten Phasen U der Antriebsströme, einen zweiten Hinleiter 141 und einen zweiten Rückleiter 142 für die zweiten Phasen V der Antriebsströme und einen dritten Hinleiter 146 und einen dritten Rückleiter 147 für die dritten Phasen W der Antriebsströme auf. Nachdem die einzelnen Statorsegmente 120, 121 jeweils unabhängig voneinander bestrombar sind, können die Antriebsströme, mit denen die einzelnen Statorsegmente 120, 121 beaufschlagt werden, verschieden sein. Insbesondere können jeweils die einzelnen ersten Phasen U, mit denen die verschiedenen Statorsegmente 120, 121 beaufschlagt werden, verschieden sein. Außerdem können jeweils die einzelnen zweiten Phasen V, mit denen die verschiedenen Statorsegmente 120, 121 beaufschlagt werden, und die einzelnen dritten Phasen W, mit denen die verschiedenen Statorsegmente 120, 121 beaufschlagt werden, verschieden sein.

Die Hinleiter 131, 141, 146 und die Rückleiter 132, 142, 147 der einzelnen Statorsegmente 120, 121 sind jeweils entlang einer Breitenrichtung der Statorsegmente 120, 121 nebeneinander angeordnet. Bei den in Fig. 7 dargestellten ersten Statorsegmenten 120 entspricht die Breitenrichtung der zweiten Richtung 14. Bei den in Fig. 8 dargestellten zweiten Statorsegmenten 121 verläuft die Breitenrichtung parallel und entgegen der ersten Richtung 12.

Der erste Hinleiter 131 ist jeweils an einer ersten Längsseite der Statorsegmente 120, 121 angeordnet. Bei den ersten Statorsegmenten 120 ist die erste Längsseite entlang der ersten Richtung 12 und bei den zweiten Statorsegmenten 121 entlang der zweiten Richtung 14 orientiert. Dem ersten Hinleiter 131 nachfolgend sind bei den Statorsegmenten 120, 121 in der Breitenrichtung der Reihe nach der dritte Rückleiter 147, der zweite Hinleiter 141, der erste Rückleiter 132, der dritte Hinleiter 146 und der zweite Rückleiter 142 nebeneinander und aneinander anschließend angeordnet.

Die erste Phase U wird bei den Statorsegmenten 120, 121 auf dem ersten Hinleiter 131 von einer ersten Seite der Statorsegmente 120, 121 zu einer der ersten Seite gegenüberliegenden zweiten Seite der Statorsegmente 120, 121 und auf dem ersten Rückleiter 132 von der zweiten Seite zu der ersten Seite geleitet. Die zweite Phase V wird auf dem zweiten Hinleiter 141 von der ersten Seite der Statorsegmente 120, 121 zu der zweiten Seite der Statorsegmente 120, 121 und auf dem zweiten Rückleiter 142 von der zweiten Seite zu der ersten Seite geleitet. Die dritte Phase W wird auf dem dritten Hinleiter 146 von der ersten Seite der Statorsegmente 120, 121 zu der zweiten Seite der Statorsegmente 120 und auf dem dritten Rückleiter 147 von der zweiten Seite zu der ersten Seite geleitet.

Die Phasen U, V und W werden damit jeweils an der ersten Seite der Statorsegmente 120, 121 auf die Hinleiter 131, 141, 146 und auf der zweiten Seite der Statorsegmente 120, 121 auf die Rückleiter 132, 142, 147 eingespeist. Außerdem werden die Phasen U, V und W jeweils an der zweiten Seite der Statorsegmente 120, 121 aus den Hinleitern 131, 141, 146 und auf der ersten Seite der Statorsegmente 120, 121 aus den Rückleitern 132, 142, 147 ausgekoppelt.

Bei den ersten Statorsegmenten 120 sind die erste und die zweite Seite jeweils parallel zu der zweiten Richtung 14 ausgerichtet. Bei den zweiten Statorsegmenten 121 sind die erste und die zweite Seite jeweils parallel zu der ersten Richtung 12 ausgerichtet.

Die ersten Hin- und Rückleiter 131, 132 von auf mehreren Statorlagen 104, 106 übereinanderliegenden ersten Statorsegmenten 120 können jeweils seriell verschaltet sein. Insbesondere können der in der ersten Statorlage 104 angeordnete erste Hinleiter 131 und der in der ersten Statorlage 104 angeordnete erste Rückleiter 132 mit dem in der dritten Statorlage 106 angeordneten ersten Hinleiter 131 und dem in der dritten Statorlage 106 angeordneten ersten Rückleiter 132 seriell verschaltet sein. Analog können die zweiten Hin- und Rückleiter 141, 142 und die dritten Hin- und Rückleiter 146, 147 von auf mehreren Statorlagen 104, 106 übereinanderliegenden ersten Statorsegmenten 120 jeweils seriell verschaltet sein.

Insbesondere können die Phasen U, V, W jeweils auf der ersten oder der dritten Statorlage 104, 106, in die Hinleiter 131, 141, 146 eines der ersten Statorsegmente 120 eingekoppelt werden, anschließend jeweils alle der betreffenden Phase U, V, W zugeordneten Hin- und Rückleiter 131, 141, 146, 132, 142, 147 auf allen Statorlagen 104, 106, des betreffenden ersten Statorsegments 120 durchlaufen und schließlich in einem Sternpunkt zusammengeführt werden. Analog zu den ersten Statorsegmenten 120 können auch jeweils die ersten Hin- und Rückleiter 131, 132, die zweiten Hin- und Rückleiter 141, 142 und die dritten Hin- und Rückleiter 146, 147 von auf mehreren Statorlagen 105, 107 übereinanderliegenden zweiten Statorsegmenten 121 seriell verschaltet und in einem Sternpunkt zusammengeführt sein.

Wenn die übereinanderliegenden Hinleiter 131, 141, 146 und/oder die übereinanderliegenden Rückleiter 132, 142, 147 und/oder alle einer Phase U, V, W zugeordneten Hin- und Rückleiter 131, 132, 141, 142, 146, 147 der einzelnen Statorsegmente 120, 121 jeweils seriell, d.h. in Reihe, verschaltet werden und/oder die Hin- und Rückleiter 131, 132, 141, 142, 146, 147 der einzelnen Statorsegmente 120, 121 jeweils zu Dreiphasensystemen zusammengeschaltet werden, kann die Anzahl der für die einzelnen Statorsektoren 120, 121 benötigten Anschlusspunkte 154, 155, 156 besonders klein gehalten werden. Insbesondere kann die Statoreinheit 100 pro Statorsegment 120, 121 jeweils drei Anschlusspunkte 154, 155, 156 aufweisen.

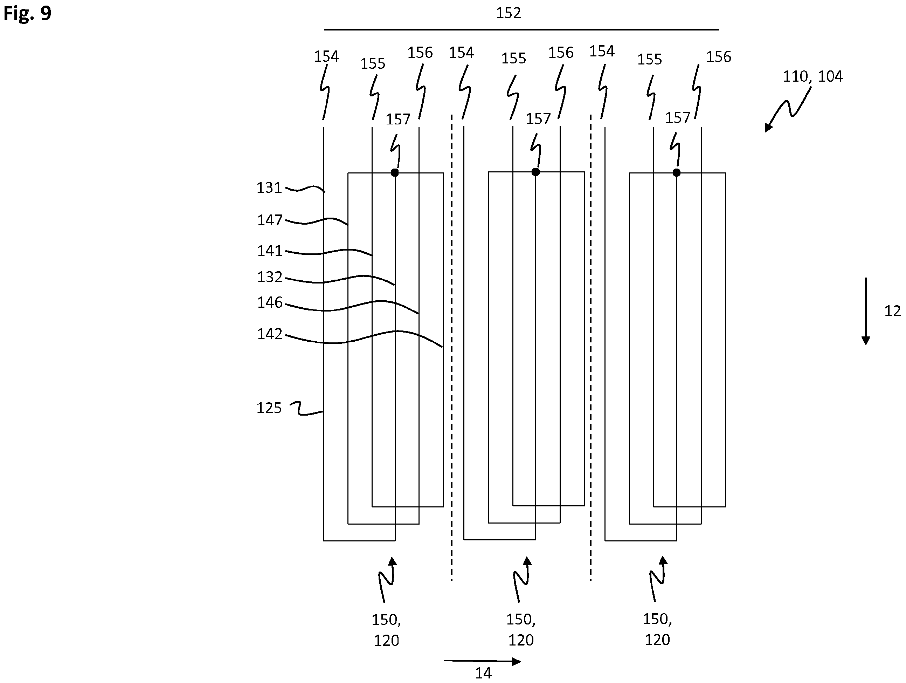

**Fig. 9** zeigt ein Ersatzschaltbild der ersten Statorsegmente 120 des ersten Statorsektors 110. Bei dem in Fig. 9 dargestellten Ersatzschaltbild sind alle übereinanderliegenden und in Serie geschalteten Leiterstreifen 125 der ersten Statorsegmente 120 als ein einziger Leiter dargestellt. Insbesondere umfasst der dargestellte erste Hinleiter 131 alle in verschiedenen Statorlagen 104, 106 übereinanderliegenden und in Serie geschalteten Hinleiter 131 der ersten Statorsegmente 120 und der dargestellte erste Rückleiter 132 umfasst alle in verschiedenen Statorlagen 104, 106 übereinanderliegenden und in Serie geschalteten ersten Rückleiter 132 der ersten Statorsegmente 120. Analog umfassen die dargestellten zweiten Hinleiter 141, zweiten Rückleiter 142, dritten Hinleiter 146 und dritten Rückleiter 147 jeweils alle in verschiedenen Statorlagen 104, 106 übereinanderliegenden und in Serie geschalteten zweiten Hinleiter 141, zweiten Rückleiter 142, dritten Hinleiter 146 bzw. dritten Rückleiter 147 der ersten Statorsegmente 120.

Die Leiterstreifen 125 der einzelnen ersten Statorsegmente 110 sind jeweils zu ersten Dreiphasensystemen 150 verschaltet. An einer entlang der zweiten Richtung 14 orientierten ersten Seite 152 der einzelnen ersten Statorsegmente 120 sind jeweils ein erster Anschlusspunkt 154 für das Einspeisen der ersten Phasen U, ein zweiter Anschlusspunkt 155 für das Einspeisen der zweiten Phasen V und ein dritter Anschlusspunkt 156 für das Einspeisen der dritten Phasen W angeordnet. Der erste Anschlusspunkt 154 ist mit einem in einer der Statorlagen 104, 106 angeordneten ersten Hinleiter 131 verbunden. Der zweite Anschlusspunkt 155 ist mit einem in einer der Statorlagen 104, 106 angeordneten zweiten Hinleiter 141 verbunden. Der dritte Anschlusspunkt 156 ist mit einem in einer der Statorlagen 104, 106 angeordneten dritten Hinleiter 146 verbunden. Außerdem ist an der ersten Seite 152 der einzelnen ersten Statorsegmente 120 jeweils ein Sternpunkt 157 angeordnet. In den Sternpunkten 157 sind jeweils ein erster Rückleiter 132 einer der Statorlagen 104, 106, ein zweiter Rückleiter 142 einer der Statorlagen 104, 106 und ein dritter Rückleiter 147 einer der Statorlagen 104, 106 miteinander verbunden.

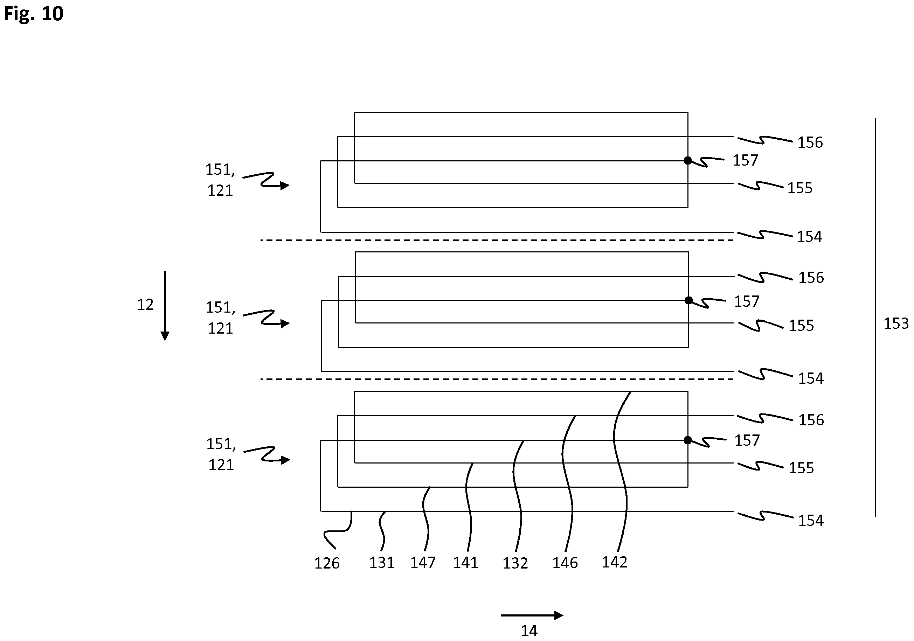

**Fig. 10** zeigt ein Ersatzschaltbild der zweiten Statorsegmente 121 des ersten Statorsektors 110. Bei dem in Fig. 10 dargestellten Ersatzschaltbild sind, wie bei dem in Fig. 9 dargestellten Ersatzschaltbild der ersten Statorsegmente 120, alle übereinanderliegenden und in Serie geschalteten weiteren Leiterstreifen 126 der zweiten Statorsegmente 121 als ein einziger Leiter dargestellt.

Die weiteren Leiterstreifen 126 der zweiten Statorsegmente 121 sind jeweils auf die gleiche Weise wie die Leiterstreifen 125 der ersten Statorsegmente 120 zu zweiten Dreiphasensystemen 151 verschaltet. An einer entlang der ersten Richtung 12 orientierten ersten Seite 153 der zweiten Statorsegmente 121 sind jeweils ein erster Anschlusspunkt 154 für das Einspeisen der ersten Phasen U, ein zweiter Anschlusspunkt 155 für das Einspeisen der zweiten Phasen V und ein dritter Anschlusspunkt 156 für das Einspeisen der dritten Phasen W angeordnet. Der erste Anschlusspunkt 154 ist mit einem in einer der Statorlagen 105, 107 angeordneten ersten Hinleiter 131 verbunden. Der zweite Anschlusspunkt 155 ist mit einem in einer der Statorlagen 105, 107 angeordneten zweiten Hinleiter 141 verbunden. Der dritte Anschlusspunkt 156 ist mit einem in einer der Statorlagen 105, 107 angeordneten dritten Hinleiter 146 verbunden. Außerdem ist an der ersten Seite 153 der einzelnen zweiten Statorsegmente 121 jeweils ein Sternpunkt 157 angeordnet. In den Sternpunkten 157 sind jeweils ein erster Rückleiter 132 einer der Statorlagen 105, 107, ein zweiter Rückleiter 142 einer der Statorlagen 105, 107 und ein dritter Rückleiter 147 einer der Statorlagen 105, 107 miteinander verbunden.

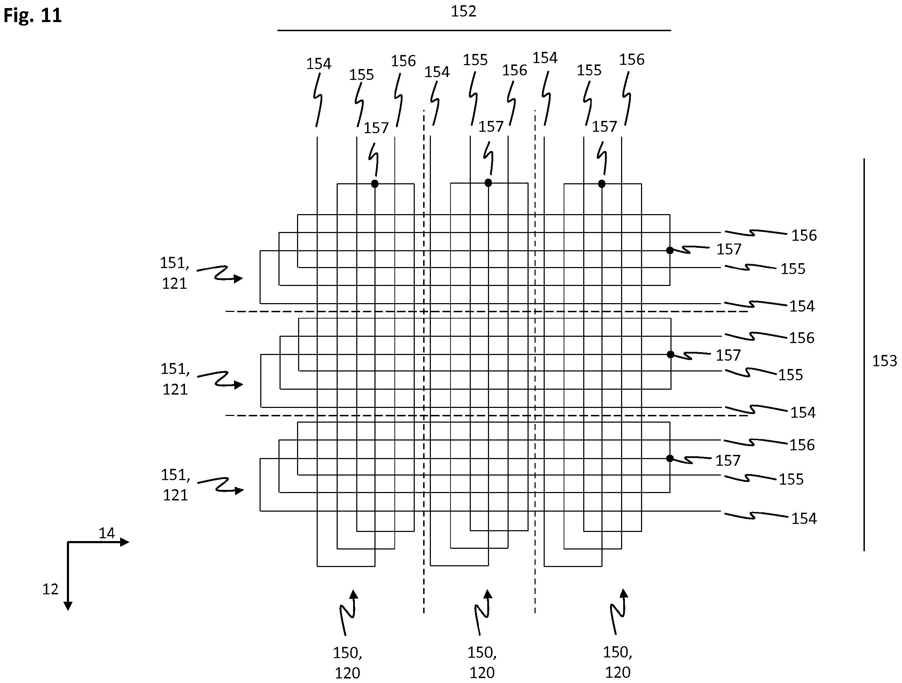

**Fig. 11** zeigt ein Ersatzschaltbild des ersten Statorsektors 110 mit den zu Fig. 9 beschriebenen und die ersten Statorsegmente 120 repräsentierenden ersten Dreiphasensystemen 150 und den zu Fig. 10 beschriebenen und die zweiten Statorsegmente 121 repräsentierenden zweiten Dreiphasensystemen 151. Die ersten Dreiphasensysteme 150 und die zweiten Dreiphasensysteme 151 sind um 90° gegeneinander verdreht angeordnet. Insbesondere sind die erste Seite 152 der ersten Statorsegmente 120 und die erste Seite 153 der zweiten Statorsegmente 121 senkrecht zueinander angeordnet.

Soweit im Folgenden keine Unterschiede beschrieben werden, entsprechen die Ersatzschaltbilder des zweiten Statorsektors 112, des dritten Statorsektors 113 und des vierten Statorsektors 114 jeweils dem in Fig. 11 dargestellten Ersatzschaltbild des ersten Statorsektors 110. Insbesondere entspricht das Ersatzschaltbild des zweiten Statorsektors 112 dem an der ersten Seite 152 der ersten Statorsegmente 120 gespiegelten Ersatzschaltbild des ersten Statorsektors 110, das Ersatzschaltbild des dritten Statorsektors 113 entspricht dem an der ersten Seite 153 der zweiten Statorsegmente 121 gespiegelten Ersatzschaltbild des ersten Statorsektors 110 und das Ersatzschaltbild des vierten Statorsektors 114 entspricht dem um 180° gedrehten Ersatzschaltbild des ersten Statorsektors 110.

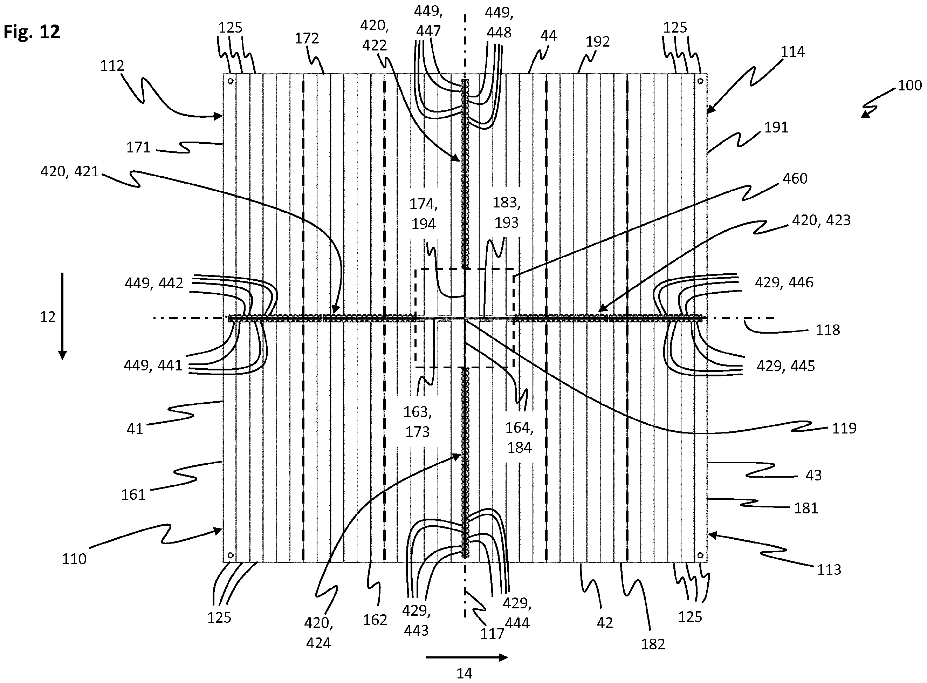

**Fig. 12** zeigt eine Aufsicht auf das Statormodul 10 mit der Statoreinheit 100 und den Statorsektoren 110, 112, 113, 114. Der erste Statorsektor 110 weist eine entlang der ersten Richtung 12 orientierte erste Außenkante 161 und eine entlang der zweiten Richtung 14 orientierte zweite Außenkante 162 auf. Der zweite Statorsektor 112 weist eine entlang der ersten Richtung 12 orientierte erste Außenkante 171 und eine entlang der zweiten Richtung 14 orientierte zweite Außenkante 172 auf. Der dritte Statorsektor 113 weist eine entlang der ersten Richtung 12 orientierte erste Außenkante 181 und eine entlang der zweiten Richtung 14 orientierte zweite Außenkante 182 auf. Der vierte Statorsektor 114 weist eine entlang der ersten Richtung 12 orientierte erste Außenkante 191 und eine entlang der zweiten Richtung 14 orientierte zweite Außenkante 192 auf.

Der erste Statorsektor 110 weist eine entlang der zweiten Richtung 14 orientierte erste Innenkante 163, die der zweiten Außenkante 162 des ersten Statorsektors 110 gegenüberliegend angeordnet ist, und eine entlang der ersten Richtung 12 orientierte zweite Innenkante 164, die der ersten Außenkante 161 des ersten Statorsektors 110 gegenüberliegend angeordnet ist, auf. Der zweite Statorsektor 112 weist eine entlang der zweiten Richtung 14 orientierte erste Innenkante 173, die der zweiten Außenkante 172 des zweiten Statorsektors 112 gegenüberliegend angeordnet ist, und eine entlang der ersten Richtung 12 orientierte zweite Innenkante 174, die der ersten Außenkante 171 des zweiten Statorsektors 112 gegenüberliegend angeordnet ist, auf.

Der dritte Statorsektor 113 weist eine entlang der zweiten Richtung 14 orientierte erste Innenkante 183, die der zweiten Außenkante 182 des dritten Statorsektors 113 gegenüberliegend angeordnet ist, und eine entlang der ersten Richtung 12 orientierte zweite Innenkante 184, die der ersten Außenkante 181 des dritten Statorsektors 113 gegenüberliegend angeordnet ist, auf. Der vierte Statorsektor 114 weist eine entlang der zweiten Richtung 14 orientierte erste Innenkante 193, die der zweiten Außenkante 192 des vierten Statorsektors 114 gegenüberliegend angeordnet ist, und eine entlang der ersten Richtung 12 orientierte zweite Innenkante 194, die der ersten Außenkante 191 des vierten Statorsektors 114 gegenüberliegend angeordnet ist, auf.

Die Statorsektoren 110, 112, 113, 114 schließen an den Außenseiten bündig mit dem Statormodul 10 und der Statorfläche 11 ab. Insbesondere sind die entlang der ersten Richtung 12 orientierte erste Außenkante 161 des ersten Statorsektors 110 und die entlang der ersten Richtung 12 orientierte erste Außenkante 171 des zweiten Statorsektors 112 abschließend mit einer entlang der ersten Richtung 12 orientierten ersten Außenkante 41 der Statorfläche 11 angeordnet. Die entlang der zweiten Richtung 14 orientierte zweite Außenkante 162 des ersten Statorsektors 110 und die entlang der zweiten Richtung 14 orientierte zweite Außenkante 182 des dritten Statorsektors 113 sind abschließend mit einer entlang der zweiten Richtung 14 orientierten zweiten Außenkante 42 der Statorfläche 11 angeordnet. Die entlang der ersten Richtung 12 orientierte erste Außenkante 181 des dritten Statorsektors 113 und die entlang der ersten Richtung 12 orientierte erste Außenkante 191 des vierten Statorsektors 114 sind abschließend mit einer entlang der ersten Richtung 12 orientierten und der ersten Außenkante 41 der Statorfläche 11 gegenüberliegenden dritten Außenkante 43 der Statorfläche 11 angeordnet. Die entlang der zweiten Richtung 14 orientierte zweite Außenkante 172 des zweiten Statorsektors 112 und die entlang der zweiten Richtung 14 orientierte zweite Außenkante 192 des vierten Statorsektors 114 sind abschließend mit einer entlang der zweiten Richtung 14 orientierten und der zweiten Außenkante 42 der Statorfläche 11 gegenüberliegenden vierten Außenkante 44 der Statorfläche 11 angeordnet.

Im Inneren der Statoreinheit 100 sind die Statorsektoren 110, 112, 113, 114 aneinander anschließend angeordnet. Die entlang der zweiten Richtung 14 orientierte erste Innenkante 163 des ersten Statorsektors 110 ist an der entlang der zweiten Richtung 14 orientierten ersten Innenkante 173 des zweiten Statorsektors 112 angeordnet. Die entlang der ersten Richtung 12 orientierte zweite Innenkante 174 des zweiten Statorsektors 112 ist an der entlang der ersten Richtung 12 orientierten zweiten Innenkante 194 des vierten Statorsektors 114 angeordnet. Die entlang der zweiten Richtung 14 orientierte erste Innenkante 183 des dritten Statorsektors 113 ist an der entlang der zweiten Richtung 14 orientierten ersten Innenkante 193 des vierten Statorsektors 114 angeordnet. Die entlang der ersten Richtung 12 orientierte zweite Innenkante 184 des dritten Statorsektors 113 ist an der entlang der ersten Richtung 12 orientierten zweiten Innenkante 164 des ersten Statorsektors 110 angeordnet.

Bei dem Statormodul 10 liegen die zweiten Innenkanten 164, 174, 184, 194 der Statorsektoren 110, 112, 113, 114 jeweils auf einer entlang der ersten Richtung 12 orientierten ersten Linie und die ersten Innenkanten 163, 173, 183, 193 liegen auf einer entlang der zweiten Richtung 14 orientierten zweiten Linie. Die ersten Innenkanten 163, 173 des ersten und zweiten Statorsektors 110, 112 sind fluchtend mit den ersten Innenkanten 183, 193 des dritten und vierten Statorsektors 113, 114 auf der zweiten Linie angeordnet. Die zweiten Innenkanten 164, 184 des ersten und dritten Statorsektors 110, 113 sind fluchtend mit den zweiten Innenkanten 174, 194 des zweiten und vierten Statorsektors 112, 114 auf der ersten Linie angeordnet.

Die erste Linie verläuft senkrecht zu der zweiten Linie. Die erste Linie ist in der zweiten Richtung 14 in der Mitte des Statormoduls 10 und der Statoreinheit 100 zwischen dem ersten Statorsektor 110 und dem dritten Statorsektor 113, sowie zwischen dem zweiten Statorsektor 112 und dem vierten Statorsektor 114 angeordnet. Insbesondere ist die erste Linie mittig zwischen der ersten und der dritten Außenkante 41, 43 der Statorfläche 11, der Statoreinheit 100 und des Statormoduls 10 angeordnet. Die erste Linie bildet eine entlang der ersten Richtung 12 orientierte erste Mittellinie 117 der Statorfläche 11, der Statoreinheit 100 und des Statormoduls 10. Die zweite Linie ist in der ersten Richtung 12 in der Mitte des Statormoduls 10 und der Statoreinheit 100 zwischen dem ersten Statorsektor 110 und dem zweiten Statorsektor 112, sowie zwischen dem dritten Statorsektor 113 und dem vierten Statorsektor 114 angeordnet. Insbesondere ist die zweite Linie mittig zwischen der zweiten und der vierten Außenkante 42, 44 der Statorfläche 11, der Statoreinheit 100 und des Statormoduls 10 angeordnet. Die zweite Linie bildet eine entlang der zweiten Richtung 14 orientierte zweite Mittellinie 118 der Statorfläche 11, der Statoreinheit 100 und des Statormoduls 10.

Die zweite Mittellinie 118 kann allgemein auch als Mittellinie der Statoreinheit 100 und die erste Mittellinie 117 kann allgemein auch als weitere Mittellinie der Statoreinheit 100 bezeichnet werden.

Die Statoreinheit 100 weist eine erste Kontaktstruktur 421, eine zweite Kontaktstruktur 422, eine dritte Kontaktstruktur 423 und eine vierte Kontaktstruktur 424 auf.

Die erste Kontaktstruktur 421 kann allgemein auch als eine Kontaktstruktur der Statoreinheit 100 bezeichnet werden. Die vierte Kontaktstruktur 424 kann allgemein auch als eine weitere Kontaktstruktur der Statoreinheit 100 bezeichnet werden. Die dritte Kontaktstruktur 423 kann allgemein auch als eine zusätzliche Kontaktstruktur der Statoreinheit 100 bezeichnet werden. Die zweite Kontaktstruktur 422 kann allgemein auch als eine weitere zusätzliche Kontaktstruktur der Statoreinheit 100 bezeichnet werden.

Die erste Kontaktstruktur 421 ist an einer durch die erste Innenkante 163 des ersten Statorsektors 110 gebildeten Innenkante des ersten Statorsektors 110 und an einer durch die erste Innenkante 173 des zweiten Statorsektors 112 gebildeten Innenkante des zweiten Statorsektors 112 angeordnet. Die vierte Kontaktstruktur 424 ist an einer durch die zweite Innenkante 164 des ersten Statorsektors 110 gebildeten weiteren Innenkante des ersten Statorsektors 110 und an einer durch die zweite Innenkante 184 des dritten Statorsektors 113 gebildeten Innenkante des dritten Statorsektors 113 angeordnet. Die dritte Kontaktstruktur 423 ist an einer durch die erste Innenkante 183 des dritten Statorsektors 113 gebildeten weiteren Innenkante des dritten Statorsektors 113 und an einer durch die erste Innenkante 193 des vierten Statorsektors 114 gebildeten Innenkante des vierten Statorsektors 114 angeordnet. Die zweite Kontaktstruktur 422 ist an einer durch die zweite Innenkante 174 des zweiten Statorsektors 112 gebildeten weiteren Innenkante des zweiten Statorsektors 112 und an einer durch die zweite Innenkante 194 des vierten Statorsektors 114 gebildeten weiteren Innenkante des vierten Statorsektors 114 angeordnet.

Die erste Kontaktstruktur 421, die zweite Kontaktstruktur 422, die dritte Kontaktstruktur 423 und die vierte Kontaktstruktur 424 umfassen jeweils mehrere Kontakteinheiten 449. Die Kontakteinheiten 449 sind mit den Leiterstreifen 125, 126 der Statoreinheit 100 elektrisch leitend verbunden und dazu ausgebildet, die Antriebsströme in die Leiterstreifen 125, 126 einzuspeisen. Sind die Leiterstreifen 125, 126 der Statorsektoren 110, 112, 113, 114 jeweils zu Dreiphasensystemen verschaltet, so sind die Kontakteinheiten 449 insbesondere dazu ausgebildet, die Antriebsströme in die Mehrphasensysteme der Statorsegmente 120, 121 einzuspeisen. Die Statoreinheit 100 weist dann für jeden Anschlusspunkt 154, 155, 156 der Dreiphasensysteme jeweils mindestens eine, insbesondere zwei, Kontakteinheiten 449 auf.

Die erste Kontaktstruktur 421 umfasst eine erste Kontakteinheitengruppe 441 und eine zweite Kontakteinheitengruppe 442. Die erste Kontakteinheitengruppe 441 ist mit den entlang der ersten Richtung 12 länglich ausgedehnten Leiterstreifen 125 des ersten Statorsektors 110 elektrisch leitend verbunden und umfasst alle Kontakteinheiten 449, die mit den entlang der ersten Richtung 12 länglich ausgedehnten Leiterstreifen 125 des ersten Statorsektors 110 elektrisch leitend verbunden sind. Die zweite Kontakteinheitengruppe 442 ist mit den entlang der ersten Richtung 12 länglich ausgedehnten Leiterstreifen 125 des zweiten Statorsektors 112 elektrisch leitend verbunden und umfasst alle Kontakteinheiten 449, die mit den entlang der ersten Richtung 12 länglich ausgedehnten Leiterstreifen 125 des zweiten Statorsektors 112 elektrisch leitend verbunden sind. Insbesondere umfasst die erste Kontaktstruktur 421 alle Kontakteinheiten 449, die mit den Leiterstreifen 125 elektrisch leitend verbunden sind, die in dem ersten und zweiten Statorsektor 110, 112 in der ersten und dritten Statorlage 104, 106 angeordnet sind.

Die vierte Kontaktstruktur 424 umfasst eine dritte Kontakteinheitengruppe 443 und eine vierte Kontakteinheitengruppe 444. Die dritte Kontakteinheitengruppe 443 ist mit den entlang der zweiten Richtung 14 länglich ausgedehnten weiteren Leiterstreifen 126 des ersten Statorsektors 110 elektrisch leitend verbunden und umfasst alle Kontakteinheiten 449, die mit den entlang der zweiten Richtung 14 länglich ausgedehnten weiteren Leiterstreifen 126 des ersten Statorsektors 110 elektrisch leitend verbunden sind. Die vierte Kontakteinheitengruppe 444 ist mit den entlang der zweiten Richtung 14 länglich ausgedehnten weiteren Leiterstreifen 126 des dritten Statorsektors 113 elektrisch leitend verbunden und umfasst alle Kontakteinheiten 449, die mit den entlang der zweiten Richtung 14 länglich ausgedehnten weiteren Leiterstreifen 126 des dritten Statorsektors 113 elektrisch leitend verbunden sind. Insbesondere umfasst die vierte Kontaktstruktur 424 alle Kontakteinheiten 449, die mit den weiteren Leiterstreifen 126 elektrisch leitend verbunden sind, die in dem ersten und dritten Statorsektor 110, 113 in der zweiten und vierten Statorlage 105, 107 angeordnet sind.

Die dritte Kontaktstruktur 423 umfasst eine fünfte Kontakteinheitengruppe 445 und eine sechste Kontakteinheitengruppe 446. Die fünfte Kontakteinheitengruppe 445 ist mit den entlang der ersten Richtung 12 länglich ausgedehnten Leiterstreifen 125 des dritten Statorsektors 113 elektrisch leitend verbunden und umfasst alle Kontakteinheiten 449, die mit den entlang der ersten Richtung 12 länglich ausgedehnten Leiterstreifen 125 des dritten Statorsektors 113 elektrisch leitend verbunden sind. Die sechste Kontakteinheitengruppe 446 ist mit den entlang der ersten Richtung 12 länglich ausgedehnten Leiterstreifen 125 des vierten Statorsektors 114 elektrisch leitend verbunden und umfasst alle Kontakteinheiten 449, die mit den entlang der ersten Richtung 12 länglich ausgedehnten Leiterstreifen 125 des vierten Statorsektors 114 elektrisch leitend verbunden sind. Insbesondere umfasst die dritte Kontaktstruktur 423 alle Kontakteinheiten 449, die mit Leiterstreifen 125 elektrisch leitend verbunden sind, die in dem dritten und vierten Statorsektor 113, 114 in der ersten und dritten Statorlage 104, 106 angeordnet sind.

Die zweite Kontaktstruktur 422 umfasst eine siebte Kontakteinheitengruppe 447 und eine achte Kontakteinheitengruppe 448. Die siebte Kontakteinheitengruppe 447 ist mit den entlang der zweiten Richtung 14 länglich ausgedehnten weiteren Leiterstreifen 126 des zweiten Statorsektors 112 elektrisch leitend verbunden und umfasst alle Kontakteinheiten 449, die mit den entlang der zweiten Richtung 14 länglich ausgedehnten weiteren Leiterstreifen 126 des zweiten Statorsektors 112 elektrisch leitend verbunden sind. Die achte Kontakteinheitengruppe 448 ist mit den entlang der zweiten Richtung 14 länglich ausgedehnten weiteren Leiterstreifen 126 des vierten Statorsektors 114 elektrisch leitend verbunden und umfasst alle Kontakteinheiten 449, die mit den entlang der zweiten Richtung 14 länglich ausgedehnten weiteren Leiterstreifen 126 des vierten Statorsektors 114 elektrisch leitend verbunden sind. Insbesondere umfasst die zweite Kontaktstruktur 422 alle Kontakteinheiten 449, die mit den weiteren Leiterstreifen 126 elektrisch leitend verbunden sind, die in dem zweiten und vierten Statorsektor 112, 114 in der zweiten und vierten Statorlage 105, 107 angeordnet sind.

Damit sind die Kontakteinheiten 449 aller weiterer Leiterstreifen 126, die entlang der zweiten Richtung 14 länglich ausgedehnt sind, an der entlang der ersten Richtung 12 orientierten ersten Linie, insbesondere an der ersten Mittellinie 117, angeordnet. Die Kontakteinheiten 449 aller Leiterstreifen 125, die entlang der ersten Richtung 12 länglich ausgedehnt sind, sind an der entlang der zweiten Richtung 14 orientierten zweiten Linie, insbesondere an der zweiten Mittellinie 118, angeordnet.

Sind die Leiterstreifen 125, 126 des ersten Statorsektors 110 gemäß Fig. 11 zu Dreiphasensystemen zusammengeschaltet, so zeigt ein Vergleich der Darstellungen des ersten Statorsektors 110 in Fig. 12 und Fig. 11, dass die entlang der ersten Seite 152 der ersten Statorsegmente 120 angeordneten Anschlusspunkte 154, 155, 156 der ersten Statorsegmente 120 des ersten Statorsektors 110 an der ersten Innenkante 163 des ersten Statorsektors 110 angeordnet sind. Außerdem sind die entlang der ersten Seite 153 der zweiten Statorsegmente 121 angeordneten Anschlusspunkte 154, 155, 156 der zweiten Statorsegmente 121 des ersten Statorsektors 110 an der zweiten Innenkante 164 des ersten Statorsektors 110 angeordnet. Die Sternpunkte 157 der ersten Statorsegmente 120 des ersten Statorsektors 110 sind an der ersten Innenkante 163 des ersten Statorsektors 110 und die Sternpunkte 157 der zweiten Statorsegmente 121 des ersten Statorsektors 110 sind an der zweiten Innenkante 164 des ersten Statorsektors 110 angeordnet.

Sind die Leiterstreifen 125, 126 des zweiten Statorsektors 112 analog zu dem ersten Statorsektor 110 zu Dreiphasensystemen zusammengeschaltet, so ist das Ersatzschaltbild des zweiten Statorsektors 112 gegenüber dem in Fig. 11 dargestellten Ersatzschaltbild des ersten Statorsektors 110 an der ersten Seite 152 der ersten Statorsegmente 120 gespiegelt. Die erste Seite 152 der ersten Statorsegmente 120 des zweiten Statorsektors 112 ist dann entlang der ersten Innenkante 173 des zweiten Statorsektors 112 angeordnet. Außerdem ist die erste Seite 153 der zweiten Statorsegmente 121 des zweiten Statorsektors 112 entlang der zweiten Innenkante 174 des zweiten Statorsektors 112 angeordnet. Die Sternpunkte 157 der ersten Statorsegmente 120 des zweiten Statorsektors 112 sind an der ersten Innenkante 173 des zweiten Statorsektors 112 und die Sternpunkte 157 der zweiten Statorsegmente 121 des zweiten Statorsektors 112 sind an der zweiten Innenkante 174 des zweiten Statorsektors 112 angeordnet.

Sind die Leiterstreifen 125, 126 des dritten Statorsektors 113 analog zu dem ersten Statorsektor 110 zu Dreiphasensystemen zusammengeschaltet, so ist das Ersatzschaltbild des dritten Statorsektors 113 gegenüber dem in Fig. 11 dargestellten Ersatzschaltbild des ersten Statorsektors 110 an der ersten Seite 153 der zweiten Statorsegmente 121 gespiegelt. Die erste Seite 152 der ersten Statorsegmente 120 des dritten Statorsektors 113 ist entlang der ersten Innenkante 183 des dritten Statorsektors 113 angeordnet. Außerdem ist die erste Seite 153 der zweiten Statorsegmente 121 des dritten Statorsektors 113 entlang der zweiten Innenkante 184 des dritten Statorsektors 113 angeordnet. Die Sternpunkte 157 der ersten Statorsegmente 120 des dritten Statorsektors 113 sind an der ersten Innenkante 183 des dritten Statorsektors 113 und die Sternpunkte 157 der zweiten Statorsegmente 121 des dritten Statorsektors 113 sind an der zweiten Innenkante 184 des dritten Statorsektors 113 angeordnet.

Sind die Leiterstreifen 125, 126 des vierten Statorsektors 114 analog zu dem ersten Statorsektor 110 zu Dreiphasensystemen zusammengeschaltet, so ist das Ersatzschaltbild des vierten Statorsektors 114 gegenüber dem in den Fig. 11 dargestellten Ersatzschaltbild des ersten Statorsektors 110 um 180° gedreht. Die erste Seite 152 der ersten Statorsegmente 120 des vierten Statorsektors 114 ist entlang der ersten Innenkante 193 des vierten Statorsektors 114 angeordnet. Außerdem ist die erste Seite 153 der zweiten Statorsegmente 121 des vierten Statorsektors 114 entlang der zweiten Innenkante 194 des vierten Statorsektors 114 angeordnet. Die Sternpunkte 157 der ersten Statorsegmente 120 des vierten Statorsektors 114 sind an der ersten Innenkante 193 des vierten Statorsektors 114 und die Sternpunkte 157 der zweiten Statorsegmente 121 des vierten Statorsektors 114 sind an der zweiten Innenkante 194 des vierten Statorsektors 114 angeordnet.

Insgesamt liegen damit die Anschlusspunkte 154, 155, 156 der ersten Statorsegmente 120 des ersten, zweiten, dritten und vierten Statorsektors 110, 112, 113, 114 auf der zweiten Mittellinie 118. Die Anschlusspunkte 154, 155, 156 der zweiten Statorsegmente 121 des ersten, zweiten, dritten und vierten Statorsektors 110, 112, 113, 114 liegen allesamt auf der ersten Mittellinie 117. Bei einer Verschaltung der Leiterstreifen 125, 126 zu Dreiphasensystemen mit gemeinsamen Sternpunkt können die drei freien Anschlüsse der einzelnen Phasen jeweils mit mindestens einer der, insbesondere mit zweien, der Kontakteinheiten 449 der Kontakteinheitengruppen 441, 442, 443, 444, 445, 446, 447, 448 elektrisch leitend verbunden sein. Umfassen die Statorsektoren 110, 112, 113, 114 jeweils drei in der zweiten Richtung 14 nebeneinander angeordnete Dreiphasensysteme mit jeweils sechs Leiterstreifen 125 und drei in der ersten Richtung 12 nebeneinander angeordnete Dreiphasensysteme mit jeweils sechs weiteren Leiterstreifen 126, so weisen die Statorsektoren 110, 112, 113, 114 jeweils achtzehn Anschlüsse auf, die mit jeweils mindestens achtzehn, insbesondere mit sechsunddreißig, Kontakteinheiten 449 der Kontaktstrukturen 421, 422, 423, 444 verbunden sein können. Die erste, zweite, dritte und vierte Kontaktstruktur 421, 422, 423, 424 umfassen dann jeweils mindestens achtzehn, insbesondere sechsunddreißig, Kontakteinheiten 449.

Anstatt die Leiterstreifen 125, 126 der einzelnen Statorsektoren 110, 112, 113, 114 jeweils zu Mehrphasensystemen zu verschalten, können bei nicht dargestellten, alternativen Ausführungsformen der Statoreinheit 100 die Leiterstreifen 125, 126 oder übereinanderliegende und jeweils seriell geschaltete Leiterstreifen 125, 126 mehrerer Statorebenen 104, 105, 106, 107 auch separat an jeweils eigene Anschlusspunkte oder Kontakteinheiten 449 angeschlossen sein. Insbesondere kann jeder der Leiterstreifen 125, 126 einzeln und unabhängig von allen anderen Leiterstreifen 125, 126 mit einer oder zweien der Kontakteinheiten 449 verbunden und über die jeweilige Kontakteinheit 449 oder die jeweiligen Kontakteinheiten 449 mit einem elektrischen Antriebsstrom beaufschlagbar sein.

Bei der Statoreinheit 100 sind an den Außenkanten 41, 42, 43, 44 der Statoreinheit 100, an den Außenkanten 161, 162 des ersten Statorsektors 110, an den Außenkanten 171, 172 des zweiten Statorsektors 112, an den Außenkanten 181, 182 des dritten Statorsektors 113 und an den Außenkanten 191, 192 des vierten Statorsektors 114 jeweils keine Kontakteinheiten 449 angeordnet. Die Außenkanten 41, 42, 43, 44 der Statoreinheit 100, die Außenkanten 161, 162 des ersten Statorsektors 110, die Außenkanten 171, 172 des zweiten Statorsektors 112, die Außenkanten 181, 182 des dritten Statorsektors 113 und die Außenkanten 191, 192 des vierten Statorsektors 114 sind also allesamt frei von Kontakteinheiten 449 ausgebildet. Entlang der Außenkanten 161, 162, 171, 172, 181, 182, 191, 192 der Statorsektoren 110, 112, 113, 114 sind daher Außenbereiche der Statoreinheit 100 angeordnet, die frei von Kontakteinheiten 449 ausgebildet sind.

Die Kontakteinheiten 449 sind ausschließlich an den Innenkanten 163, 164, 173, 174, 183, 184, 193, 194 der Statorsektoren 110, 112, 113, 114 angeordnet. Insbesondere sind die Außenkanten 41, 42, 43, 44 der Statoreinheit 100, die Außenkanten 161, 162 des ersten Statorsektors 110, die Außenkanten 171, 172 des zweiten Statorsektors 112, die Außenkanten 181, 182 des dritten Statorsektors 113 und die Außenkanten 191, 192 des vierten Statorsektors 114 allesamt frei von Anschlusspunkten 154, 155, 156 der Statorsegmente 120, 121.

Die erste Kontakteinheitengruppe 441 und die zweite Kontakteinheitengruppe 442 der ersten Kontaktstruktur 421 können, wie in Fig. 12 dargestellt, entlang der zweiten Richtung 14 in einer Reihe nebeneinander angeordnet sein. Insbesondere können die Kontakteinheiten 449 der ersten Kontakteinheitengruppe 441 und die Kontakteinheiten 449 der zweiten Kontakteinheitengruppe 442 entlang der zweiten Richtung 14 in einer Reihe nebeneinander angeordnet sein. Dabei kann jeweils abwechselnd eine Kontakteinheit 449 der ersten Kontakteinheitengruppe 441 neben einer Kontakteinheit 449 der zweiten Kontakteinheitengruppe 442 oder jeweils abwechselnd zwei Kontakteinheiten 449 der ersten Kontakteinheitengruppe 441 neben zwei Kontakteinheiten 449 der zweiten Kontakteinheitengruppe 442 angeordnet sein.

Außerdem können, wie in Fig. 12 dargestellt ist, die fünfte Kontakteinheitengruppe 445 und die sechste Kontakteinheitengruppe 446, insbesondere die Kontakteinheiten 449 der fünften Kontakteinheitengruppe 445 und die Kontakteinheiten 449 der sechsten Kontakteinheitengruppe 446, entlang der zweiten Richtung 14 in einer Reihe nebeneinander angeordnet sein. Dabei kann jeweils abwechselnd eine Kontakteinheit 449 der fünften Kontakteinheitengruppe 445 neben einer Kontakteinheit 449 der sechsten Kontakteinheitengruppe 446 oder jeweils abwechselnd zwei Kontakteinheiten 449 der fünften Kontakteinheitengruppe 445 neben zwei Kontakteinheiten 449 der sechsten Kontakteinheitengruppe 446 angeordnet sein.

Analog können, wie in Fig. 12 dargestellt ist, die dritte Kontakteinheitengruppe 443 und die vierte Kontakteinheitengruppe 444, insbesondere die Kontakteinheiten 449 der dritten Kontakteinheitengruppe 443 und die Kontakteinheiten 449 der vierten Kontakteinheitengruppe 444, entlang der ersten Richtung 12 in einer Reihe nebeneinander angeordnet sein. Dabei kann jeweils abwechselnd eine Kontakteinheit 449 der dritten Kontakteinheitengruppe 443 neben einer Kontakteinheit 449 der vierten Kontakteinheitengruppe 444 oder jeweils abwechselnd zwei Kontakteinheiten 449 der dritten Kontakteinheitengruppe 443 neben zwei Kontakteinheiten 449 der vierten Kontakteinheitengruppe 444 angeordnet sein.

Außerdem können, wie es in Fig. 12 dargestellt ist, die siebte Kontakteinheitengruppe 447 und die achte Kontakteinheitengruppe 448, insbesondere die Kontakteinheiten 449 der siebten Kontakteinheitengruppe 447 und die Kontakteinheiten 449 der achten Kontakteinheitengruppe 448, entlang der ersten Richtung 12 in einer Reihe nebeneinander angeordnet sein. Dabei kann jeweils abwechselnd eine Kontakteinheit 449 der siebten Kontakteinheitengruppe 447 neben einer Kontakteinheit 449 der achten Kontakteinheitengruppe 448 oder jeweils abwechselnd zwei Kontakteinheiten 449 der siebten Kontakteinheitengruppe 447 neben zwei Kontakteinheiten 449 der achten Kontakteinheitengruppe 448 angeordnet sein.

Die Statoreinheit 100 weist im Zentrum der Statoreinheit 100 an einem Kreuzungspunkt 119 der ersten und der zweiten Mittellinie 117, 118 einen Zentrumsbereich 460 auf. Die erste Kontakteinheitengruppe 441, die zweite Kontakteinheitengruppe 442, die dritte Kontakteinheitengruppe 443, die vierte Kontakteinheitengruppe 444, die fünfte Kontakteinheitengruppe 445, die sechste Kontakteinheitengruppe 446, die siebte Kontakteinheitengruppe 447 und die achte Kontakteinheitengruppe 448 sind außerhalb des Zentrumsbereichs 460 angeordnet. Insbesondere sind die Kontakteinheiten 449 der Kontakteinheitengruppen 441, 442, 443, 444, 445, 446, 447, 448 außerhalb des Zentrumsbereichs 460 angeordnet.

Die erste Kontaktstruktur 421, die zweite Kontaktstruktur 422, die dritte Kontaktstruktur 423 und die vierte Kontaktstruktur 424 bilden eine kreuzförmige Kontaktanordnung 420 der Statoreinheit 100 zur Kontaktierung der Leiterstreifen 125, 126 der Statoreinheit 100. Die Kontaktanordnung 420 ist kreuzförmig ausgebildet und jeweils entlang der ersten Mittellinie 117 und der zweiten Mittellinie 118 des Statormoduls 10 und der Statoreinheit 100 ausgerichtet. Damit liegt die Kontaktstruktur 420 auf in der ersten und zweiten Richtung 12, 14 im Inneren der Statoreinheit 100 und des Statormoduls 10 liegenden Grenzen der Statorsektoren 110, 112, 113, 114. Insbesondere bilden die auf der ersten Mittellinie 117 und auf der zweiten Mittellinie 118 angeordneten Anschlusspunkte 154, 155, 156 der ersten und zweiten Statorsegmente 120, 121 die Kontaktstruktur 420 zur Kontaktierung der Statorsegmente 120, 121.

In Fig. 12 sind Innenkanten 163, 164, 173, 174, 183, 184, 193, 194 der Statorsektoren 110, 112, 113, 114 und die Kontaktstrukturen 421, 422, 423, 424 der Kontaktanordnung 420 jeweils an den ersten und zweiten Linien angeordnet, die den Mittellinien 117, 118 entsprechen. Bei alternativen Ausführungsformen der Statoreinheit 100 können die erste und/oder die zweite Linie auch nicht der ersten und/oder der zweiten Mittellinie 117, 118 entsprechen. Insbesondere können die zweiten Innenkanten 164, 174, 184, 194 der Statorsektoren 110, 112, 113, 114 und die zweite und vierte Kontaktstruktur 422, 424 der Kontaktanordnung 420 an einer, insbesondere auf einer, parallel zu der ersten Richtung 12 ausgerichteten und in der zweiten Richtung 14 von der ersten Mittellinie 117 in Richtung der ersten Außenkante 41, oder der dritten Außenkante 43 verschobenen ersten Linie angeordnet sein. Alternativ oder zusätzlich können die ersten Innenkanten 163, 173, 183, 193 der Statorsektoren 110, 112, 113, 114 und die erste und dritte Kontaktstruktur 421, 423 der Kontaktanordnung 420 an einer, insbesondere auf einer, parallel zu der zweiten Richtung 14 ausgerichteten und in der ersten Richtung 12 von der ersten Mittellinie 117 in Richtung der zweiten Außenkante 42 oder der vierten Außenkante 44 verschobenen zweiten Linie angeordnet sein.

Bei der Statoreinheit 100 sind in dem Zentrumsbereich 460 keine Kontakteinheiten 449 angeordnet. Bei alternativen Ausführungsformen der Statoreinheit 100 können jedoch auch in dem Zentrumsbereich 460 eine oder mehrere der Kontakteinheiten 449 der Kontaktanordnung 420 angeordnet sein.

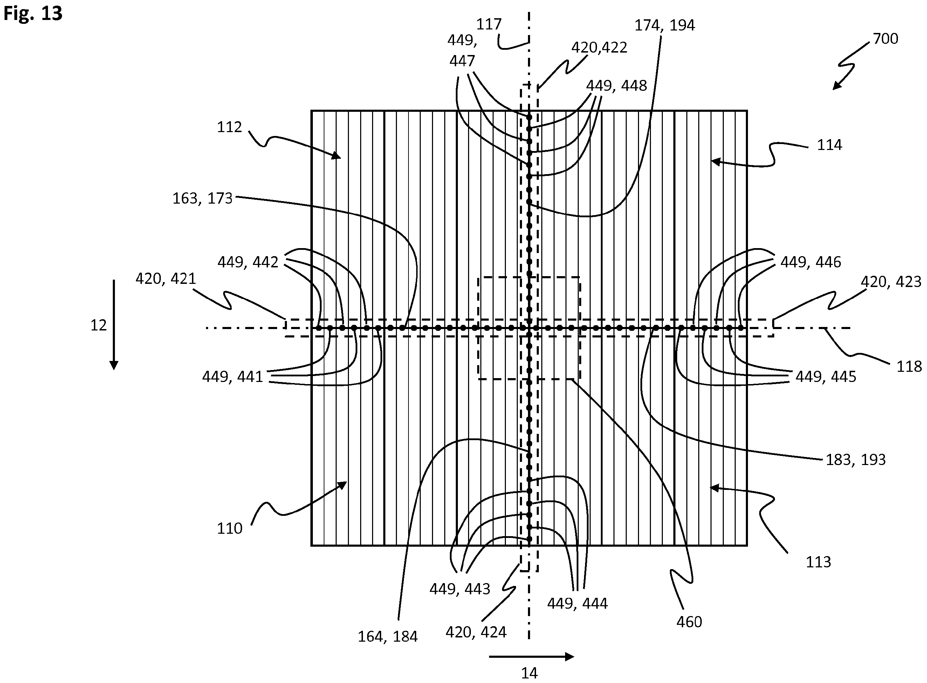

**Fig. 13** zeigt eine Aufsicht auf eine erste weitere Statoreinheit 700. Soweit im Folgenden keine Unterschiede beschrieben werden, ist die erste weitere Statoreinheit 700 ausgebildet wie die Statoreinheit 100.

Bei der ersten weiteren Statoreinheit 700 sind die Kontakteinheiten 449 der ersten Kontakteinheitengruppe 441 und die Kontakteinheiten 449 der zweiten Kontakteinheitengruppe 442 über die gesamte Länge der ersten Innenkante 163 des ersten Statorsektors 110 und über die gesamte Länge der ersten Innenkante 173 des zweiten Statorsektors 112 verteilt angeordnet. Ebenso sind die Kontakteinheiten 449 der dritten Kontakteinheitengruppe 443 und die Kontakteinheiten 449 der vierten Kontakteinheitengruppe 444 über die gesamte Länge der zweiten Innenkante 164 des ersten Statorsektors 110 und über die gesamte Länge der zweiten Innenkante 184 des dritten Statorsektors 113 verteilt angeordnet. Die Kontakteinheiten 449 der fünften Kontakteinheitengruppe 445 und die Kontakteinheiten 449 der sechsten Kontakteinheitengruppe 446 sind über die gesamte Länge der ersten Innenkante 183 des dritten Statorsektors 113 und über die gesamte Länge der ersten Innenkante 193 des vierten Statorsektors 114 verteilt angeordnet. Die Kontakteinheiten 449 der siebten Kontakteinheitengruppe 447 und die Kontakteinheiten 449 der achten Kontakteinheitengruppe 448 sind über die gesamte Länge der zweiten Innenkante 174 des zweiten Statorsektors 112 und über die gesamte Länge der zweiten Innenkante 194 des vierten Statorsektors 114 verteilt angeordnet. Insbesondere sind bei der weiteren Statoreinheit 700 ein Teil der Kontakteinheiten 449 in dem Zentrumsbereich 460 der weiteren Statoreinheit 700 angeordnet.

Bei der in Fig. 12 dargestellten Statoreinheit 100 und bei der in Fig. 13 dargestellten ersten weiteren Statoreinheit 700 sind die Kontakteinheitengruppen 441, 442, 443, 444, 445, 446, 447, 448, insbesondere die Kontakteinheiten 449 der Kontakteinheitengruppen 441, 442, 443, 444, 445, 446, 447, 448, jeweils in Reihen auf der ersten und der zweiten Mittellinie 117, 118 der Statoreinheit 100 angeordnet. Bei alternativen Ausführungsformen der Statoreinheit 100 können die Kontakteinheitengruppen 441, 442, 443, 444, 445, 446, 447, 448 oder die Kontakteinheiten 449 auch ganz oder teilweise neben den Mittellinien 117, 118 an den Innenkanten 163, 164, 173, 174, 183, 184, 193, 194 der Statorsektoren 110, 112, 113, 114 angeordnet sein.

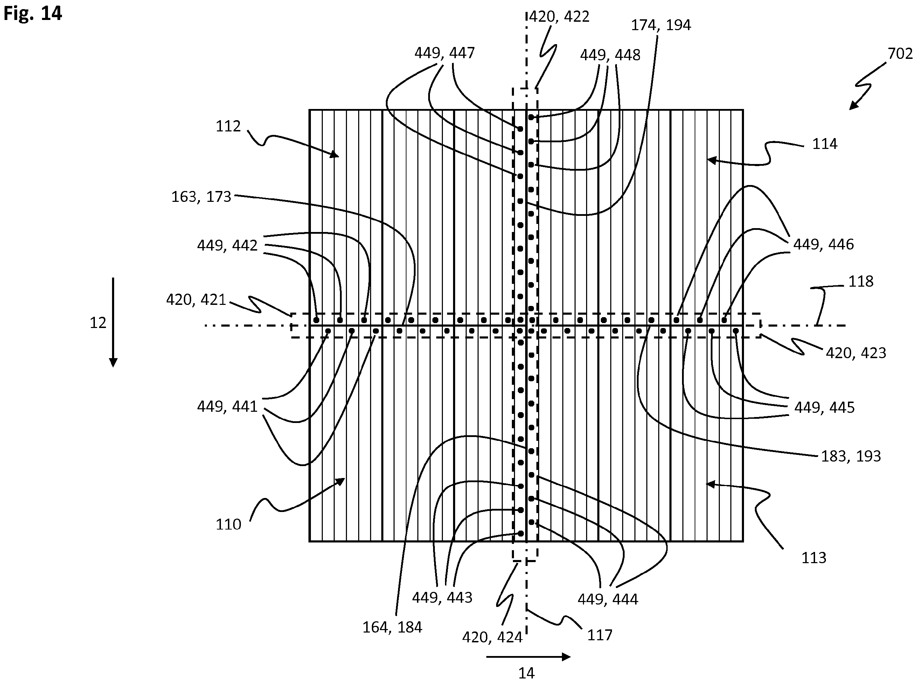

**Fig. 14** zeigt eine Aufsicht auf eine zweite weitere Statoreinheit 702. Soweit im Folgenden keine Unterschiede beschrieben werden, ist die zweite weitere Statoreinheit 702 ausgebildet wie die Statoreinheit 100. Insbesondere ist bei der zweiten weiteren Statoreinheit 702 die erste Kontaktstruktur 421 an der ersten Innenkante 163 des ersten Statorsektors 110 und an der ersten Innenkante 173 des zweiten Statorsektors 112 angeordnet. Die vierte Kontaktstruktur 424 ist an der zweiten Innenkante 164 des ersten Statorsektors 110 und an der zweiten Innenkante 184 des dritten Statorsektors 113, die dritte Kontaktstruktur 423 ist an der ersten Innenkante 183 des dritten Statorsektors 113 und an der ersten Innenkante 193 des vierten Statorsektors 114 und die zweite Kontaktstruktur 422 ist an der zweiten Innenkante 174 des zweiten Statorsektors 112 und an der zweiten Innenkante 194 des vierten Statorsektors 114 angeordnet.

Bei der zweiten weiteren Statoreinheit 702 sind die Kontakteinheiten 449 der Kontaktstrukturen 421, 422, 423, 424 jeweils neben den Innenkanten 163, 164, 173, 174, 183, 184 193, 194 der Statorsektoren 110, 112, 113, 114 angeordnet. Insbesondere sind die Kontakteinheiten 449 der ersten Kontakteinheitengruppe 441 in Richtung des ersten Statorsektors 110 versetzt an den ersten Innenkanten 163, 174 des ersten und zweiten Statorsektors 110, 112 angeordnet. Die Kontakteinheiten 449 der zweiten Kontakteinheitengruppe 442 sind in Richtung des zweiten Statorsektors 112 versetzt an den ersten Innenkanten 163, 173 des ersten und zweiten Statorsektors 110, 112 angeordnet. Die Kontakteinheiten 449 der dritten Kontakteinheitengruppe 443 sind in Richtung des ersten Statorsektors 110 versetzt an den zweiten Innenkanten 164, 184 des ersten und dritten Statorsektors 110, 113 angeordnet und die Kontakteinheiten 449 der vierten Kontakteinheitengruppe 444 sind in Richtung des dritten Statorsektors 113 versetzt an den zweiten Innenkanten 164, 184 des ersten und dritten Statorsektors 110, 113 angeordnet.

Außerdem sind die Kontakteinheiten 449 der fünften Kontakteinheitengruppe 445 in Richtung des dritten Statorsektors 113 versetzt an den ersten Innenkanten 183, 193 des dritten und vierten Statorsektors 113, 114 angeordnet und die Kontakteinheiten 449 der sechsten Kontakteinheitengruppe 446 sind in Richtung des vierten Statorsektors 114 versetzt an den ersten Innenkanten 183, 193 des dritten und vierten Statorsektors 113, 114 angeordnet. Die Kontakteinheiten 449 der siebten Kontakteinheitengruppe 447 sind in Richtung des zweiten Statorsektors 112 versetzt an den zweiten Innenkanten 174, 194 des zweiten und vierten Statorsektors 112, 114 angeordnet und die Kontakteinheiten 449 der achten Kontakteinheitengruppe 448 sind in Richtung des vierten Statorsektors 114 versetzt an den zweiten Innenkanten 174, 194 des zweiten und vierten Statorsektors 112, 114 angeordnet.

Die Statoreinheit 100, die weitere Statoreinheit 700 und/oder die zweite weitere Statoreinheit 702 kann als eine mehrlagige Einheit ausgebildet sein, wobei die Statorlagen 104, 105, 106, 107 mit den Leiterstreifen 125, 126 jeweils über isolierende Zwischenschichten miteinander verbunden sind. Beispielsweise kann die Statoreinheit 100, die weitere Statoreinheit 700 und/oder die zweite weitere Statoreinheit 702 als eine gedruckte Schaltung bzw. Leiterplatte, auch *printed circuit board* (PCB) genannt, ausgeführt sein. Insbesondere kann die Statoreinheit 100, die weitere Statoreinheit 700 und/oder die zweite weitere Statoreinheit 702 als eine mehrlagige Leiterplatte ausgebildet sein, wobei die Statorlagen 104, 105, 106, 107 jeweils in unterschiedlichen Lagen der Leiterplatte angeordnet sind. Die Leiterstreifen 125, 126 können auf den Lagen der Leiterplatte eine Dicke zwischen 10pm und 500µm aufweisen, insbesondere können die Leiterstreifen 125, 126 eine Dicke zwischen 50pm und 250µm aufweisen. Die Kontakteinheiten 449 können jeweils als Kontaktlöcher bzw. Vias (vertical interconnect access) in der Statoreinheit 100, der weiteren Statoreinheit 700 und/oder der zweiten weiteren Statoreinheit 702 ausgebildet sein und leitfähig beschichtete Durchgangsöffnungen durch die Statoreinheit 100, die weitere Statoreinheit 700 und/oder die zweite weitere Statoreinheit 702 umfassen.

Um eine Verschaltung der Hin- und Rückleiter 131, 141, 146, 132, 142, 147 der Dreiphasensysteme 150, 151 der Statorsegmente 120, 121 gemäß der in den Figuren 9, 10 und 11 dargestellten Ersatzschaltpläne zu erreichen, kann die Statoreinheit 100, die weitere Statoreinheit 700 und/oder die zweite weitere Statoreinheit 702 jeweils Verbindungsstrukturen aufweisen. Die Verbindungsstrukturen können auf den Leiterstreifen 125, 126 oder zwischen den Leiterstreifen 125, 127 der Statoreinheit 100, der weiteren Statoreinheit 700 und/oder der zweiten weiteren Statoreinheit 702 angeordnet sein.

Ein Teil der Verbindungstrukturen kann als Horizontalverbindungsstrukturen ausgebildet sein, welche Leiterstreifen 125, 126, die in den einzelnen Statorsegmenten 120, 121 innerhalb derselben Statorlage 104, 105, 106, 107 angeordnet sind, miteinander verbinden. Die Horizontalverbindungsstrukturen sind auf derselben Statorlage 104, 105, 106, 107 angeordnet, wie die zu verbindenden Leiterstreifen 125, 126. Die Horizontalverbindungsstrukturen können in den Statorlagen 104, 105, 106, 107 jeweils in derjenigen Richtung 12, 14 verlaufen, in der die Leiterstreifen 125, 126 nebeneinander angeordnet sind. In den Statorlagen 104, 106, bei denen die Leiterstreifen 125 entlang der ersten Richtung 12 ausgedehnt und entlang der zweiten Richtung 14 nebeneinander angeordnet sind, können die Horizontalverbindungsstrukturen entlang der zweiten Richtung 14 verlaufen. In den Statorlagen 105, 107, in denen die entlang der zweiten Richtung 14 länglich ausgedehnten weiteren Leiterstreifen 126 angeordnet sind, können die Horizontalverbindungsstrukturen entlang der ersten Richtung 12 verlaufen. Die Horizontalverbindungsstrukturen können, wie die Leiterstreifen 125, 126, als Leiterbahnen oder Leiterbahnabschnitte einer Lage einer Leiterplatte der Statoreinheit 100, der weiteren Statoreinheit 700 und/oder der zweiten weiteren Statoreinheit 702 ausgebildet sein.

Ein Teil der Verbindungstrukturen kann als Vertikalverbindungsstrukturen ausgebildet sein, welche Leitertreifen 125, 126 die in den einzelnen Statorsegmenten 120, 121 in verschiedenen Statorlagen 104, 105, 106, 107 angeordnet sind, miteinander verbinden. Über die Vertikalverbindungsstrukturen können beispielsweise die ersten Hin- und Rückleiter 131, 132 für die ersten Phasen U der Antriebsströme in Reihe geschaltet sein. Ebenso können die zweiten Hin- und Rückleiter 141, 142 für die zweiten Phasen V der Antriebsströme und die dritten Hin- und Rückleiter 146, 147 für die dritten Phasen W der Antriebsströme über die Vertikalverbindungsstrukturen in Reihe geschaltet sein. Die Vertikalverbindungsstrukturen können als Durchkontaktierungen oder als Vias (Vertical interconnect access), d. h. als Kontaktlöcher, zwischen den einzelnen Statorlagen 104, 105, 106, 107 der Leiterplatte der Statoreinheit 100, der weiteren Statoreinheit 700 und/oder der zweiten weiteren Statoreinheit 702 ausgebildet sein.

Die schematischen Darstellungen der vorangegangenen Figuren zeigen die Leiterstreifen 125, 126 jeweils als rechteckig ausgebildete und sich über die gesamten Statorsektoren 110, 112, 113, 114 erstreckende Leiterstrukturen. Die Leiterstreifen 125, 126 können in von den Verbindungsstrukturen entfernten Bereichen der Statoreinheit 100, der weiteren Statoreinheit 700 und/oder der zweiten weiteren Statoreinheit 702 ausgebildet sein, wie es in den vorangegangenen Figuren schematisch dargestellt ist. Insbesondere im Bereich der Verbindungsstrukturen kann die Form der Leiterstreifen 125, 126 jedoch auch von den schematischen Darstellungen der vorangegangenen Figuren abweichen. Insbesondere können die Leiterstreifen 125 der ersten Statorsegmente 120 im Bereich der Verbindungsstrukturen in der zweiten Richtung 14 schmaler ausgebildet sein als in den von den Verbindungsstrukturen entfernten Bereichen. Ebenso können die weiteren Leiterstreifen 126 der zweiten Statorsegmente 121 im Bereich der Verbindungsstrukturen in der ersten Richtung 12 schmaler ausgebildet sein als in den von den Verbindungsstrukturen entfernten Bereichen.

Die Leiterstreifen 125 der ersten Statorsegmente 120 können in der ersten Richtung 12 auch kürzer ausgebildet sein, als es in den vorangegangenen Figuren schematisch dargestellt ist. Die weiteren Leiterstreifen 126 der zweiten Statorsegmente 121 können in der zweiten Richtung 14 auch kürzer ausgebildet sein, als es in den vorangegangenen Figuren schematisch dargestellt ist. Insbesondere müssen sich die Leiterstreifen 125 der einzelnen ersten Statorsegmente 120 in der ersten Richtung 12 nicht jeweils vollständig über die ersten Statorsegmente 120 erstrecken und die weiteren Leiterstreifen 126 der einzelnen zweiten Statorsegmente 121 müssen sich in der ersten Richtung 12 nicht jeweils vollständig über die zweiten Statorsegmente 121 erstrecken.

Stattdessen können im Bereich der Außenkanten 161, 162, 171, 172, 181, 182, 191, 192 und der Innenkanten 163, 164, 173, 174, 183, 184, 193, 194 der Statorsektoren 110, 112, 113, 114 Horizontalverbindungsstrukturen und/oder Vertikalverbindungsstrukturen angeordnet sein.

Eine elektrisch leitende Verbindung zwischen den Kontakteinheiten 449 der Kontaktanordnung 420 und den Leiterstreifen 125, 126 kann in einer beliebigen Statorlage 104, 105, 106, 107 der Statoreinheit 100, der weiteren Statoreinheit 700 und/oder der zweiten weiteren Statoreinheit 702 erfolgen. Insbesondere kann eine elektrisch leitende Verbindung zwischen einer der Kontakteinheiten 449 und einem der Leiterstreifen 125, 126 in Statorlagen 105, 106 bestehen, die in der vertikalen Richtung 15 im Inneren der Statoreinheit 100, der weiteren Statoreinheit 700 und/oder der zweiten weiteren Statoreinheit 702 angeordnet sind. Die im Inneren der Statoreinheit 100, der weiteren Statoreinheit 700 und/oder der zweiten weiteren Statoreinheit 702 angeordneten Statorlagen 105, 106 bilden Innenlagen der Statoreinheit 100, der weiteren Statoreinheit 700 und/oder der zweiten weiteren Statoreinheit 702, während die an der Statorfläche 11 und an einer der Statorfläche 11 gegenüberliegenden Bodenfläche der Statoreinheit 100, der weiteren Statoreinheit 700 und/oder der zweiten weiteren Statoreinheit 702 angeordneten Statorlagen 104, 107 Außenlagen der Statoreinheit 100, der weiteren Statoreinheit 700 und/oder der zweiten weiteren Statoreinheit 702 bilden. Die Innenlagen sind damit zwischen den Außenlagen angeordnet. Bei der in Fig. 5 dargestellten Statoreinheit 100 bilden die erste Statorlage 104 und die vierte Statorlage 107 jeweils Außenlagen und die zweite Statorlage 105 und die dritte Statorlage 106 jeweils Innenlagen der Statoreinheit 100. Statorlagen 104, 105, 106, 107 mit einem Leiterstreifen 125, 126 oder mit mehreren Leiterstreifen 125, 126, die mit Kontakteinheiten 449 der Kontaktanordnung 420 elektrisch leitend verbunden sind, können auch als Anschlussstatorlagen bezeichnet werden.

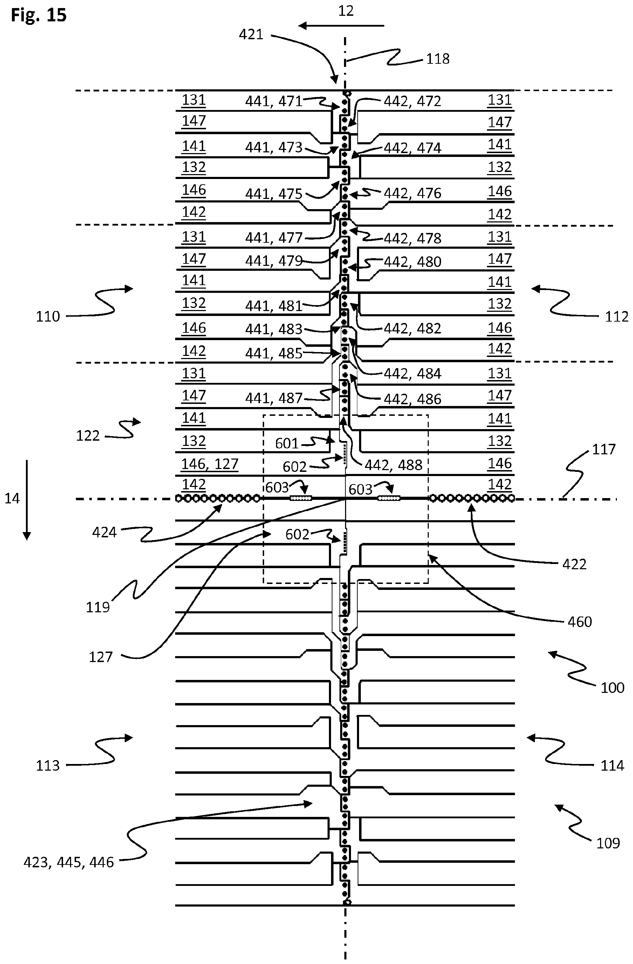

**Fig. 15** zeigt eine schematische Darstellung einer Aufsicht auf eine Anschlussstatorlage 109 der Statoreinheit 100. In der Anschlussstatorlage 109 sind die ersten Statorsegmente 120 mit den entlang der ersten Richtung 12 länglich ausgedehnten Leiterstreifen 125 an die Kontaktanordnung 420 angeschlossen. Die Anschlussstatorlage 109 kann beispielsweise diejenige Statorlage 104, 106 mit in der ersten Richtung 12 ausgedehnten Leiterstreifen 125 sein, die in der vertikalen Richtung 15 am weitesten von der Statorfläche 11 entfernt angeordnet ist. Beispielsweise kann die Anschlussstatorlage 109 durch die dritte Statorlage 106 gebildet werden.

Im Folgenden wird der Anschluss der Leiterstreifen 125 an die Kontaktanordnung 420 anhand des Anschlusses der Leiterstreifen 125 des ersten und zweiten Statorsektors 110, 112 an die erste und zweite Kontakteinheitengruppe 441, 442 der ersten Kontaktstruktur 421 beschrieben. Die Leiterstreifen 125 des dritten und des vierten Statorsektors 113, 114 sind in analoger Weise an die fünfte und sechste Kontakteinheitengruppe 445, 446 der dritten Kontaktstruktur 423 angeschlossen.

Die erste Kontaktstruktur 421 umfasst zwei erste Kontakteinheiten 471, zwei zweite Kontakteinheiten 472, zwei dritte Kontakteinheiten 473, zwei vierte Kontakteinheiten 474, zwei fünfte Kontakteinheiten 475, zwei sechste Kontakteinheiten 476, zwei siebte Kontakteinheiten 477, zwei achte Kontakteinheiten 478, zwei neunte Kontakteinheiten 479, zwei zehnte Kontakteinheiten 480, zwei elfte Kontakteinheiten 481, zwei zwölfte Kontakteinheiten 482, zwei dreizehnte Kontakteinheiten 483, zwei vierzehnte Kontakteinheiten 484, zwei fünfzehnte Kontakteinheiten 485, zwei sechzehnte Kontakteinheiten 486, zwei siebzehnte Kontakteinheiten 487 und zwei achtzehnte Kontakteinheiten 488, welche der Reihe nach auf der zweiten Mittellinie 118 zwischen dem ersten Statorsektor 110 und dem zweiten Statorsektor 112 angeordnet sind.

Die Leiterstreifen 125 des ersten Statorsektors 110 sind an die erste Kontakteinheitengruppe 441 angeschlossen, wobei die erste Kontakteinheitengruppe 441 die ersten Kontakteinheiten 471, die dritten Kontakteinheiten 473, die fünften Kontakteinheiten 475, die siebten Kontakteinheiten 477, die neunten Kontakteinheiten 479, die elften Kontakteinheiten 481, die dreizehnten Kontakteinheiten 483, die fünfzehnten Kontakteinheiten 485 und die siebzehnten Kontakteinheiten 487 umfasst. Die Leiterstreifen 125 der Anschlussstatorlage 109 des zweiten Statorsektors 112 sind an die zweite Kontakteinheitengruppe 442 angeschlossen, wobei die zweite Kontakteinheitengruppe 442 die zweiten Kontakteinheiten 472, die vierten Kontakteinheiten 474, die sechsten Kontakteinheiten 476, die achten Kontakteinheiten 478, die zehnten Kontakteinheiten 480, die zwölften Kontakteinheiten 482, die vierzehnten Kontakteinheiten 484, die sechzehnten Kontakteinheiten 486 und die achtzehnten Kontakteinheiten 488 umfasst.

Die Hinleiter 131, 141, 146 der Dreiphasensysteme der ersten Statorsegmente 120 des ersten Statorsektors 110 sind jeweils mit den Kontakteinheiten 471, 473, 475, 477, 479, 481, 483, 485, 487 der ersten Kontakteinheitengruppe 441 elektrisch leitend verbunden. Die Hinleiter 131, 141, 146 der Dreiphasensysteme der ersten Statorsegmente 120 des zweiten Statorsektors 112 sind jeweils mit den Kontakteinheiten 472, 474, 476, 478, 480, 482, 484, 486, 488 der zweiten Kontakteinheitengruppe 442 elektrisch leitend verbunden.

Die Statoreinheit 100 weist einen zentrumsnahen Leiterstreifen 127 auf. Der zentrumsnahe Leiterstreifen 127 ist in der zweiten Richtung 14 gegenüber der ersten Kontaktstruktur 421 derart in Richtung des Kreuzungspunkts 119 der Mittellinien 117, 118 versetzt angeordnet, dass er in der zweiten Richtung 14 beabstandet von den Kontakteinheiten 449 der ersten Kontaktstruktur 421 angeordnet ist. Insbesondere grenzt der zentrumsnahe Leiterstreifen 127 in dem Zentrumsbereich 460 an die zweite Mittellinie 118. Bei der Statoreinheit 100 bildet der dritte Hinleiter 146 eines an der ersten Mittellinie 117 angeordneten zentrumsnahen Statorsegments 122 des ersten Statorsektors 110 den zentrumsnahen Leiterstreifen 127. Bei nicht dargestellten alternativen Ausführungsformen der Statoreinheit 100 kann der zentrumsnahe Leiterstreifen 127 aber auch durch andere Hinleiter 131, 141, 146 an der ersten Mittellinie 117 angeordneter zentrumsnaher Statorsegmente des ersten oder zweiten Statorsektors 110, 112 gebildet werden.

Bis auf den zentrumsnahen Leiterstreifen 127 sind alle Hinleiter 131, 141, 146 des ersten und zweiten Statorsektors 110, 112 über auf der Anschlussstatorlage 109 angeordnete Horizontalverbindungsstrukturen mit den Kontakteinheiten 471, 472, 473, 474, 475, 476, 477, 478, 479, 480, 481, 482, 483, 484, 485, 486, 488 der ersten Kontaktstruktur 421 elektrisch leitend verbunden. Der zentrumsnahe Leiterstreifen 127 ist mit den beiden siebten Kontakteinheiten 487 der ersten Kontakteinheitengruppe 441 über eine Vertikalverbindungsstruktur 602 und über eine in Fig. 15 nicht dargestellte Zuleitung elektrisch leitend verbunden. Die Zuleitung ist in einer zusätzlichen Statorlage der Statoreinheit 100 angeordnet und auf der zusätzlichen Statorlage mit der Vertikalverbindungsstruktur 602 und den siebten Kontakteinheiten 487 der ersten Kontaktstruktur 421 elektrisch leitend verbunden.

Der zentrumsnahe Leiterstreifen 127 ist wiederum über eine auf der Anschlussstatorlage 109 angeordnete Horizontalverbindungsstruktur 601 mit der Vertikalverbindungsstruktur 602 elektrisch leitend verbunden. Die zusätzliche Statorlage wird durch eine in der vertikalen Richtung 15 über oder unter der Anschlussstatorlage 109 angeordnete Statorlage gebildet. Insbesondere kann die zusätzliche Statorlage durch die Statorlage 104, 106 mit in der ersten Richtung 12 ausgedehnten Leiterstreifen 125 gebildet werden, die der Anschlussstatorlage 109 in der vertikalen Richtung 15 nachfolgt, beispielsweise durch die erste Statorlage 104 oder durch eine zwischen der ersten Statorlage 104 und der dritten Statorlage 106 angeordnete weitere Statorlage mit in der ersten Richtung 12 ausgedehnten Leiterstreifen 125.

Ein Verbinden des zentrumsnahen Leiterstreifens 127 über die Vertikalverbindungsstruktur 602 und die in der zusätzlichen Statorlage angeordnete Zuleitung ermöglicht es, den zentrumsnahen Leiterstreifen 127 auf platzsparende Weise an die erste Kontaktstruktur 421 anzuschließen. Insbesondere bei Statoreinheiten, bei denen sich, wie bei der in Fig. 12 dargestellten Statoreinheit 100, in dem Zentrumsbereich 460 keine Kontakteinheiten 449 befinden, steht bei einer Verbindung zwischen zentrumsnahem Leiterstreifen 127 und siebzehnter Kontakteinheit 487, welche über die in der zusätzlichen Statorlage angeordnete Zuleitung realisiert ist, ausreichend Platz zur Verfügung, um die übrigen Leiterstreifen 125 des ersten und dritten Statorsektors 110, 112 mit der ersten Kontaktstruktur 421 zu verbinden.

Bei der Statoreinheit 100 entspricht die gesamte Leiteranordnung des dritten Statorsektors 113 der an der ersten Mittellinie 117 gespiegelten gesamten Leiteranordnung des ersten Statorsektors 110. Die gesamte Leiteranordnung des vierten Statorsektors 114 entspricht der an der ersten Mittellinie 117 gespiegelten gesamten Leiteranordnung des zweiten Statorsektors 112. Die gesamten Leiteranordnungen umfassen dabei insbesondere die Anordnung der Leiterstreifen 125, der Horizontalverbindungsstrukturen 601 und der Vertikalverbindungsstrukturen 602 und der ersten und dritten Kontaktstruktur 421, 423. Insbesondere entsprechen in der Anschlussstatorlage 109 die gesamte Leiteranordnung des dritten Statorsektors 113 der an der ersten Mittellinie 117 gespiegelten gesamten Leiteranordnung des ersten Statorsektors 110 und die gesamte Leiteranordnung des vierten Statorsektors 114 der an der ersten Mittellinie 117 gespiegelten gesamten Leiteranordnung des zweiten Statorsektors 112. Insbesondere ist auch bei der dritten Kontaktstruktur 423 ein zentrumsnaher Leiterstreifen 127 des dritten Statorsektors 114 über eine Vertikalverbindungsstruktur 602 und eine in der zusätzlichen Statorlage angeordnete Zuleitung mit Kontakteinheiten der fünften Kontakteinheitengruppe 445 elektrisch leitend verbunden.

Die entlang der zweiten Richtung 14 ausgedehnten weiteren Leiterstreifen 126 sind in analoger Weise mit der zweiten Kontaktstruktur 422 und der vierten Kontaktstruktur 424 elektrisch leitend verbunden. Insbesondere weisen die Statorsektoren 110, 112, 113, 114 in einer weiteren Anschlussstatorlage der Statoreinheit 100 eine Leiteranordnung auf, die der im Gegenuhrzeigersinn um 90° gedrehten Leiteranordnung der in Fig. 15 gezeigten Anschlussstatorlage 109 entspricht. Die weitere Anschlussstatorlage kann beispielsweise die vierte Statorlage 107 sein. Wie die Anschlussstatorlage 109 umfasst auch die weitere Anschlussstatorlage zwei zentrumsnahe weitere Leiterstreifen, die jeweils über eine weitere Vertikalverbindungsstruktur 603 und eine in einer weiteren zusätzlichen Statorlage angeordnete Zuleitung mit einer oder mehreren Kontakteinheiten 449 der zweiten bzw. vierten Kontaktstruktur 422, 424 elektrisch leitend verbunden sind. Die zentrumsnahen weiteren Leiterstreifen der weiteren Anschlussstatorlage können dabei in dem dritten und vierten Statorsektor 113, 114 angeordnet sein. Die weitere zusätzliche Statorlage kann beispielsweise die zweite Statorlage 105 oder eine zwischen der zweiten Statorlage 105 und der vierten Statorlage 107 angeordnete weitere Statorlage mit in der zweiten Richtung 14 ausgedehnten weiteren Leiterstreifen 126 sein.

Die Kontakteinheiten 471, 472, 473, 474, 475, 476, 477, 478, 479, 480, 481, 482, 483, 484, 485, 486, 487, 488 können bei einer als Leiterplatte ausgebildeten Statoreinheit 100 jeweils als Vias ausgebildet sein. Ebenso können die Vertikalverbindungsstrukturen 602 und/oder die weiteren Vertikalverbindungsstrukturen 603 als Vias ausgebildet sein. Die Vertikalverbindungsstrukturen 602 sind jeweils auf der zweiten Mittellinie 118 angeordnet, wobei die an den zentrumsnahen Leiterstreifen 127 des ersten Statorsektors 110 angeschlossene Vertikalverbindungsstruktur 602 zwischen dem ersten und dem zweiten Statorsektor 110, 112 und die an den zentrumsnahen Leiterstreifen 127 des dritten Statorsektors 113 angeschlossene Vertikalverbindungsstruktur 602 zwischen dem dritten und dem vierten Statorsektor 113, 114 angeordnet ist. Die weiteren Vertikalverbindungsstrukturen 603 sind jeweils auf der ersten Mittellinie 117 angeordnet, wobei die an den zentrumsnahen weiteren Leiterstreifen des vierten Statorsektors 114 angeschlossene weitere Vertikalverbindungsstruktur 603 zwischen dem zweiten und dem vierten Statorsektor 112, 114 und die an den zentrumsnahen weiteren Leiterstreifen des dritten Statorsektors 113 angeschlossene weitere Vertikalverbindungsstruktur 603 zwischen dem ersten und dem dritten Statorsektor 111, 113 angeordnet ist. Die Vertikalverbindungsstrukturen 602 und/oder die weiteren Vertikalverbindungsstrukturen 603 sind jeweils in dem Zentrumsbereich 460 angeordnet. Die Vertikalverbindungsstrukturen 602 und/oder die weiteren Vertikalverbindungsstrukturen 603 können jeweils ein auf den Mittellinien 117, 118 angeordnetes Via oder mehrere nebeneinander auf den Mittellinien 117, 118 angeordnete Vias, insbesondere jeweils sieben auf den Mittellinien 117, 118 angeordnete Vias, umfassen.

Die Statoreinheit 100, die erste weitere Statoreinheit 700 oder die zweite weitere Statoreinheit 702 sind über die Kontaktanordnung 420 mit einem Leistungsmodul elektrisch leitend verbunden. Das Leistungsmodul ist dazu ausgebildet, die für das Antreiben des Läufers 200 benötigten Antriebsströme bereitzustellen. Das Leistungsmodul kann beispielsweise eine oder mehrere Stromerzeugungseinheiten umfassen, um die Antriebsströme zu erzeugen. Die Stromerzeugungseinheiten können beispielsweise als Verstärker oder Endstufen, insbesondere als H-Brücken-Schaltungen, ausgebildet sein. Alternativ können die Antriebsströme auch durch weitere Module des Statormoduls 10 erzeugt werden und in das Leistungsmodul eingespeist werden. Das Leistungsmodul kann auch als Einspeisemodul bezeichnet werden.

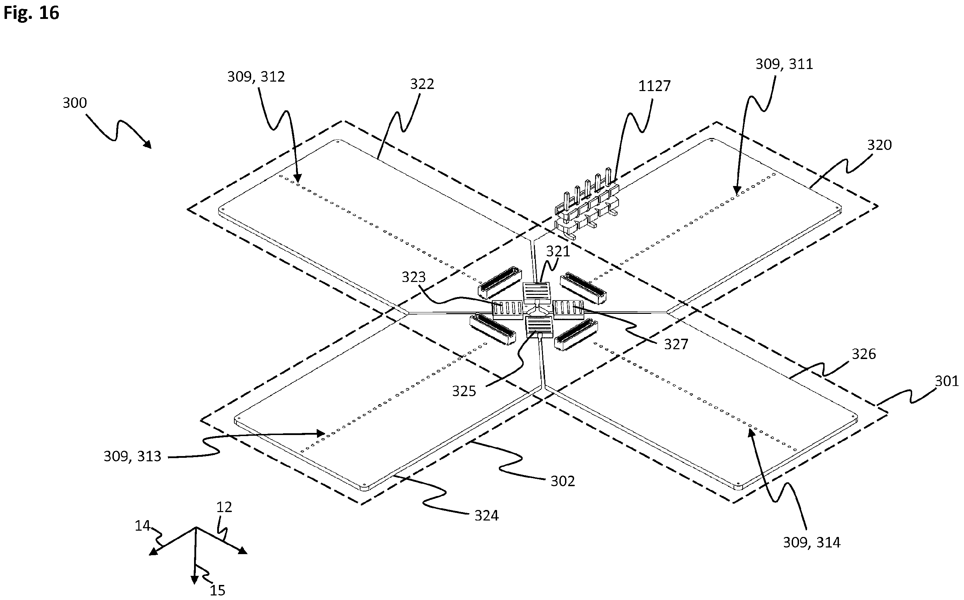

**Fig. 16** zeigt eine schematische perspektivische Darstellung einer Unterseite des Leistungsmoduls 300. Das Leistungsmodul 300 ist an seiner Unterseite im Wesentlichen eben ausgebildet. Auf der Unterseite können in Fig. 16 nicht dargestellte elektronische Bauteile oder Komponenten, insbesondere die Stromerzeugungseinheiten, an dem Leistungsmodul 300 angeordnet sein. Das Leistungsmodul 300 ist als eine Platte ausgebildet. Eine Ausdehnung des Leistungsmoduls 300 in der ersten und zweiten Richtung 12, 14 ist jeweils größer als eine Ausdehnung des Leistungsmoduls 300 in der vertikalen Richtung 15. Das Leistungsmodul 300 kann eine Leiterplatte mit auf der Leiterplatte angeordneten elektronischen Bauteilen oder Komponenten umfassen.

Die Leiterplatte des Leistungsmoduls 300 kann eine oder mehrere Kupferlagen aufweisen, in denen Leiterbahnen zur Kontaktierung der auf der Leiterplatte angeordneten elektronischen Bauteile ausgebildet sind. Die Kupferlagen können eine Dicke von 10pm bis 500pm, insbesondere von 50pm bis 100µm, insbesondere von 70pm aufweisen. Die Leiterbahnen können eine Mindestbreite von 50pm oder 100µm, insbesondere von 200µm oder von 300µm aufweisen.

Das Leistungsmodul 300 ist in der durch die erste und zweite Richtung 12, 14 aufgespannten Ebene kreuzförmig mit zwei senkrecht zueinander orientierten und entlang der ersten und zweiten Richtung 12, 14 ausgerichteten Balken 301, 302 ausgebildet. Die Balken 301, 302 des Leistungsmoduls 300 weisen in der ersten Richtung 12 und in der zweiten Richtung 14 jeweils gleiche Ausdehnungen auf. Insbesondere umfasst das Leistungsmodul 300 einen entlang der ersten Richtung 12 verlaufenden ersten Balken 301 und einen entlang der zweiten Richtung 14 verlaufenden zweiten Balken 302.

Der erste Balken 301 kann in der zweiten Richtung 14 eine Breite aufweisen, die kleiner ist als eine Breite der zuvor beschriebenen Statoreinheit 100 in der zweiten Richtung 14.

Insbesondere kann der erste Balken 301 in der zweiten Richtung 14 eine Breite aufweisen, die kleiner ist als die Hälfte der Breite der Statoreinheit 100 in der zweiten Richtung 14. Der zweite Balken 302 kann in der ersten Richtung 12 eine Breite aufweisen, die kleiner ist als eine Breite der Statoreinheit 100 in der ersten Richtung 12. Insbesondere kann der zweite Balken 302 in der ersten Richtung 12 eine Breite aufweisen, die kleiner ist als die Hälfte der Breite der Statoreinheit 100 in der ersten Richtung 12.

Das Leistungsmodul 300 umfasst eine erste Moduleinheit 320, eine zweite Moduleinheit 322, eine dritte Moduleinheit 324 und eine vierte Moduleinheit 326, die jeweils mechanisch getrennt voneinander ausgebildet sind. Soweit im Folgenden keine Unterschiede beschrieben werden, sind die Moduleinheiten 320, 322, 324, 326 identisch ausgebildet. Die erste und dritte Moduleinheit 320, 324 bilden den entlang der zweiten Richtung 14 ausgerichteten zweiten Balken 302 des kreuzförmigen Leistungsmoduls 300, die zweite und vierte Moduleinheit 322, 326 bilden den entlang der ersten Richtung 12 ausgerichteten ersten Balken 301 des kreuzförmigen Leistungsmoduls 300.

Die erste Moduleinheit 320 kann allgemein auch als eine Moduleinheit 320 des Leistungsmoduls 300 und die vierte Moduleinheit 326 kann allgemein auch als eine weitere Moduleinheit 326 des Leistungsmoduls 300 bezeichnet werden.

Die Moduleinheiten 320, 322, 324, 326 weisen in der durch die erste und zweite Richtung 12, 14 aufgespannten Ebene jeweils einen in der Aufsicht auf die Unterseite der Moduleinheiten 320, 322, 324, 326 rechteckig ausgebildeten Teil auf. An einer Seite des rechteckigen Teils schließt sich die Basis eines dreieckigen Teils an, welcher in der Aufsicht auf die Unterseite der Moduleinheiten 320, 322, 324, 326 im Wesentlichen die Form eines gleichschenkligen Dreiecks aufweist. Die Moduleinheiten 320, 322, 324, 326 sind kreuzförmig um einen gemeinsamen Mittelpunkt angeordnet, wobei die Spitzen der dreieckigen Teile der Moduleinheiten 320, 322, 324, 326 jeweils einander zugewandt an dem Mittelpunkt angeordnet sind. Die erste Moduleinheit 320 und die dritte Moduleinheit 324 sind in der zweiten Richtung 14 einander gegenüberliegend angeordnet, wobei die Spitzen der dreieckigen Teile der ersten und dritten Moduleinheit 320, 324 jeweils einander zugewandt an dem Mittelpunkt angeordnet sind. Die zweite Moduleinheit 322 und die vierte Moduleinheit 326 sind in der ersten Richtung 12 einander gegenüberliegend angeordnet, wobei die Spitzen der als gleichschenklige Dreiecke ausgebildeten Teile der zweiten und vierten Moduleinheit 322, 326 jeweils einander zugewandt an dem Mittelpunkt angeordnet sind.

Ein Schenkel des dreieckigen Teils der zweiten Moduleinheit 322 ist neben einem Schenkel des dreieckigen Teils der ersten Moduleinheit 320 angeordnet. Ein weiterer Schenkel des dreieckigen Teils der zweiten Moduleinheit 322 ist neben einem Schenkel des dreieckigen Teils der dritten Moduleinheit 324 angeordnet. Ein Schenkel des dreieckigen Teils der vierten Moduleinheit 326 ist neben einem weiteren Schenkel des dreieckigen Teils der ersten Moduleinheit 320 angeordnet. Ein weiterer Schenkel des dreieckigen Teils der vierten Moduleinheit 326 ist neben einem weiteren Schenkel des dreieckigen Teils der dritten Moduleinheit 324 angeordnet.

Die Moduleinheiten 320, 322, 324, 326 sind über Anschlussmittel 321, 323, 325, 327 elektrisch leitend miteinander verbunden. Zusätzlich können die Anschlussmittel 321, 323, 325, 327 dazu ausgebildet sein, die Moduleinheiten 320, 322, 324, 326 mechanisch aneinander zu befestigen. Ein erstes Anschlussmittel 321 verbindet die erste Moduleinheit 320 mit der zweiten Moduleinheit 322, ein zweites Anschlussmittel 323 verbindet die zweite Moduleinheit 322 mit der dritten Moduleinheit 324, ein drittes Anschlussmittel 325 verbindet die dritte Moduleinheit 324 mit der vierten Moduleinheit 326 und ein viertes Anschlussmittel 327 verbindet die vierte Moduleinheit 326 mit der ersten Moduleinheit 320. Bei alternativen, nicht dargestellten Ausführungsformen kann das Leistungsmodul 300 zwar kreuzförmig, aber einstückig aus einer einzelnen zusammenhängenden Platte und ohne die Moduleinheiten 320, 322, 324, 326 und Anschlussmittel 321, 323, 325, 327 ausgebildet sein.

Die Anschlussmittel 321, 323, 325, 327 sind jeweils an den Schenkeln der dreieckigen Teile der Moduleinheiten 320, 322, 324, 326 angeordnet. Die Anschlussmittel 321, 323, 325, 327 verbinden jeweils nebeneinander angeordnete Schenkel benachbarter Moduleinheiten 320, 322, 324, 326.

Die Anschlussmittel 321, 323, 325, 327 können als elektrische Steckverbinder ausgebildet sein, etwa als Leiterplattenverbinder. Die Anschlussmittel 321, 323, 325, 327 können insbesondere auch als einpressbare Leiterplattenverbinder ausgebildet sein. Die Anschlussmittel 321, 323, 325, 327 können beispielsweise auf der Unterseite der Moduleinheiten 320, 322, 324, 326 in in den Moduleinheiten 320, 322, 324, 326 ausgebildete Kontaktlöcher eingepresst sein. Insbesondere können die Anschlussmittel 321, 323, 325, 327 eine lötfreie elektrisch leitende Verbindung zwischen den Moduleinheiten 320, 322, 324, 326 bilden.

Die Moduleinheiten 320, 322, 324, 326 können, bis auf ein auf der ersten Moduleinheit 320 angeordnetes Koppelelement 1127, jeweils identisch ausgebildet sein. Insbesondere können die Moduleinheiten 320, 322, 324, 326 jeweils identische Abmessungen aufweisen und/oder ein identisches Leiterbahnenlayout, d.h. eine identische Leiteranordnung, aufweisen und/oder, abgesehen von dem Koppelelement 1127, identisch mit elektronischen Bauteilen bestückt sein. Insbesondere können eine Leiteranordnung der ersten Moduleinheit 320, eine Leiteranordnung der zweiten Moduleinheit 322, eine Leiteranordnung der dritten Moduleinheit 324 und eine Leiteranordnung der vierten Moduleinheit 326 jeweils identisch ausgebildet sein. Insbesondere können alle Moduleinheiten 320, 322, 324, 326 Anschlusskontakte, beispielsweise Lötkontakte, zum Anschließen des Koppelelements 1127 aufweisen, wobei lediglich die erste Moduleinheit 320 mit dem Koppelelement 1127 bestückt ist. Bei alternativen Ausführungsformen des Leistungsmoduls 300 kann das Koppelelement 1127 anstatt auf der ersten Moduleinheit 320 auch auf einer der anderen Moduleinheiten 322, 324, 326 angeordnet sein. Das Leistungsmodul 300 kann dazu ausgebildet sein, über das Koppelelement 1127 eine Versorgungsenergie zur Erzeugung der Antriebsströme für die Leiterstreifen 125, 126 der Statoreinheit 100 zugeführt zu bekommen.

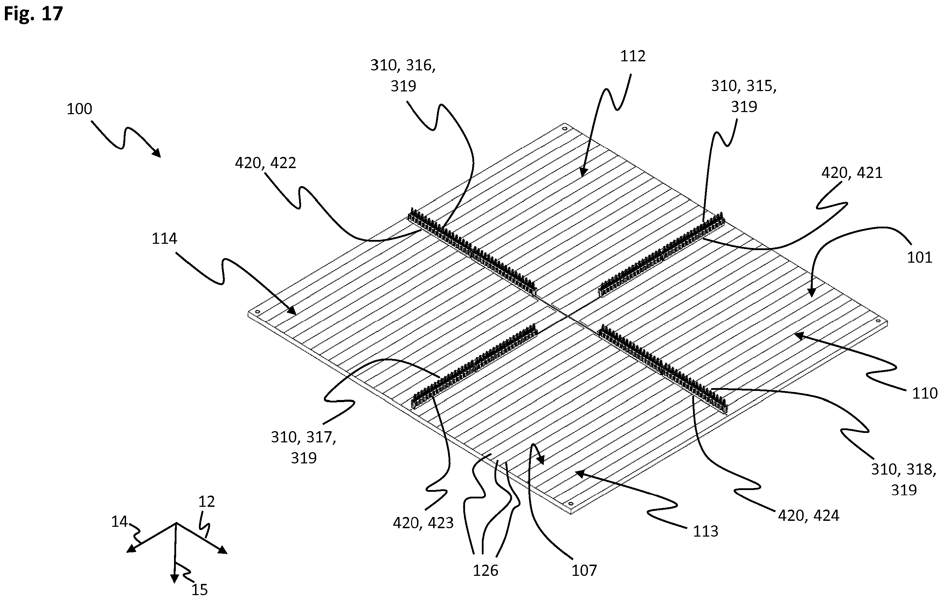

**Fig. 17** zeigt eine schematische perspektivische Darstellung der Unterseite der Statoreinheit 100. Die der Statorfläche 11 gegenüberliegende Bodenfläche 101 der Statoreinheit 100 ist eben ausgebildet. An der Bodenfläche 101 sind die weiteren Leiterstreifen 126 der vierten Statorlage 107 angeordnet. Die Statoreinheit 100 kann an ihrer Unterseite frei von elektronischen Bauelementen oder Komponenten sein. Die kreuzförmige Kontaktanordnung 420 ist von der Unterseite der Statoreinheit 100 aus kontaktierbar. Beispielsweise können die Kontakteinheiten 449, insbesondere Kontaktlöcher oder Vias, der Kontaktanordnung 420 an der Unterseite der Statoreinheit 100 freiliegen.

Die Statoreinheit 100 und das Leistungsmodul 300 sind bei dem Statormodul 10 über eine Verbindungsleitung 310 elektrisch leitend miteinander verbunden. Die Verbindungsleitung 310 führt von der Oberseite des Leistungsmoduls 300 auf die Unterseite und die Bodenfläche 101 der Statoreinheit 100.

Über die Verbindungsleitung 310 ist die Kontaktanordnung 420 der Statoreinheit 100 mit einer in Fig. 16 dargestellten Anschlussanordnung 309 des Leistungsmoduls 300 elektrisch leitend verbunden. Die Anschlussanordnung 309 des Leistungsmoduls 300 kann, wie die Kontaktanordnung 420 der Statoreinheit 100, kreuzförmig ausgebildet sein. Die Anschlussanordnung 309 des Leistungsmoduls 300 kann beispielsweise leitfähig beschichtete Durchgangsöffnungen oder leitfähig beschichtete Kontaktlöcher oder Vias umfassen. Die Kontaktlöcher der Anschlussanordnung 309 des Leistungsmoduls 300 können ausgebildet sein wie die Kontaktlöcher der Kontaktanordnung 420 der Statoreinheit 100. Die Kontaktlöcher der Anschlussanordnung 309 des Leistungsmoduls 300 können direkt unter den Kontaktlöchern der Kontaktanordnung 420 der Statoreinheit 100 angeordnet und zu den Kontaktlöchern der Kontaktanordnung 420 der Statoreinheit 100 fluchtend ausgerichtet sein, so dass jedem Kontaktloch in der Statoreinheit 100 ein mit dem betreffenden Kontaktloch in der Statoreinheit 100 ausgerichtetes Kontaktloch in dem Statormodul 300 gegenüberliegt und umgekehrt.

Wie in Fig. 16 dargestellt ist, ist die kreuzförmige Anschlussanordnung 309 des Leistungsmoduls 300 entlang der in der ersten Richtung 12 und der zweiten Richtung 14 verlaufenden Mittellinien des Leistungsmoduls 300 angeordnet. Insbesondere ist die kreuzförmige Anschlussanordnung 309 des Leistungsmoduls 300 mittig auf den Balken 301, 302 des kreuzförmig ausgebildeten Leistungsmoduls 300 angeordnet. Insbesondere umfasst das Leistungsmodul 300 eine erste Anschlussanordnung 311, die in der ersten Richtung 12 mittig auf dem entlang der zweiten Richtung 14 ausgerichteten zweiten Balken 302 des Leistungsmoduls 300 angeordnet ist, eine zweite Anschlussanordnung 312, die in der zweiten Richtung 14 mittig auf dem entlang der ersten Richtung 12 ausgerichteten ersten Balken 301 des Leistungsmoduls 300 angeordnet ist, eine dritte Anschlussanordnung 313, die in der ersten Richtung 12 mittig auf dem entlang der zweiten Richtung 14 ausgerichteten zweiten Balken 302 des Leistungsmoduls 300 und der ersten Anschlussanordnung 311 gegenüberliegend angeordnet ist, und eine vierte Anschlussanordnung 314, die in der zweiten Richtung 14 mittig auf dem entlang der ersten Richtung 12 ausgerichteten ersten Balken 301 des Leistungsmoduls 300 und der zweiten Anschlussanordnung 312 gegenüberliegend angeordnet ist.

Die erste Anschlussanordnung 311 kann allgemein auch als Anschlussanordnung 311 des Leistungsmoduls 300 und die vierte Anschlussanordnung 314 kann allgemein auch als weitere Anschlussanordnung 314 des Leistungsmoduls 300 bezeichnet werden.

Bei dem modular ausgebildeten Leistungsmodul 300 ist die erste Anschlussanordnung 311 auf der ersten Moduleinheit 320, die zweite Anschlussanordnung 312 auf der zweiten Moduleinheit 322, die dritte Anschlussanordnung 313 auf der dritten Moduleinheit 324 und die vierte Anschlussanordnung 314 auf der vierten Moduleinheit 326 des Leistungsmoduls 300 angeordnet. Die Anschlussanordnungen 311, 312, 313, 314 sind jeweils mittig auf den Moduleinheiten 320, 322, 324, 326, insbesondere mittig auf den rechteckigen Teilen der Moduleinheiten 320, 322, 324, 326 angeordnet.

In dem Statormodul 10 sind die erste Anschlussanordnung 311 des Leistungsmoduls 300 unterhalb der ersten Kontaktstruktur 421 der Statoreinheit 100, die zweite Anschlussanordnung 312 des Leistungsmoduls 300 unterhalb der zweiten Kontaktstruktur 422 der Statoreinheit 100, die dritte Anschlussanordnung 313 des Leistungsmoduls 300 unterhalb der dritten Kontaktstruktur 423 der Statoreinheit 100 und die vierte Anschlussanordnung 314 des Leistungsmoduls 300 unterhalb der vierten Kontaktstruktur 424 der Statoreinheit 100 angeordnet. Die Anschlussanordnungen 311, 312, 313, 314 des Leistungsmoduls 300 sind parallel zu der jeweils darüber liegenden Kontaktstruktur 421, 422, 423, 424 der Statoreinheit 100 ausgerichtet.

Die Verbindungsleitung 310 ist kreuzförmig ausgebildet. Die Verbindungsleitung 310 umfasst ein in Fig. 17 dargestelltes Kontaktmittel 319, über das die Anschlussanordnung 309 des Leistungsmoduls 300 elektrisch leitend mit der Kontaktanordnung 420 der Statoreinheit 100 verbunden ist. Das Kontaktmittel 319 kann, wie in Fig. 17 dargestellt ist, ein erstes Kontaktmittel 315, welches die erste Anschlussanordnung 311 des Leistungsmoduls 300 mit der ersten Kontaktstruktur 421, insbesondere mit der ersten Kontakteinheitengruppe 441 und der zweiten Kontakteinheitengruppe 442 der Statoreinheit 100, elektrisch leitend verbindet, ein zweites Kontaktmittel 316, welches die zweite Anschlussanordnung 312 des Leistungsmoduls 300 mit der zweiten Kontaktstruktur 422, insbesondere mit der siebten Kontakteinheitengruppe 447 und mit der achten Kontakteinheitengruppe 448 der Statoreinheit 100, elektrisch leitend verbindet, ein drittes Kontaktmittel 317, welches die dritte Anschlussanordnung 313 des Leistungsmoduls 300 mit der dritten Kontaktstruktur 423, insbesondere mit der fünften Kontakteinheitengruppe 445 und der sechsten Kontakteinheitengruppe 446 der Statoreinheit 100, elektrisch leitend verbindet, und ein viertes Kontaktmittel 318, welches die vierte Anschlussanordnung 314 des Leistungsmoduls 300 mit der vierten Kontaktstruktur 424, insbesondere mit der dritten Kontakteinheitengruppe 443 und der vierten Kontakteinheitengruppe 444 der Statoreinheit 100, elektrisch leitend verbindet, umfassen.

Die Verbindungsleitung 310 kann eine oder mehrere kreuzförmig angeordnete Stiftleisten umfassen. Insbesondere können die Kontaktmittel 315, 316, 317, 318, wie es in Fig. 17 dargestellt ist, jeweils eine oder mehrere Stiftleisten umfassen. Die Stiftleisten umfassen nebeneinander angeordnete elektrisch leitende Stifte, die als gerade, runde Zylinder ausgebildet sein können. Die Stifte sind in die Kontaktlöcher der Anschlussanordnung 309 des Leistungsmoduls 300 und in die gegenüberliegenden Kontaktlöcher der Kontaktanordnung 420 der Statoreinheit 100 eingreifend angeordnet, um eine elektrisch leitende Verbindung zwischen den Kontaktstrukturen 421, 422, 423, 424 und den Anschlussanordnungen 311, 312, 313, 314 herzustellen. Die Stiftleisten umfassenden Kontaktmittel 315, 316, 317, 318 können insbesondere als Einpressverbinder, d. h. Pressfitverbinder, ausgebildet sein, welche in die Kontaktlöcher in der Statoreinheit 100 und/oder in die Kontaktlöcher in dem Leistungsmodul 300 eingepresst sind.

Insbesondere kann jede Moduleinheit 320, 322, 324, 326 des Leistungsmoduls 300 über jeweils genau eines der Kontaktmittel 315, 316, 317, 318 mit genau einer der Kontaktstrukturen 421, 422, 423, 424 der Statoreinheit 100 elektrisch leitend verbunden sein. Die erste Moduleinheit 320 ist über das erste Kontaktmittel 315 mit der ersten Kontaktstruktur 421 der Statoreinheit 100, die zweite Moduleinheit 322 ist über das zweite Kontaktmittel 316 mit der zweiten Kontaktstruktur 422 der Statoreinheit 100, die dritte Moduleinheit 324 ist über das dritte Kontaktmittel 317 mit der dritten Kontaktstruktur 423 der Statoreinheit 100 und die vierte Moduleinheit 326 ist über das vierte Kontaktmittel 318 mit der vierten Kontaktstruktur 424 der Statoreinheit 100 verbunden.

Die erste Moduleinheit 320 ist über das erste Kontaktmittel 315 der Verbindungsleitung 310 mit den entlang der ersten Richtung 12 orientierten Leiterstreifen 125 des ersten und zweiten Statorsektors 110, 112 elektrisch leitend verbunden. Die zweite Moduleinheit 322 ist über das zweite Kontaktmittel 316 der Verbindungsleitung 310 mit den entlang der zweiten Richtung 14 orientierten weiteren Leiterstreifen 126 des zweiten und vierten Statorsektors 112, 114 elektrisch leitend verbunden. Die dritte Moduleinheit 324 ist über das dritte Kontaktmittel 317 der Verbindungsleitung 310 mit den entlang der ersten Richtung 12 orientierten Leiterstreifen 125 des dritten und vierten Statorsektors 113, 114 elektrisch leitend verbunden. Die vierte Moduleinheit 326 ist über das vierte Kontaktmittel 318 der Verbindungsleitung 310 mit den entlang der zweiten Richtung 14 orientierten weiteren Leiterstreifen 126 des ersten und dritten Statorsektors 110, 113 elektrisch leitend verbunden.

Sind die Kontaktmittel 319 zur Verbindung der Kontaktstrukturen 421, 422, 423, 424 der Statoreinheit 100 mit den Anschlussanordnungen 311, 312, 313, 314 als Pressfitverbinder ausgebildet, so können die Kontaktstrukturen 421, 422, 423, 424 der Statoreinheit 100 jeweils derart beabstandet von dem Zentrumsbereich 460 der Statoreinheit 100 angeordnet sein, dass bei einem Verpressen einer der Moduleinheiten 420, 422, 424, 426 mit der Statoreinheit 100 eine Belastung der weiteren Moduleinheiten 420, 422, 424, 426 durch ein neben den Anschlussanordnungen 311, 312, 313, 314 angeordnetes Presswerkzeug verhindert wird.

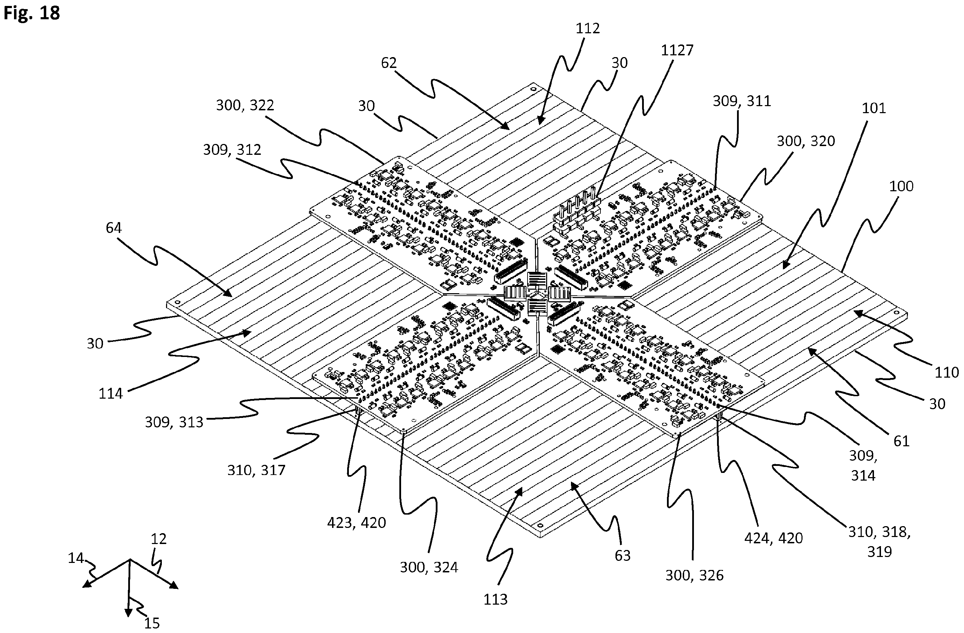

**Fig. 18** zeigt eine schematische perspektivische Darstellung der Unterseite des Leistungsmoduls 300 und der Unterseite der Statoreinheit 100, wobei das Leistungsmodul 300 mit der Statoreinheit 100 über die Verbindungsleitung 310 verbunden ist. In Fig. 18 sind die an der Unterseite des Leistungsmoduls 300 angeordneten elektronischen Komponenten dargestellt.

Die Verbindungsleitung 310 kann als eine mechanisch feste oder starre Verbindung zwischen dem Leistungsmodul 300 und der Statoreinheit 100 ausgebildet sein. Zugleich kann die Verbindungsleitung 310 elastisch genug ausgebildet sein, um unterschiedliche thermische Ausdehnung, insbesondere aufgrund unterschiedlicher thermischer Ausdehnungskoeffizienten, von Statoreinheit 100 und Leistungsmodul 300 ohne Verlust der elektrischen Kontaktierung auszugleichen. Eine mechanisch feste und starre Verbindung bei gleichzeitigem Ausgleich unterschiedlicher thermischer Ausdehnungen kann unter anderem erreicht werden, wenn die Verbindungsleitung 310 Kontaktmittel 315, 316, 317, 318 aufweist, die Stiftleisten oder Einpressverbinder umfassen.

Die Statoreinheit 100 und das Leistungsmodul 300 können in der vertikalen Richtung 15 in einem festgelegten Abstand voneinander angeordnet sein und die Verbindungsleitung 310 kann dazu ausgebildet sein, die Statoreinheit 100 und das Leistungsmodul 300 über den Abstand hinweg elektrisch leitend zu verbinden. Der Abstand kann derart bemessen sein, dass zwischen der Statoreinheit 100 und dem Leistungsmodul 300 ausreichend Bauraum für auf einer Oberseite des Leistungsmoduls 300 angeordnete elektronische Komponenten verfügbar ist. Einen derart bemessenen Abstand stellt insbesondere die Verbindungsleitung 310 mit als Stiftleisten oder Einpressverbindern ausgebildeten Kontaktmitteln 315, 316, 317, 318 bereit. Der Abstand kann alternativ oder zusätzlich derart bemessen sein, dass eine elektromagnetische Kopplung zwischen den Leiterstreifen 125, 126 der Statoreinheit 100 und Leiterflächen oder Leiterbahnen auf dem Leistungsmodul 300 minimiert wird. Dies ist unter anderem bei der Verbindungsleitung 310 mit als Stiftleisten oder Einpressverbindern ausgebildeten Kontaktmitteln 315, 316, 317, 318 der Fall. Der Abstand kann beispielsweise zwischen 2mm und 10mm, insbesondere 5mm betragen.

Bei alternativen, nicht dargestellten Ausführungsformen des Statormoduls 10 kann das Kontaktmittel 319 auch einen elektrischen Steckverbinder oder mehrere elektrische Steckverbinder umfassen, welche die Anschlussanordnung 309 des Leistungsmoduls 300 und die Kontaktanordnung 420 der Statoreinheit 100 elektrisch leitend verbinden. Auch Kontaktmittel 315, 316, 317, 318 mit elektrischen Steckverbindern können dazu ausgebildet sein, die Statoreinheit 100 und das Leistungsmodul 300 über den für die Anordnung elektronischer Komponenten benötigten Abstand hinweg zu verbinden und/oder eine für den Ausgleich unterschiedlicher thermischer Ausdehnungen benötigte Elastizität aufzuweisen und/oder eine mechanisch feste Verbindung zwischen Statoreinheit 100 und Leistungsmodul 300 herzustellen. Bei weiteren alternativen Ausführungsformen des Statormoduls 10 kann das Kontaktmittel 319 auch als eine Lötverbindung ausgebildet sein, wobei die Anschlussanordnung 309 des Leistungsmoduls 300 und die Kontaktanordnung 420 der Statoreinheit 100 als Lötkontaktflächen ausgebildet und über die Lötverbindung elektrisch leitend verbunden sind.

Wie in Fig. 18 dargestellt ist, überdeckt das kreuzförmige Leistungsmodul 300 die Bodenfläche 101 der Statoreinheit 100 im Bereich der kreuzförmigen Kontaktanordnung 420 der Statoreinheit 100. Insbesondere überdeckt das Leistungsmodul 300 die Kontaktanordnung 420 selbst. Über dem ersten Statorsektor 110 ist ein erster Freiraum 61 ausgebildet. Zusätzlich können, wie in Fig. 18 dargestellt ist, über dem zweiten Statorsektor 112 ein zweiter Freiraum 62, über dem dritten Statorsektor 113 ein dritter Freiraum 63 und über dem vierten Statorsektor 114 ein vierter Freiraum 64 ausgebildet sein. An den Freiräumen 61, 62, 63, 64 wird die Bodenfläche 101 der Statoreinheit 100 nicht durch das Leistungsmodul 300 überdeckt, liegt also frei, und die Bodenfläche 101 der Statoreinheit 100 ist an den Freiräumen 61, 62, 63, 64 von der Unterseite des Leistungsmoduls 300 aus zugänglich.

In den Freiräumen 61, 62, 63, 64 können mehr als 30% der Bodenfläche 101 der Statoreinheit 100 von der Unterseite des Leistungsmoduls 300 aus zugänglich sein. Insbesondere können mehr als 40%, mehr als 50%, insbesondere 52% bis 60%, insbesondere 56% der Bodenfläche 101 der Statoreinheit 100 in den Freiräumen 61, 62, 63, 64 zugänglich sein. Die erste und dritte Moduleinheit 320, 324 können in der ersten Richtung 12 jeweils eine Ausdehnung von 30mm bis 120mm, insbesondere von 40mm bis 80mm, insbesondere von 60mm aufweisen. Die zweite und vierte Moduleinheit 322, 326 können in der zweiten Richtung 14 jeweils eine Ausdehnung von 30mm bis 120mm, insbesondere von 40mm bis 80mm, insbesondere von 60mm aufweisen.

Die Freiräume 61, 62, 63, 64 sind über den Statorsektoren 110, 112, 113, 114 jeweils in Eckbereichen der rechteckigen Statoreinheit 100 angeordnet, wobei die Eckbereiche jeweils an die entlang der ersten Richtung 12 und an die entlang der zweiten Richtung 14 verlaufenden Außenkanten 30 der Statoreinheit 100 angrenzen. Die Freiräume 61, 62, 63, 64 sind rechteckig ausgebildet und erstrecken sich in der ersten und zweiten Richtung 12, 14 jeweils zwischen einer der Außenkanten 30 der Statoreinheit 100 und einer Außenkante des Leistungsmoduls 300.

Der erste Freiraum 61 grenzt an die erste Moduleinheit 320 und an die vierte Moduleinheit 326 an. Der erste Freiraum 61 befindet sich oder erstreckt sich in der ersten Richtung 12 zwischen der ersten Moduleinheit 320 und einer entlang der zweiten Richtung 14 verlaufenden Außenkante 30 der Statorfläche 11 und in der zweiten Richtung 14 zwischen der vierten Moduleinheit 326 und einer entlang der ersten Richtung 12 verlaufenden Außenkante 30 der Statorfläche 11. Der zweite Freiraum 62 grenzt an die erste Moduleinheit 320 und an die zweite Moduleinheit 322 an. Der zweite Freiraum 62 befindet sich oder erstreckt sich in der ersten Richtung 12 zwischen der ersten Moduleinheit 320 und einer entlang der zweiten Richtung 14 verlaufenden Außenkante 30 der Statorfläche 11 und in der zweiten Richtung 14 zwischen der zweiten Moduleinheit 322 und einer entlang der ersten Richtung 12 verlaufenden Außenkante 30 der Statorfläche 11.

Der dritte Freiraum 63 grenzt an die dritte Moduleinheit 324 und an die vierte Moduleinheit 326 an. Der dritte Freiraum 63 befindet sich oder erstreckt sich in der ersten Richtung 12 zwischen der dritten Moduleinheit 324 und einer entlang der zweiten Richtung 14 verlaufenden Außenkante 30 der Statorfläche 11 und in der zweiten Richtung 14 zwischen der vierten Moduleinheit 326 und einer entlang der ersten Richtung 12 verlaufenden Außenkante 30 der Statorfläche 11. Der vierte Freiraum 64 grenzt an die zweite Moduleinheit 322 und an die dritte Moduleinheit 324 an. Der vierte Freiraum 64 befindet sich oder erstreckt sich in der ersten Richtung 12 zwischen der dritten Moduleinheit 324 und einer entlang der zweiten Richtung 14 verlaufenden Außenkante 30 der Statorfläche 11 und in der zweiten Richtung 14 zwischen der zweiten Moduleinheit 322 und einer entlang der ersten Richtung 12 verlaufenden Außenkante 30 der Statorfläche 11.

Der erste Freiraum 61, der zweite Freiraum 62, der dritte Freiraum 63 und/oder der vierte Freiraum 64 können in der ersten Richtung 12 eine Ausdehnung aufweisen, die größer ist als eine Ausdehnung des zweiten Balkens 302 des Leistungsmoduls 300 in der ersten Richtung 12. Der erste Freiraum 61, der zweite Freiraum 62, der dritte Freiraum 63 und/oder der vierte Freiraum 64 können in der zweiten Richtung 14 eine Ausdehnung aufweisen, die größer ist als eine Ausdehnung des ersten Balkens 301 des Leistungsmoduls 300 in der zweiten Richtung 14.

Die Balken 301, 302 des Leistungsmoduls 300 sind jeweils von den Außenkanten 30 der Statoreinheit 100 beabstandet angeordnet. Insbesondere ist der erste Balken 301 in der ersten Richtung 12 von den entlang der zweiten Richtung 14 ausgerichteten Außenkanten 30 der Statoreinheit 100 beabstandet angeordnet und der zweite Balken 302 ist in der zweiten Richtung 14 von den entlang der ersten Richtung 12 verlaufenden Außenkanten 30 der Statoreinheit 100 beabstandet angeordnet. Dadurch kann die Statoreinheit 100 derart auf der Oberseite des Modulgehäuses 19 des Statormoduls 10 angeordnet werden, dass die Außenkanten 30 der Statoreinheit 100 in der vertikalen Richtung 15 in einer Ebene mit den Seitenflächen 34 des Modulgehäuses 19 angeordnet sind, und gleichzeitig kann das Leistungsmodul 300 in der ersten und zweiten Richtung 12, 14 von einem an den Seitenflächen 34 des Modulgehäuses 19 umlaufenden Rand umschlossen werden.

Die Verbindungsleitung 310 kann als eine mechanisch starre Verbindung zwischen dem Leistungsmodul 300 und der Statoreinheit 100 ausgebildet sein. Alternativ kann die Verbindungsleitungen 310 auch als eine mechanisch flexible Verbindung mit einer flexiblen Leitung, beispielsweise mittels eines Kabels, ausbildet sein.

Das in den Fig. 16 und 18 dargestellte Leistungsmodul 300 ist modular aus den insgesamt vier Moduleinheiten 320, 322, 324, 326 zusammengesetzt. Gegenüber einer einstückigen, kreuzförmigen Ausführung des Leistungsmoduls 300 entsteht in Bezug auf die Platine oder Leiterplatte des Leistungsmoduls 300 bei der in den Fig. 16 und 18 dargestellten modularen Ausführungsform des Leistungsmoduls 300 weniger Verschnitt bei der Herstellung der vier Moduleinheiten 320, 322, 324, 326. Außerdem können die Kontaktmittel 319 jeweils als Pressfitverbinder ausgeführt werden und bei der Ausbildung der Verbindungsleitung 310 jeweils einzeln und nacheinander mit der betreffenden Moduleinheit 320, 322, 324, 326 und der Statoreinheit 100 verpresst werden. Dadurch kann während des Verpressens ein Verkanten der Kontaktmittel 319, wie es bei einem gleichzeitigen Verpressen mehrerer Kontaktmittel 315, 316, 317, 318 leicht auftreten kann, vermieden werden.

Das Leistungsmodul 300 weist eine Stromerzeugungseinheit auf, die dazu ausgebildet ist, den den Läufer 200 antreibenden Antriebsstrom aus einer über das Koppelelement 1127 bereitgestellten Antriebsenergie zu erzeugen. Die Stromerzeugungseinheit ist dazu ausgebildet, aus der über das Koppelelement 1127 bereitgestellten Antriebsenergie einen als Wechselstrom an die Leiterstreifen 125, 126 angelegten Antriebsstrom zu erzeugen. Die Stromerzeugungseinheit kann dazu ausgebildet sein, den Antriebsstrom als einen gepulsten Antriebsstrom, insbesondere als einen pulsweitenmodulierten Antriebsstrom bereitzustellen. Zur Erzeugung des Antriebsstroms kann die Stromerzeugungseinheit Schalteinheiten, insbesondere Transistoren, umfassen.

Das Leistungsmodul 300 kann neben der Stromerzeugungseinheit noch weitere Stromerzeugungseinheiten aufweisen. Das Leistungsmodul 300 kann dazu ausgebildet sein, für jeden über die Kontakteinheiten 449 einzeln bestrombaren Leiterstreifen 125, 126 jeweils einen separaten Antriebsstrom zu erzeugen. Insbesondere kann das Leistungsmodul 300 für jeden einzeln zu bestromenden Leiterstreifen 125, 126 jeweils eine eigene Stromerzeugungseinheit aufweisen. Beispielsweise kann das Leistungsmodul 300 für jede einzelne Phase der Mehrphasensysteme der Statoreinheit 100 jeweils eine separate Stromerzeugungseinheit aufweisen, um als Antriebsstrom einen Phasenstrom für die entsprechende Phase zu erzeugen. Beispielsweise kann das Leistungsmodul 300 für jede der drei Phasen eines Dreiphasensystems aus zusammengeschalteten Leiterstreifen 125, 126 je eine Stromerzeugungseinheit aufweisen. Die Stromerzeugungseinheiten können als elektronische Bauteile, insbesondere als integrierte Schaltungen, ausgebildet sein, welche auf der Leiterplatte oder den Leiterplatten des Leistungsmoduls 300 angeordnet sind.

Jeder Statorsektor 110, 112, 113, 114 kann jeweils eine erste Anzahl von Mehrphasensystemen umfassen, deren Leiterstreifen 125 entlang der ersten Richtung 12 ausgedehnt sind, und eine zweite Anzahl von Mehrphasensystemen umfassen, deren weitere Leiterstreifen126 entlang der zweiten Richtung 14 ausgedehnt sind. Die erste und zweite Anzahl kann gleich sein. Die Mehrphasensysteme können jeweils eine dritte Anzahl einzelner Phasen umfassen. Das Leistungsmodul 300 kann für jede der einzelnen Phasen der Mehrphasensysteme jeweils eine Stromerzeugungseinheit umfassen. Insgesamt kann das Leistungsmodul 300 also pro Statorsektor 110, 112, 113, 114 eine Gesamtzahl von Stromerzeugungseinheiten umfassen, die der Summe aus dem Produkt der ersten und dritten Anzahl und dem Produkt der zweiten und dritten Anzahl entspricht.

Die Leiterstreifen 125, 126 der Statoreinheit 100 können beispielsweise insgesamt zu vierundzwanzig Dreiphasensystemen zusammengeschaltet sein, wobei jeder Statorsektor 110, 112, 113, 114 jeweils sechs Dreiphasensysteme umfasst. Von den sechs Dreiphasensystemen eines Sektors 110, 112, 113, 114 können jeweils drei aus in der ersten Richtung 12 ausgedehnten Leiterstreifen 125 und jeweils drei aus in der zweiten Richtung 14 ausgedehnten weiteren Leiterstreifen 126 bestehen. Bei einer Statoreinheit 100 mit vierundzwanzig Dreiphasensystemen kann das Leistungsmodul 300 zweiundsiebzig Stromerzeugungseinheiten zur Erzeugung von zweiundsiebzig Antriebs- bzw. Phasenströmen umfassen.

Die Moduleinheiten 320, 322, 324, 326 umfassen jeweils alle Stromerzeugungseinheiten, die für die Erzeugung der Antriebsströme für die mit der jeweiligen Moduleinheit 320, 322, 324, 326 verbundenen Leiterstreifen 125, 126 notwendig sind. Die erste Moduleinheit 320 umfasst alle Stromerzeugungseinheiten, die die Antriebsströme in den entlang der ersten Richtung 12 ausgerichteten Leiterstreifen 125 des ersten und zweiten Statorsektors 110, 112 erzeugen. Die zweite Moduleinheit 322 umfasst alle Stromerzeugungseinheiten, die die Antriebsströme in den entlang der zweiten Richtung 14 ausgerichteten weiteren Leiterstreifen 126 des zweiten und vierten Statorsektors 112, 114 erzeugen. Die dritte Moduleinheit 324 umfasst alle Stromerzeugungseinheiten, die die Antriebsströme in den entlang der ersten Richtung 12 ausgerichteten Leiterstreifen 125 des dritten und vierten Statorsektors 113, 114 erzeugen. Die vierte Moduleinheit 326 umfasst alle Stromerzeugungseinheiten, die die Antriebsströme in den entlang der zweiten Richtung 14 ausgerichteten weiteren Leiterstreifen 126 des ersten und dritten Statorsektors 110, 113 erzeugen.

Jede der vier Moduleinheiten 320, 322, 324, 326 kann jeweils eine Gesamtzahl von Stromerzeugungseinheiten umfassen, die dem Doppelten des Produkts aus der ersten Anzahl von Mehrphasensystemen mit entlang der zweiten Richtung 14 ausgedehnten weiteren Leiterstreifen 126 und der dritten Anzahl von einzelnen Phasen pro Mehrphasensystem oder dem Doppelten des Produkts aus der zweiten Anzahl von Mehrphasensystemen mit entlang der ersten Richtung 12 ausgedehnten Leiterstreifen 125 und der dritten Anzahl von einzelnen Phasen pro Mehrphasensystem entspricht.

Jede der Moduleinheiten 320, 322, 324, 326 kann jeweils achtzehn Stromerzeugungseinheiten zur Erzeugung von achtzehn Antriebsströmen umfassen. Die achtzehn Antriebsströme können als je drei Phasen von sechs Dreiphasensystemen erzeugt werden.

Die Stromerzeugungseinheiten sind zur Übertragung der Antriebsströme über Antriebsstromleitungen mit den Leiterstreifen 125, 126 der Statoreinheit 100 verbunden. Die Antriebsstromleitungen sind als Teil der Verbindungsleitung 310 ausgeführt. Die Antriebsstromleitungen sind jeweils über die Kontaktmittel 319 der Verbindungsleitung 310 geführt. Die Stromerzeugungseinheiten der ersten Moduleinheit 320 sind über die in dem ersten Kontaktmittel 315 geführten Antriebsstromleitungen mit den in der ersten Richtung 12 orientierten Leiterstreifen 125 des ersten und zweiten Statorsektors 110, 112 verbunden. Die Stromerzeugungseinheiten der zweiten Moduleinheit 322 sind über die in dem zweiten Kontaktmittel 316 geführten Antriebsstromleitungen mit den in der zweiten Richtung 14 orientierten weiteren Leiterstreifen 126 des zweiten und vierten Statorsektors 112, 114 verbunden. Die Stromerzeugungseinheiten der dritten Moduleinheit 324 sind über die in dem dritten Kontaktmittel 317 geführten Antriebsstromleitungen mit den in der ersten Richtung 12 orientierten Leiterstreifen 125 des dritten und vierten Statorsektors 113, 114 verbunden. Die Stromerzeugungseinheiten der vierten Moduleinheit 326 sind über die in dem vierten Kontaktmittel 318 geführten Antriebsstromleitungen mit den in der zweiten Richtung 14 orientierten weiteren Leiterstreifen 126 des ersten und dritten Statorsektors 110, 113 verbunden.

Das Statormodul 2 kann dazu ausgebildet sein, Antriebsströme mit einer Stromstärke von mehr als 5A, insbesondere von mehr als 10A zu erzeugen. Die Stromstärke der Antriebsströme kann beispielsweise 20A oder 16A oder 15A im Dauerbetrieb betragen. Bei einem eine Leiterplatte umfassenden Leistungsmodul 300 kann eine Metallisierungsdicke der den Antriebsstrom führenden Leiterbahnen 35pm bis 200µm, insbesondere 50pm bis 100µm, insbesondere 70pm betragen. Insbesondere kann eine, mehrere oder alle Leiterbahnlagen des Leistungsmoduls 300 die gleiche Metallisierungsdicke wie die den Antriebsstrom führenden Leiterbahnen aufweisen.

Bei dem Statormodul 10 sind die durch das Leistungsmodul 300 und die Statoreinheit 100 gebildeten Einzelmodule jeweils als flache in der ersten und zweiten Richtung 12, 14 ausgedehnte Platten ausgebildet. Indem die plattenförmigen Einzelmodule in der vertikalen Richtung 15 übereinander angeordnet sind, kann eine besonders flache Bauform des Statormoduls 10 realisiert werden.

Bei dem Statormodul 10 ist das Leistungsmodul 300 derart bemessen und ausgeformt, dass sich das Leistungsmodul 300 weder in der ersten Richtung 12, noch in der zweiten Richtung 14 vollständig über die gesamte Breite des Statormoduls 10 erstreckt und in der ersten und zweiten Richtung 12, 14 die gesamte Querschnittsfläche des Statormoduls 10 abdeckt. Die lediglich unvollständige Abdeckung der Querschnittsfläche kann bei dem Leistungsmodul 300 durch dessen kreuzförmige Form und die aus der kreuzförmigen Form resultierenden Freiräume 61, 62, 63, 64 erreicht werden.

Die lediglich unvollständige Abdeckung der Querschnittsflächen des Statormoduls 10 in der Ebene des Leistungsmoduls 300 ermöglicht es, eine wärmleitende Verbindung zwischen der Bodenfläche 101 der Statoreinheit 100 und einer Auflagefläche an der Unterseite 9 des Statormoduls 10 zu realisieren. Die wärmeleitende Verbindung kann dabei über großflächige Kontaktflächen hergestellt sein.

### Bezugszeichenliste

- 1: Planarantriebssystem
- 3: weiteres Planarantriebssystem
- 8: Oberseite
- 9: Unterseite
- 10: Statormodul
- 11: Statorfläche
- 12: erste Richtung
- 14: zweite Richtung
- 15: vertikale Richtung
- 18: Anschlussleitung
- 19: Modulgehäuse
- 30: Außenkante der Statorfläche
- 32: Seitenfläche der Statoreinheit
- 34: Seitenfläche des Modulgehäuses
- 36: Seitenfläche des Statormoduls
- 41: erste Außenkante der Statorfläche
- 42: zweite Außenkante der Statorfläche
- 43: dritte Außenkante der Statorfläche
- 44: vierte Außenkante der Statorfläche
- 61: erster Freiraum
- 62: zweiter Freiraum
- 63: dritter Freiraum
- 64: vierter Freiraum
- 100: Statoreinheit
- 101: Bodenfläche
- 104: erste Statorlage
- 105: zweite Statorlage
- 106: dritte Statorlage
- 107: vierte Statorlage
- 109: Anschlussstatorlage
- 110: erster Statorsektor
- 112: zweiter Statorsektor
- 113: dritter Statorsektor
- 114: vierter Statorsektor
- 117: erste Mittellinie
- 118: zweite Mittellinie
- 119: Kreuzungspunkt
- 120: erste Statorsegmente
- 121: zweite Statorsegmente
- 122: innenliegendes Statorsegment
- 125: Leiterstreifen
- 126: weitere Leiterstreifen
- 127: innenliegender Leiterstreifen
- 131: erster Hinleiter
- 132: erster Rückleiter
- 141: zweiter Hinleiter
- 142: zweiter Rückleiter
- 146: dritter Hinleiter
- 147: dritter Rückleiter
- 150: erste Dreiphasensysteme
- 151: zweite Dreiphasensysteme
- 152: erste Seite
- 153: erste Seite
- 154: erster Anschlusspunkt
- 155: zweiter Anschlusspunkt
- 156: dritter Anschlusspunkt
- 157: Sternpunkt
- 161: erste Außenkante
- 162: zweite Außenkante
- 163: erste Innenkante
- 164: zweite Innenkante
- 171: erste Außenkante
- 172: zweite Außenkante
- 173: erste Innenkante
- 174: zweite Innenkante
- 181: erste Außenkante
- 182: zweite Außenkante
- 183: erste Innenkante
- 184: zweite Innenkante
- 191: erste Außenkante
- 192: zweite Außenkante
- 193: erste Innenkante
- 194: zweite Innenkante
- 200: Läufer
- 201: Magnetanordnung
- 206: erste Läuferrichtung
- 208: zweite Läuferrichtung
- 210: erste Magneteinheit
- 211: Antriebsmagnet
- 220: zweite Magneteinheit
- 221: weiterer Antriebsmagnet
- 230: dritte Magneteinheit
- 240: vierte Magneteinheit
- 300: Leistungsmodul
- 301: erster Balken
- 302: zweiter Balken
- 309: Anschlussanordnung
- 310: Verbindungsleitung
- 311: erste Anschlussanordnung
- 312: zweite Anschlussanordnung
- 313: dritte Anschlussanordnung
- 314: vierte Anschlussanordnung
- 315: erstes Kontaktmittel
- 316: zweites Kontaktmittel
- 317: drittes Kontaktmittel
- 318: viertes Kontaktmittel
- 319: Kontaktmittel
- 320: erste Moduleinheit
- 321: erstes Anschlussmittel
- 322: zweite Moduleinheit
- 323: zweites Anschlussmittel
- 324: dritte Moduleinheit
- 325: drittes Anschlussmittel
- 326: vierte Moduleinheit
- 327: viertes Anschlussmittel
- 420: Kontaktanordnung
- 421: erste Kontaktstruktur
- 422: zweite Kontaktstruktur
- 423: dritte Kontaktstruktur
- 424: vierte Kontaktstruktur
- 441: erste Kontakteinheitengruppe
- 442: zweite Kontakteinheitengruppe
- 443: dritte Kontakteinheitengruppe
- 444: vierte Kontakteinheitengruppe
- 445: fünfte Kontakteinheitengruppe
- 446: sechste Kontakteinheitengruppe
- 447: siebte Kontakteinheitengruppe
- 448: achte Kontakteinheitengruppe
- 449: Kontakteinheit
- 460: Zentrumsbereich
- 471: erste Kontakteinheiten
- 472: zweite Kontakteinheiten
- 473: dritte Kontakteinheiten
- 474: vierte Kontakteinheiten
- 475: fünfte Kontakteinheiten
- 476: sechste Kontakteinheiten
- 477: siebte Kontakteinheiten
- 478: achte Kontakteinheiten
- 479: neunte Kontakteinheiten
- 480: zehnte Kontakteinheiten
- 481: elfte Kontakteinheiten
- 482: zwölfte Kontakteinheiten
- 483: dreizehnte Kontakteinheiten
- 484: vierzehnte Kontakteinheiten
- 485: fünfzehnte Kontakteinheiten
- 486: sechzehnte Kontakteinheiten
- 487: siebzehnte Kontakteinheiten
- 488: achtzehnte Kontakteinheiten
- 601: Horizontalverbindungsstruktur
- 602: Vertikalverbindungsstruktur
- 603: weitere Vertikalverbindungsstruktur
- 700: erste weitere Statoreinheit
- 702: zweite weitere Statoreinheit
- 1127: Koppelelement

## Patentansprüche

1. Statormodul (10) mit einer Statoreinheit (100) zum Antreiben eines Läufers (200) eines elektrischen Planarantriebssystems (1),
wobei die Statoreinheit (100) einen ersten Statorsektor (110) und einen zweiten Statorsektor (112) umfasst,
wobei der erste Statorsektor (110) in einer Statorlage (104, 106) der Statoreinheit (100) entlang einer ersten Richtung (12) länglich ausgedehnte und entlang einer zu der ersten Richtung (12) senkrecht orientierten zweiten Richtung (14) nebeneinander angeordnete Leiterstreifen (125) zur Wechselwirkung mit Antriebsmagneten (211, 221) des Läufers (200) umfasst,
wobei der zweite Statorsektor (112) in der Statorlage (104, 106) entlang der ersten Richtung (12) länglich ausgedehnte und entlang der zweiten Richtung (14) nebeneinander angeordnete Leiterstreifen (125) zur Wechselwirkung mit den Antriebsmagneten (211, 221) des Läufers (200) umfasst,
wobei der erste Statorsektor (110) in der ersten Richtung (12) angrenzend an den zweiten Statorsektor (112) angeordnet ist,
wobei die Statoreinheit (100) eine Kontaktstruktur (421) aufweist,
wobei die Kontaktstruktur (421) eine erste Kontakteinheitengruppe (441) und eine zweite Kontakteinheitengruppe (442) umfasst,
wobei die erste Kontakteinheitengruppe (441) mit den Leiterstreifen (125) des ersten Statorsektors (110) elektrisch leitend verbunden ist und wobei die zweite Kontakteinheitengruppe (442) mit den Leiterstreifen (125) des zweiten Statorsektors (112) elektrisch leitend verbunden ist,
**dadurch gekennzeichnet, dass**
sich eine Statorfläche (11) über die gesamte Oberseite (8) der Statoreinheit (100) erstreckt und eine Oberfläche der Statoreinheit (100) bildet,
wobei der erste Statorsektor (110) und der zweite Statorsektor (112) an den Außenseiten bündig mit der Statorfläche (11) abschließen und im Inneren der Statoreinheit (100) aneinander anschließend angeordnet sind,
wobei die Kontaktstruktur (421) an einer Innenkante (163) des ersten Statorsektors (110) und an einer Innenkante (173) des zweiten Statorsektors (112) angeordnet und Teil einer Kontaktanordnung (420) ist, wobei die Innenkante (163) des ersten Statorsektors (110) und die Innenkante (173) des zweiten Statorsektors (112) aneinander anliegend zwischen dem ersten Statorsektor (110) und dem zweiten Statorsektor (112) angeordnet sind und die Kontaktanordnung (420) von der Unterseite (9) der Statoreinheit (100) aus kontaktierbar ist.

2. Statormodul (10) gemäß Anspruch 1,
wobei die erste Kontakteinheitengruppe (441) und die zweite Kontakteinheitengruppe (442) der Kontaktstruktur (421) entlang der zweiten Richtung (14) in einer Reihe nebeneinander angeordnet sind.

3. Statormodul (10) gemäß einem der vorhergehenden Ansprüche,
wobei die Kontaktstruktur (421) auf einer zwischen dem ersten Statorsektor (110) und dem zweiten Statorsektor (112) entlang der zweiten Richtung (14) verlaufenden Mittellinie (118) der Statoreinheit (100) angeordnet ist.

4. Statormodul (10) gemäß einem der vorhergehenden Ansprüche,
wobei die Statoreinheit (100) einen dritten Statorsektor (113) umfasst,
wobei der dritte Statorsektor (113) in der zweiten Richtung (14) angrenzend an den ersten Statorsektor (110) angeordnet ist,
wobei der dritte Statorsektor (113) in der Statorlage (104, 106) entlang der zweiten Richtung (14) nebeneinander angeordnete und entlang der ersten Richtung (12) länglich ausgedehnte Leiterstreifen (125) zur Wechselwirkung mit den Antriebsmagneten (211, 221) des Läufers (200) umfasst,
wobei der erste Statorsektor (110), der zweite Statorsektor (112) und der dritte Statorsektor (113) in einer weiteren Statorlage (105) entlang der ersten Richtung (12) nebeneinander angeordnete und entlang der zweiten Richtung (14) länglich ausgedehnte weitere Leiterstreifen (126) zur Wechselwirkung mit weiteren Antriebsmagneten (211, 221) des Läufers (200) umfassen,
wobei die weitere Statorlage (105) in einer zu der ersten Richtung (12) und zu der zweiten Richtung (14) senkrecht orientierten dritten Richtung (15) unter der Statorlage (104, 106) angeordnet ist,
wobei die Statoreinheit (100) eine weitere Kontaktstruktur (424) mit einer dritten Kontakteinheitengruppe (443) und mit einer vierten Kontakteinheitengruppe (444) umfasst,
wobei die dritte Kontakteinheitengruppe (443) mit den weiteren Leiterstreifen (126) des ersten Statorsektors (110) elektrisch leitend verbunden ist und wobei die vierte Kontakteinheitengruppe (444) mit den weiteren Leiterstreifen (126) des dritten Statorsektors (113) elektrisch leitend verbunden ist,
wobei die weitere Kontaktstruktur (424) an einer weiteren Innenkante (164) des ersten Statorsektors (110) und an einer Innenkante (184) des dritten Statorsektors (113) angeordnet ist,
wobei die weitere Innenkante (164) des ersten Statorsektors (110) und die Innenkante (184) des dritten Statorsektors (113) aneinander anliegend zwischen dem ersten Statorsektor (110) und dem dritten Statorsektor (113) angeordnet sind.

5. Statormodul (10) gemäß Anspruch 4 mit einem vierten Statorsektor (114),
wobei der vierte Statorsektor (114) in der zweiten Richtung (14) angrenzend an den zweiten Statorsektor (112) angeordnet ist,
wobei der dritte Statorsektor (113) in der ersten Richtung (12) angrenzend an den vierten Statorsektor (114) angeordnet ist,
wobei der vierte Statorsektor (114) in der Statorlage (104, 106) entlang der zweiten Richtung (14) nebeneinander angeordnete und entlang der ersten Richtung (12) länglich ausgedehnte Leiterstreifen (125) zur Wechselwirkung mit den Antriebsmagneten (211, 221) des Läufers (200) umfasst,
wobei der vierte Statorsektor (114) in der weiteren Statorlage (105) entlang der ersten Richtung (12) nebeneinander angeordnete und entlang der zweiten Richtung (14) länglich ausgedehnte weitere Leiterstreifen (126) zur Wechselwirkung mit den weiteren Antriebsmagneten (211, 221) des Läufers (200) umfasst,
wobei die Statoreinheit (100) eine zusätzliche Kontaktstruktur (423) mit einer fünften Kontakteinheitengruppe (445) und mit einer sechsten Kontakteinheitengruppe (446) umfasst,
wobei die Statoreinheit (100) eine weitere zusätzliche Kontaktstruktur (422) mit einer siebten Kontakteinheitengruppe (447) und mit einer achten Kontakteinheitengruppe (448) umfasst,
wobei die fünfte Kontakteinheitengruppe (445) mit den Leiterstreifen (125) des dritten Statorsektors (113) elektrisch leitend verbunden ist und wobei die sechste Kontakteinheitengruppe (446) mit den Leiterstreifen (125) des vierten Statorsektors (114) elektrisch leitend verbunden ist,
wobei die siebte Kontakteinheitengruppe (447) mit den weiteren Leiterstreifen (126) des zweiten Statorsektors (112) elektrisch leitend verbunden ist und wobei die achte Kontakteinheitengruppe (448) mit den weiteren Leiterstreifen (126) des vierten Statorsektors (114) elektrisch leitend verbunden ist,
wobei die zusätzliche Kontaktstruktur (423) an einer weiteren Innenkante (183) des dritten Statorsektors (113) und an einer Innenkante (193) des vierten Statorsektors (114) angeordnet ist,
wobei die weitere Innenkante (183) des dritten Statorsektors (113) und die Innenkante (193) des vierten Statorsektors (114) aneinander anliegend zwischen dem dritten Statorsektor (113) und dem vierten Statorsektor (114) angeordnet sind,
wobei die weitere zusätzliche Kontaktstruktur (422) an einer weiteren Innenkante (174) des zweiten Statorsektors (112) und an einer weiteren Innenkante (194) des vierten Statorsektors (114) angeordnet ist,
wobei die weitere Innenkante (174) des zweiten Statorsektors (112) und die weitere Innenkante (194) des vierten Statorsektors (114) aneinander anliegend zwischen dem zweiten Statorsektor (112) und dem vierten Statorsektor (114) angeordnet sind.

6. Statormodul (10) gemäß Anspruch 5,
wobei die Kontaktstruktur (421) und die zusätzliche Kontaktstruktur (423) auf einer entlang der zweiten Richtung (14) orientierten Mittellinie (118) der Statoreinheit (100) angeordnet sind,
wobei die weitere Kontaktstruktur (424) und die weitere zusätzliche Kontaktstruktur (422) auf einer entlang der ersten Richtung (12) orientierten weiteren Mittellinie (117) der Statoreinheit (100) angeordnet sind.

7. Statormodul (10) gemäß Anspruch 6,
wobei die Statoreinheit (100) einen an einem Kreuzungspunkt (119) der Mittellinie (118) und der weiteren Mittellinie (117) angeordneten Zentrumsbereich (460) aufweist,
wobei die Kontakteinheitengruppen (441, 442, 443, 444, 445, 446, 447, 448) außerhalb des Zentrumsbereichs (460) der Statoreinheit (100) angeordnet sind.

8. Statormodul (10) gemäß einem der vorhergehenden Ansprüche,
wobei ein zentrumsnaher Leiterstreifen (127) der in einer Anschlussstatorlage (109) angeordneten Leiterstreifen (125) des ersten Statorsektors (110) über eine Zuleitung mit einer Kontakteinheit der ersten Kontakteinheitengruppe (441) elektrisch leitend verbunden ist,
wobei die Zuleitung in einer zusätzlichen Statorlage (104, 106) der Statoreinheit (100) angeordnet ist.

9. Statormodul (10) gemäß einem der Ansprüche 4 bis 8 mit einem Leistungsmodul (300),
wobei das Leistungsmodul (300) an einer Unterseite (9) der Statoreinheit (100) angeordnet ist,
wobei das Leistungsmodul (300) kreuzförmig mit einem in der ersten Richtung (12) verlaufenden ersten Balken (301) und mit einem in der zweiten Richtung (14) verlaufenden zweiten Balken (302) ausgebildet ist,
wobei das Leistungsmodul (300) eine Anschlussanordnung (311) umfasst,
wobei die Anschlussanordnung (311) mit der ersten Kontakteinheitengruppe (441) und mit der zweiten Kontakteinheitengruppe (442) der Kontaktstruktur (421) der Statoreinheit (100) elektrisch leitend verbunden ist, wobei die Anschlussanordnung (311) auf dem zweiten Balken (302) des Leistungsmoduls (300) angeordnet ist, wobei das Leistungsmodul (300) eine weitere Anschlussanordnung (314) umfasst,
wobei die weitere Anschlussanordnung (314) mit der dritten Kontakteinheitengruppe (443) und mit der vierten Kontakteinheitengruppe (444) der weiteren Kontaktstruktur (424) der Statoreinheit (100) elektrisch leitend verbunden ist,
wobei die weitere Anschlussanordnung (314) auf dem ersten Balken (301) des Leistungsmoduls (300) angeordnet ist.

10. Statormodul (10) nach Anspruch 9,
wobei die Anschlussanordnung (311) in der ersten Richtung (121) mittig auf dem zweiten Balken (302) des Leistungsmoduls (300) angeordnet ist,
wobei die weitere Anschlussanordnung (314) in der zweiten Richtung (14) mittig auf dem ersten Balken (301) des Leistungsmoduls (300) angeordnet ist.

11. Statormodul (10) nach einem der Ansprüche 9 bis 10,
wobei das Leistungsmodul (300) eine Moduleinheit (320) und eine weitere Moduleinheit (326) umfasst,
wobei die Moduleinheit (320) und die weitere Moduleinheit (326) mechanisch getrennt voneinander ausgebildet sind,
wobei der erste Balken (301) des Leistungsmoduls (300) die weitere Moduleinheit (326) umfasst,
wobei die weitere Moduleinheit (326) die weitere Anschlussanordnung (314) umfasst,
wobei der zweite Balken (302) des Leistungsmoduls (300) die Moduleinheit (320) umfasst,
wobei die Moduleinheit (320) die Anschlussanordnung (311) umfasst.

12. Statormodul (10) nach Anspruch 11,
wobei eine Leiteranordnung der Moduleinheit (320) und eine Leiteranordnung der weiteren Moduleinheit (326) identisch sind.

## Claims

1. Stator module (10) comprising a stator unit (100) for driving a rotor (200) of an electrical planar drive system (1),
wherein the stator unit (100) comprises a first stator sector (110) and a second stator sector (112), wherein the first stator sector (110) comprises, in a stator layer (104, 106) of the stator unit (100), conductor strips (125), which are extended in an elongate manner along a first direction (12) and are arranged next to one another along a second direction (14) which is oriented perpendicularly to the first direction (12), for interacting with drive magnets (211, 221) of the rotor (200),
wherein the second stator sector (112) comprises, in the stator layer (104, 106), conductor strips (125), which are extended in an elongate manner along the first direction (12) and are arranged next to one another along the second direction (14), for interacting with the drive magnets (211, 221) of the rotor (200), wherein the first stator sector (110) is arranged adjacent to the second stator sector (112) in the first direction (12),
wherein the stator unit (100) has a contact structure (421),
wherein the contact structure (421) comprises a first contact unit group (441) and a second contact unit group (442),
wherein the first contact unit group (441) is electrically conductively connected to the conductor strips (125) of the first stator sector (110), and wherein the second contact unit group (442) is electrically conductively connected to the conductor strips (125) of the second stator sector (112),
**characterized in that**
a stator surface (11) extends over the entire top side (8) of the stator unit (100) and forms a surface of the stator unit (100),
wherein the first stator sector (110) and the second stator sector (112) terminate flush with the stator surface (11) on the outer sides and are arranged in a manner adjoining one another in the interior of the stator unit (100),
wherein the contact structure (421) is arranged on an inner edge (163) of the first stator sector (110) and on an inner edge (173) of the second stator sector (112) and is part of a contact arrangement (420),
wherein the inner edge (163) of the first stator sector (110) and the inner edge (173) of the second stator sector (112) are arranged so as to bear against one another between the first stator sector (110) and the second stator sector (112), and the contact arrangement (420) can be contacted from the bottom side (9) of the stator unit (100).

2. Stator module (10) according to Claim 1,
wherein the first contact unit group (441) and the second contact unit group (442) of the contact structure (421) are arranged next to one another in a row along the second direction (14).

3. Stator module (10) according to either of the preceding claims,
wherein the contact structure (421) is arranged on a center line (118) of the stator unit (100), which center line runs between the first stator sector (110) and the second stator sector (112) along the second direction (14) .

4. Stator module (10) according to one of the preceding claims,
wherein the stator unit (100) comprises a third stator sector (113),
wherein the third stator sector (113) is arranged adjacent to the first stator sector (110) in the second direction (14),
wherein the third stator sector (113) comprises, in the stator layer (104, 106), conductor strips (125), which are arranged next to one another along the second direction (14) and are extended in an elongate manner along the first direction (12), for interacting with the drive magnets (211, 221) of the rotor (200),
wherein the first stator sector (110), the second stator sector (112) and the third stator sector (113) comprise, in a further stator layer (105), further conductor strips (126), which are arranged next to one another along the first direction (12) and are extended in an elongate manner along the second direction (14), for interacting with further drive magnets (211, 221) of the rotor (200),
wherein the further stator layer (105) is arranged below the stator layer (104, 106) in a third direction (15) which is oriented perpendicularly to the first direction (12) and to the second direction (14),
wherein the stator unit (100) comprises a further contact structure (424) with a third contact unit group (443) and with a fourth contact unit group (444),
wherein the third contact unit group (443) is electrically conductively connected to the further conductor strips (126) of the first stator sector (110), and wherein the fourth contact unit group (444) is electrically conductively connected to the further conductor strips (126) of the third stator sector (113),
wherein the further contact structure (424) is arranged on a further inner edge (164) of the first stator sector (110) and on an inner edge (184) of the third stator sector (113),
wherein the further inner edge (164) of the first stator sector (110) and the inner edge (184) of the third stator sector (113) are arranged so as to bear against one another between the first stator sector (110) and the third stator sector (113).

5. Stator module (10) according to Claim 4, comprising a fourth stator sector (114),
wherein the fourth stator sector (114) is arranged adjacent to the second stator sector (112) in the second direction (14),
wherein the third stator sector (113) is arranged adjacent to the fourth stator sector (114) in the first direction (12),
wherein the fourth stator sector (114) comprises, in the stator layer (104, 106), conductor strips (125), which are arranged next to one another along the second direction (14) and are extended in an elongate manner along the first direction (12), for interacting with the drive magnets (211, 221) of the rotor (200), wherein the fourth stator sector (114) comprises, in the further stator layer (105), further conductor strips (126), which are arranged next to one another along the first direction (12) and are extended in an elongate manner along the second direction (14), for interacting with the further drive magnets (211, 221) of the rotor (200),
wherein the stator unit (100) comprises an additional contact structure (423) with a fifth contact unit group (445) and with a sixth contact unit group (446), wherein the stator unit (100) comprises a further additional contact structure (422) with a seventh contact unit group (447) and with an eighth contact unit group (448),
wherein the fifth contact unit group (445) is electrically conductively connected to the conductor strips (125) of the third stator sector (113), and wherein the sixth contact unit group (446) is electrically conductively connected to the conductor strips (125) of the fourth stator sector (114), wherein the seventh contact unit group (447) is electrically conductively connected to the further conductor strips (126) of the second stator sector (112), and wherein the eighth contact unit group (448) is electrically conductively connected to the further conductor strips (126) of the fourth stator sector (114),
wherein the additional contact structure (423) is arranged on a further inner edge (183) of the third stator sector (113) and on an inner edge (193) of the fourth stator sector (114),
wherein the further inner edge (183) of the third stator sector (113) and the inner edge (193) of the fourth stator sector (114) are arranged so as to bear against one another between the third stator sector (113) and the fourth stator sector (114),
wherein the further additional contact structure (422) is arranged on a further inner edge (174) of the second stator sector (112) and on a further inner edge (194) of the fourth stator sector (114),
wherein the further inner edge (174) of the second stator sector (112) and the further inner edge (194) of the fourth stator sector (114) are arranged so as to bear against one another between the second stator sector (112) and the fourth stator sector (114).

6. Stator module (10) according to Claim 5,
wherein the contact structure (421) and the additional contact structure (423) are arranged on a center line (118) of the stator unit (100), which center line is oriented along the second direction (14),
wherein the further contact structure (424) and the further additional contact structure (422) are arranged on a further center line (117) of the stator unit (100), which further center line is oriented along the first direction (12).

7. Stator module (10) according to Claim 6,
wherein the stator unit (100) has a center region (460) which is arranged at an intersection point (119) of the center line (118) and the further center line (117), wherein the contact unit groups (441, 442, 443, 444, 445, 446, 447, 448) are arranged outside the center region (460) of the stator unit (100).

8. Stator module (10) according to one of the preceding claims,
wherein a conductor strip (127), which is close to the center, of the conductor strips (125) of the first stator sector (110) which are arranged in a connection stator layer (109) is electrically conductively connected to a contact unit of the first contact unit group (441) via a feed line,
wherein the feed line is arranged in an additional stator layer (104, 106) of the stator unit (100).

9. Stator module (10) according to one of Claims 4 to 8 comprising a power module (300),
wherein the power module (300) is arranged on a bottom side (9) of the stator unit (100),
wherein the power module (300) is designed in a cruciform manner with a first bar (301) which runs in the first direction (12) and with a second bar (302) which runs in the second direction (14),
wherein the power module (300) comprises a connection arrangement (311),
wherein the connection arrangement (311) is electrically conductively connected to the first contact unit group (441) and to the second contact unit group (442) of the contact structure (421) of the stator unit (100),
wherein the connection arrangement (311) is arranged on the second bar (302) of the power module (300), wherein the power module (300) comprises a further connection arrangement (314),
wherein the further connection arrangement (314) is electrically conductively connected to the third contact unit group (443) and to the fourth contact unit group (444) of the further contact structure (424) of the stator unit (100),
wherein the further connection arrangement (314) is arranged on the first bar (301) of the power module (300) .

10. Stator module (10) according to Claim 9,
wherein the connection arrangement (311) is arranged centrally on the second bar (302) of the power module (300) in the first direction (121),
wherein the further connection arrangement (314) is arranged centrally on the first bar (301) of the power module (300) in the second direction (14).

11. Stator module (10) according to either of Claims 9 and 10,
wherein the power module (300) comprises a module unit (320) and a further module unit (326),
wherein the module unit (320) and the further module unit (326) are designed in a manner mechanically separated from one another,
wherein the first bar (301) of the power module (300) comprises the further module unit (326),
wherein the further module unit (326) comprises the further connection arrangement (314),
wherein the second bar (302) of the power module (300) comprises the module unit (320),
wherein the module unit (320) comprises the connection arrangement (311).

12. Stator module (10) according to Claim 11,
wherein a conductor arrangement of the module unit (320) and a conductor arrangement of the further module unit (326) are identical.

## Revendications

1. Module de stator (10) comprenant une unité de stator (100) destinée à entraîner un rotor (200) d'un système d'entraînement électrique planaire (1),
l'unité de stator (100) comprenant un premier secteur de stator (110) et un deuxième secteur de stator (112), le premier secteur de stator (110) comprenant dans une couche de stator (104, 106) de l'unité de stator (100) des bandes conductrices (125) étendues longitudinalement le long d'une première direction (12), disposées les unes à côté des autres le long d'une deuxième direction (14) orientée perpendiculairement à la première direction (12) et destinées à interagir avec des aimants d'entraînement (211, 221) du rotor (200),
le deuxième secteur de stator (112) comprenant dans la couche de stator (104, 106) des bandes conductrices (125) étendues longitudinalement le long d'une première direction (12), disposées les unes à côté des autres suivant la deuxième direction (14) et destinées à interagir avec des aimants d'entraînement (211, 221) du rotor (200),
le premier secteur de stator (110) étant disposé dans la première direction (12) de manière adjacente au deuxième secteur de stator (112),
l'unité de stator (100) comportant une structure de contact (421),
la structure de contact (421) comprenant un premier groupe d'unités de contact (441) et un deuxième groupe d'unités de contact (442),
le premier groupe d'unités de contact (441) étant relié électriquement aux bandes conductrices (125) du premier secteur de stator (110) et le deuxième groupe d'unités de contact (442) étant relié électriquement aux bandes conductrices (125) du deuxième secteur de stator (112), **caractérisé en ce que**
une surface de stator (11) s'étend sur tout le côté supérieur (8) de l'unité de stator (100) et forme une surface de l'unité de stator (100),
le premier secteur de stator (110) et le deuxième secteur de stator (112) se terminant à l'extérieur à fleur de la surface de stator (11) et étant disposés de manière adjacente l'un à l'autre à l'intérieur de l'unité de stator (100),
la structure de contact (421) étant disposée sur un bord intérieur (163) du premier secteur de stator (110) et sur un bord intérieur (173) du deuxième secteur de stator (112) et faisant partie d'un ensemble de contacts (420),
le bord intérieur (163) du premier secteur de stator (110) et le bord intérieur (173) du deuxième secteur de stator (112) étant disposés en appui l'un sur l'autre entre le premier secteur de stator (110) et le deuxième secteur de stator (112) et l'ensemble de contacts (420) pouvant être contacté depuis le côté inférieur (9) de l'unité de stator (100).

2. Module de stator (10) selon la revendication 1,
le premier groupe d'unités de contact (441) et le deuxième groupe d'unités de contact (442) de la structure de contact (421) étant disposés en une rangée l'un à côté de l'autre suivant la deuxième direction (14) .

3. Module de stator (10) selon l'une des revendications précédentes,
la structure de contact (421) étant disposée sur une ligne médiane (118) de l'unité de stator (100) qui s'étend suivant la deuxième direction (14) entre le premier secteur de stator (110) et le deuxième secteur de stator (112).

4. Module de stator (10) selon l'une des revendications précédentes,
l'unité de stator (100) comprenant un troisième secteur de stator (113),
le troisième secteur de stator (113) étant disposé dans la deuxième direction (14) de manière adjacente au premier secteur de stator (110),
le troisième secteur de stator (113) comprenant dans la couche de stator (104, 106) des bandes conductrices (125) disposées les unes à côté des autres suivant la deuxième direction (14), étendues longitudinalement suivant la première direction (12) et destinées à interagir avec les aimants d'entraînement (211, 221) du rotor (200),
le premier secteur de stator (110), le deuxième secteur de stator (112) et le troisième secteur de stator (113) comprenant dans une autre couche de stator (105) d'autres bandes conductrices (126) disposées les unes à côté des autres suivant la première direction (12), et étendues longitudinalement suivant la deuxième direction (14) et destinées à interagir avec d'autres aimants d'entraînement (211, 221) du rotor (200),
l'autre couche de stator (105) étant disposée sous la couche de stator (104, 106) dans une troisième direction (15) orientée perpendiculairement à la première direction (12) et à la deuxième direction (14),
l'unité de stator (100) comprenant une autre structure de contact (424) pourvue d'un troisième groupe d'unités de contact (443) et d'un quatrième groupe d'unités de contact (444),
le troisième groupe d'unités de contact (443) étant relié électriquement aux autres bandes conductrices (126) du premier secteur de stator (110) et le quatrième groupe d'unités de contact (444) étant relié électriquement aux autres bandes conductrices (126) du troisième secteur de stator (113),
l'autre structure de contact (424) étant disposée sur un autre bord intérieur (164) du premier secteur de stator (110) et sur un bord intérieur (184) du troisième secteur de stator (113),
l'autre bord intérieur (164) du premier secteur de stator (110) et le bord intérieur (184) du troisième secteur de stator (113) étant disposés en appui l'un sur l'autre entre le premier secteur de stator (110) et le troisième secteur de stator (113).

5. Module de stator (10) selon la revendication 4, comprenant un quatrième secteur de stator (114),
le quatrième secteur de stator (114) étant disposé dans la deuxième direction (14) de manière adjacente au deuxième secteur de stator (112),
le troisième secteur de stator (113) étant disposé dans la première direction (12) de manière adjacente au quatrième secteur de stator (114),
le quatrième secteur de stator (114) comprenant dans la couche de stator (104, 106) des bandes conductrices (125) disposées les unes à côté des autres suivant la deuxième direction (14), étendues longitudinalement suivant la première direction (12) et destinées à interagir avec les aimants d'entraînement (211, 221) du rotor (200),
le quatrième secteur de stator (114) comprenant dans l'autre couche de stator (105) d'autres bandes conductrices (126) disposées les unes à côté des autres suivant la première direction (12), étendues longitudinalement suivant la deuxième direction (14) et destinées à interagir avec les autres aimants d'entraînement (211, 221) du rotor (200),
l'unité de stator (100) comprenant une structure de contact supplémentaire (423) pourvue d'un cinquième groupe d'unités de contact (445) et d'un sixième groupe d'unités de contact (446),
l'unité de stator (100) comprenant une autre structure de contact supplémentaire (422) pourvue d'un septième groupe d'unités de contact (447) et d'un huitième groupe d'unités de contact (448),
le cinquième groupe d'unités de contact (445) étant relié électriquement aux bandes conductrices (125) du troisième secteur de stator (113) et le sixième groupe d'unités de contact (446) étant relié électriquement aux bandes conductrices (125) du quatrième secteur de stator (114),
le septième groupe d'unités de contact (447) étant relié électriquement aux autres bandes conductrices (126) du deuxième secteur de stator (112) et le huitième groupe d'unités de contact (448) étant relié électriquement aux autres bandes conductrices (126) du quatrième secteur de stator (114),
la structure de contact supplémentaire (423) étant disposée sur un autre bord intérieur (183) du troisième secteur de stator (113) et sur un bord intérieur (193) du quatrième secteur de stator (114),
l'autre bord intérieur (183) du troisième secteur de stator (113) et le bord intérieur (193) du quatrième secteur de stator (114) étant disposés en appui l'un sur l'autre entre le troisième secteur de stator (113) et le quatrième secteur de stator (114),
l'autre structure de contact supplémentaire (422) étant disposée sur un autre bord intérieur (174) du deuxième secteur de stator (112) et sur un autre bord intérieur (194) du quatrième secteur de stator (114),
l'autre bord intérieur (174) du deuxième secteur de stator (112) et l'autre bord intérieur (194) du quatrième secteur de stator (114) étant disposés en appui l'un sur l'autre entre le deuxième secteur de stator (112) et le quatrième secteur de stator (114).

6. Module de stator (10) selon la revendication 5,
la structure de contact (421) et la structure de contact supplémentaire (423) étant disposées sur une ligne médiane (118) de l'unité de stator (100) qui est orientée suivant la deuxième direction (14),
l'autre structure de contact (424) et l'autre structure de contact supplémentaire (422) étant disposées sur une autre ligne médiane (117) de l'unité de stator (100) qui est orientée suivant la première direction (12).

7. Module de stator (10) selon la revendication 6,
l'unité de stator (100) comportant une région centrale (460) disposée à un point de croisement (119) de la ligne médiane (118) et de l'autre ligne médiane (117), les groupes d'unités de contact (441, 442, 443, 444, 445, 446, 447, 448) étant disposés à l'extérieur de la région centrale (460) de l'unité de stator (100).

8. Module de stator (10) selon l'une des revendications précédentes,
une bande conductrice (127), proche du centre, des bandes conductrices (125) du premier secteur de stator (110) qui sont disposées dans une couche de stator de connexion (109) étant reliée électriquement, par le biais d'une ligne d'alimentation, à une unité de contact du premier groupe d'unités de contact (441),
la ligne d'alimentation étant disposée dans une couche de stator supplémentaire (104, 106) de l'unité de stator (100).

9. Module de stator (10) selon l'une des revendications 4 à 8 comprenant un module de puissance (300),
le module de puissance (300) étant disposé sur un côté inférieur (9) de l'unité de stator (100),
le module de puissance (300) étant conçu en forme de croix dont une première barre (301) s'étend dans la première direction (12) et dont une deuxième barre (302) s'étend dans la deuxième direction (14),
le module d'alimentation (300) comprenant un ensemble de connexion (311),
l'ensemble de connexion (311) étant relié électriquement au premier groupe d'unités de contact (441) et au deuxième groupe d'unités de contact (442) de la structure de contact (421) de l'unité de stator (100),
l'ensemble de connexion (311) étant disposé sur la deuxième barre (302) du module d'alimentation (300),
le module d'alimentation (300) comprenant un autre ensemble de connexion (314),
l'autre ensemble de connexion (314) étant relié électriquement au troisième groupe d'unités de contact (443) et au quatrième groupe d'unités de contact (444) de l'autre structure de contact (424) de l'unité de stator (100),
l'autre ensemble de connexion (314) étant disposé sur la première barre (301) du module d'alimentation (300).

10. Module de stator (10) selon la revendication 9, l'ensemble de connexion (311) étant disposé dans la première direction (121) au centre sur la deuxième barre (302) du module de puissance (300),
l'autre ensemble de connexion (314) étant disposé dans la deuxième direction (14) au centre sur la première barre (301) du module de puissance (300).

11. Module de stator (10) selon l'une des revendications 9 et 10,
le module de puissance (300) comprenant une unité de module (320) et une autre unité de module (326), l'unité de module (320) et l'autre unité de module (326) étant conçues de manière à être séparées mécaniquement l'une de l'autre,
la première barre (301) du module de puissance (300) comprenant l'autre unité de module (326),
l'autre unité de module (326) comprenant l'autre ensemble de connexion (314),
la deuxième barre (302) du module de puissance (300) comprenant l'unité de module (320),
l'unité de module (320) comprenant l'ensemble de connexion (311).

12. Module de stator (10) selon la revendication 11,
un ensemble de conducteurs de l'unité de module (320) et un ensemble de conducteurs de l'autre unité de module (326) étant identiques.
